# EUROPEAN PATENT SPECIFICATION

(11) **EP 3 613 616 B1**
(45) Date of publication and mention of the grant of the patent: **27.07.2022**
(21) Application number: 19176242.6
(22) Date of filing: 23.05.2019
(51) Int. Cl.: B60D 1/06, B60R 9/06

(54) **LOAD CARRIER COUPLING**
LASTTRÄGERKUPPLUNG
COUPLAGE DE SUPPORT DE CHARGE

(30) Priority: 23.05.2018 EP 18173745
(43) Date of publication of application: 26.02.2020
(73) Proprietor: Thule Sweden AB, 335 04 Hillerstorp (SE)
(72) Inventor: LINDELL, Morgan, 33135 Värnamo (SE); FERMAN, Magnus, 33154 Värnamo (SE); SVENSSON, Thomas, 33196 Värnamo (SE); KRONBORG, Niklas, 22649 Lund (SE); JÖNSSON, Tobias, 33132 Värnamo (SE); ADLER, Jan, 568 31 Skillingaryd (SE); STARK, Urban, 56731 Vaggaryd (SE); ANDERSSON, Emil, 55594 Jönköping (SE); MAURITZSON, Patrik, 335 73 Hillerstorp (SE)
(74) Representative: Novagraaf Group

(56) References cited:
- EP-A1- 2 987 662
- EP-A2- 2 759 421
- DE-A1-102014 002 794
- US-A1- 2015 375 585
- US-B2- 9 975 387

## Description

### FIELD OF THE INVENTION

The present invention relates to load carrier couplings.

### BACKGROUND

Load carrier couplings of the type mountable to the trailer coupling of a vehicle are known in the art. Load carriers with such load carrier couplings have become increasingly popular. US 2015/0375585 A1 discloses a trailer coupling and load carrier arrangement for a trailer coupling. A main task in the development of such load carrier couplings is to provide a cost efficient and secure coupling for load carriers.

### SUMMARY

It is the object of the invention to provide an enhanced load carrier coupling.

The object is solved by a load carrier coupling according to claim 1. Advantageous further formations are subject of the dependent claims.

According to a first comparative example not covered by the claimed invention, a load carrier coupling for mounting a load carrier on a trailer coupling of a vehicle is disclosed. The trailer coupling of the vehicle can comprise a neck, a coupling body supported by the neck and at least one support protrusion. The coupling body can be a ball head. The support protrusion can be a solid of revolution. For example, the support protrusion can be a cone, a truncated cone, a cylinder, a hemispherical body, a paraboloid of revolution or a hyperboloid of revolution. Furthermore, the support protrusion can be an oblique cone, an oblique cylinder or an oblique truncated cone. The support protrusion can be a prism, for example a right prism or an oblique prism. Furthermore, the support protrusion can be a truncated prism. The prism can comprise a polygonal base which may be convex, concave, equilateral or cyclic. The support protrusion can comprise a lateral outer surface which forms a supporting surface for an element to be supported thereon. In the context of the present disclosure, lateral outer surface or lateral surface refers to a surface which extends along a main extension direction of the support protrusion. The main extension direction can be the axis of revolution in case the support protrusion comprises the shape of a solid of revolution. The main extension direction can also be a longitudinal axis of the support protrusion. The longitudinal axis of the support protrusion can be any axis which is not parallel with respect to an extension direction of the neck of the trailer coupling. The extension direction of the trailer coupling extends in longitudinal direction of a vehicle to which the trailer coupling is mounted.

The load carrier coupling comprises a housing. The housing can be configured to accommodate at least a portion of the coupling body. Furthermore, the housing can be configured to support further elements of the load carrier coupling. The housing can also be a supporting element to which further elements of the load carrier are coupled. Such elements can be frame portions of the load carrier forming a supporting basis of the load carrier. The load carrier can be a bike carrier. The load carrier can also be a transport platform onto which goods to be transported can be fixed. The housing can be made of a rigid material which is able to withstand high forces. For example, the housing can be made of steel.

The load carrier coupling can further comprise a receiving portion which is configured to at least partially receive the coupling body. In the context of the present disclosure, configured to at least partially receive means that the receiving portion comprises a shape which is able to at least partially surround the coupling body. For that, the receiving portion can comprise a recess or a bowl-like geometry. For example, the receiving portion can be designed to be able to accommodate a spherical segment of a ball head.

The load carrier coupling can further comprise a supporting portion which is configured to contact an upper portion of the at least one support protrusion when the load carrier coupling is inserted on the trailer coupling. Accordingly, the load carrier coupling can be supported on the support protrusion such that a supporting force acting in vertical direction is born by the support protrusion. For example, the supporting portion can be configured to contact the above-described lateral outer surface or lateral surface of the support protrusion. In addition or alternatively, the supporting portion can be configured to contact a free end of the support protrusion, for example an end surface extending cross to the main extension direction of the support protrusion. For example, in case the support protrusion is a cylindrical element or a truncated cone, the free end surface can extend perpendicular to the axis of revolution.

The receiving portion can be arranged in the housing pivotably movable between an engaging state in which the receiving member contacts an inserted coupling body and an open state which is taken by the receiving member when no coupling body is inserted. For example, the receiving portion can be directly pivotably supported on a portion of the housing. For example, the housing can comprise openings in which a pivot portion of the receiving portion is pivotably held. Preferably, a pivot axis about which the receiving portion is pivotably movable is arranged substantially perpendicular to a symmetry plane of the receiving portion or perpendicular to a symmetry plane of a surface of the recess.

In the context of the present disclosure, the engaging state is to be understood as a state in which the receiving member contacts an inserted coupling body from below. In other words, in the engaging state, the receiving member contacts a lower portion of an inserted coupling body. In the engaging state, the receiving member applies an urging force on the lower portion of the inserted coupling body. This urging force urges the inserted coupling body in a vertically upward direction. In the context of the present disclosure, an open state is a state which is taken by the receiving member when no coupling body is inserted. Accordingly, the receiving portion is able to move into the open state when no coupling body is inserted. In order to assist the receiving member in moving into the open state, the receiving member can be spring biased towards the open state. In the open state, a portion of the receiving member which contacts an inserted coupling body from below in the engaging state is moved to a position in which it is not able to contact the coupling body from below and in particular cannot prevent the coupling body from being pulled out of the housing.

The load carrier coupling can be configured such that it is lockable on the trailer coupling by an interaction of the receiving portion contacting the lower portion of the coupling body in the engaging state and the supporting portion contacting said upper portion of the at least one support protrusion. Accordingly, the load carrier coupling is lockable on the trailer coupling by exerting a pushing force on a lower portion of the coupling body which leads to a state in which the supporting portion is actively pressed on the support protrusion.

According to a possible configuration of the first comparative example, a movement of the receiving portion from the open state to the engaging state is at least partially caused by a pushing force applied on the receiving portion by the coupling body upon inserting the load carrier coupling on the trailer coupling. In the context of the present disclosure, at least partially caused means that at least a part of the movement of the receiving portion is caused by the pushing force applied on the receiving force by the coupling body. When the load carrier coupling is inserted on the trailer coupling, the receiving portion can get in contact with a portion of the coupling body and a relative movement of the load carrier coupling with respect to the trailer coupling leads to a movement of the receiving portion. For example, the receiving portion can be configured such that a movement from the open state to the engaging state is almost fully caused by the coupling body exerting a pushing force on the receiving portion. However, it is to be understood that at least partially caused also includes a case in which the receiving portion is only initially moved due to a pushing force applied on the receiving portion by the coupling portion in order to move the receiving portion from the open state. Thus, the movement can also include a movement of the receiving portion which is caused by a means or an element different to the coupling body.

For example, a mechanism can be provided which actively moves the receiving portion after the receiving portion was moved by the coupling body to a certain extent. The mechanism can be configured such that upon moving the receiving portion from the open state to the engaging state, the receiving portion passes an intermediate position. At the intermediate position, the mechanism changes the behaviour of the receiving portion such that a movement of the receiving portion between this intermediate position and the engaging state is now assisted. Thus, as soon as the receiving portion has passed the intermediate position, the receiving portion is not furthermore moved by a pushing force applied by the coupling body but is moved by a different force so that from the intermediate position on the receiving portion applies a pushing force on a lower portion of the coupling body. In other words, the receiving portion has a self-actuating capability. With such a configuration, it is possible to provide a load carrier coupling in which the load carrier coupling is automatically locked on the trailer coupling as soon as the load carrier coupling is inserted on the trailer coupling. This allows a configuration in which a user does not need to actively lock the load carrier coupling to the trailer coupling. In this way, the usability of the load carrier coupling is increased.

According to a further configuration of the first comparative exampleof the present disclosure, the load carrier coupling further comprises a knee-joint mechanism operatively coupled to the receiving portion and adapted for moving the receiving portion. According to this configuration, a movement of the receiving portion from the open state to the engaging state is at least partially caused by an operation of the knee-joint mechanism. The use of a knee-joint mechanism has the benefit, that a low force input by a user can be transferred into a higher force application on the receiving portion so that it is possible to increase a final tightening force acting on the coupling body. Furthermore, the knee-joint mechanism can comprise a self-locking capability. More precisely, the knee-joint mechanism can be configured to be brought into an over-centre position. In such a position, a movement of parts of the knee-joint mechanism is prevented and this state can only be released by an interaction of a user moving parts of the knee-joint mechanism. With such a configuration, the safety of such a load carrier coupling is increased.

According to a further configuration of the first comparative example, the supporting portion and the receiving portion can be configured such that when the receiving portion is in the engaging state, the supporting portion is pushed on the support protrusion. Preferably, the supporting portion is pushed on an upper portion of the support protrusion. Accordingly, with such a configuration, the receiving portion can be configured to apply a force on the coupling portion that generates a movement of the load carrier coupling with respect to the trailer coupling in such a manner that the supporting portion is actively pushed on the support protrusion. For example, the support protrusion can be arranged vertically below the coupling portion of the trailer coupling. Thus, the supporting portion and the receiving portion can be correspondingly arranged on the load carrier coupling such that in a mounted condition of the load carrier coupling the supporting portion is in contact with the support protrusion and the receiving portion is in contact with the coupling body. The receiving portion can be configured to exert a vertically upward force on the coupling body that urges the load carrier coupling in a vertically downward direction. In this way, the supporting portion is pressed on the support protrusion from above. With such a configuration, a secure connection between the load carrier coupling and the trailer coupling is possible.

According to a further configuration of the first comparative example, the housing can comprise a supporting section for supporting a portion of the coupling body. Preferably, at least the receiving portion can be configured such that it supports the coupling body from below when the receiving portion is in the engaging state. Accordingly, the load carrier coupling can be configured such that only a lower portion of the coupling body is supported when the load carrier coupling is fixedly mounted on the trailer coupling. The supporting section of the housing and the portion of the receiving portion contacting the coupling body can be arranged on opposite sides of the coupling body with respect to a neck portion of the trailer coupling on which the coupling body is coupled to the neck. The supporting section can be integrally formed with the housing or can be a separate element which is fixedly mounted to the housing. The supporting section and the receiving portion define an accommodating space in which the coupling body is arranged when the load carrier coupling is fixedly mounted on the trailer coupling. When the receiving portion is in the engaging state, a distance between the receiving portion and the supporting section is such that the coupling body cannot be passed between the supporting section and the receiving portion.

According to a further configuration of the first comparative example, the supporting section comprises a protrusion for supporting the lower portion of the coupling body wherein the protrusion protrudes towards the engaging member and comprises a support surface configured to support the lower portion of the coupling body. The protrusion can be integrally formed in the housing. The support surface can comprise any suitable shape which allows a sufficient support of the lower portion of the coupling body. For example, the support surface can comprise a support surface which is mating to the outer contour of the lower portion of the coupling body. For example, when the coupling body is a ball head with a substantially spherical lower portion, the support surface can be adapted to such a spherical surface. More precisely, the support surface can be configured to support a spherical zone of the ball head. For that, the support surface can comprise a bowl-like shape. Instead of a protrusion, the supporting section can comprise a supporting surface which is defined by substantially parallel straight lines which preferably extend in substantially vertical direction when the load carrier coupling is mounted on the trailer coupling. The supporting section is preferably curved along the coupling portion. The supporting section formed in this way can be configured to contact a middle section of a ball head at which the upper and the lower portion of the ball head meet. Such a supporting section can be configured to get in line contact with the outer surface of the ball head or in surface contact with a coupling body having a flat surface. Preferably, the housing does not comprise a section that allows a diagonal clamping between the receiving member and the supporting section of the housing. Accordingly, the housing is preferably formed such that a movement of the load carrier coupling towards the support protrusions is not blocked by an element of the housing contacting an upper portion of the coupling body, i.e. the ball head. In other words, the housing can be configured such that an upper portion of the coupling body cannot be contacted by the housing.

According to a further preferable configuration of the first comparative example, the load carrier coupling is configured such that the movement of the receiving portion is partially caused automatically as soon as the support protrusion is inserted in said supporting portion beyond a predetermined distance. The predetermined distance can be a distance which corresponds to a movement of the receiving portion effected by a contact of the coupling body up to the before-described intermediate position.

According to a further configuration of the first comparative example according to the present disclosure, the receiving portion is arranged pivotable about a pivot axis. The pivot axis can be substantially perpendicular to an insertion direction of the load carrier coupling on the trailer coupling. The insertion direction of the load carrier coupling on the trailer coupling is preferably a movement in vertical direction or substantially vertical direction. Accordingly, the pivot axis can extend substantially horizontally when the load carrier coupling is mounted on a trailer coupling. For example, the pivot axis can be configured so as to extend in cross direction of the vehicle when the load carrier coupling is mounted on the trailer coupling.

According to a further configuration of the first comparative example, the receiving portion can be pretensioned such that it is urged towards the open state by a predetermined receiving portion pretensioning force. The pretensioning of the receiving portion can be provided by means of a spring. With such a configuration, the receiving portion automatically moves into the open state when the load carrier coupling is dismounted from the trailer coupling.

According to a further configuration of the first comparative example, the receiving portion comprises a recess for accommodating a portion of the coupling body. The recess can be configured to receive a portion of a ball head. For example, the recess can comprise a bowl shape with an inner surface being formed so as to contact the ball head only at spherical zones of the same. Accordingly, the recess can be formed such that in each position or orientation of the receiving portion in which the receiving portion is in contact with a ball head, only a spherical zone of the ball head is contacted. As already described above, the receiving portion can be configured to contact a ball head from below when it is in the engaging state. Accordingly, a spherical zone on the ball head provided in the lower portion of the ball head can be contacted.

According to a further configuration of the first comparative example, the load carrier coupling further comprises a locking member for blocking a movement of the receiving portion. The locking member can be configured self-actuated, preferably by pretensioning or prebiasing the same by means of a spring or any other suitable urging means. Furthermore, the locking member can be configured to move into a locking position on its own as soon as the receiving member is moved to a predetermined position, for example the above-mentioned intermediate position. The locking member can be configured such that a user can operate the same in order to disengage the locking member from the receiving portion.

Preferably, the locking member comprises a first contact portion for contacting a first abutment portion of the receiving portion in the open state and a second contact portion for contacting a second abutment portion of the receiving portion in the engaging state. The contact portion and the abutment portion are preferably configured to get in sliding contact. Furthermore, the locking member can comprise an abutment protrusion which is configured to limit a movement, for example a sliding movement, of the receiving portion along the first contact portion.

According to a further configuration of the first comparative example, the locking member is pivotably movable about a pivot axis. Preferably, the pivot axis about which the locking member is pivotably movable is substantially parallel to the pivot axis about which the receiving portion is pivotably movable as described above in the context of another configuration of the first comparative example. Preferably, the locking member is pretensioned or prebiased by a locking member pretensioning force such that the contact portions are urged towards the receiving portion. The pretensioning of the locking member can be provided by means of a spring.

According to a further configuration of the first comparative example, the locking member preferably comprises a lever having a gripping portion usable for manually moving the locking member against the locking member pretensioning force. In this way, a good operability for a user is achieved.

According to a further configuration of the first comparative example, the supporting portion comprises a recess for accommodating at least a portion of the support protrusion. The recess may be formed in or may be provided on the housing. For example, the recess can be integrally formed in the housing. Different methods of forming the recess in the housing are available including cutting out of the recess in a wall portion of the housing or deforming the housing such that such a recess is created. It is also possible to fixedly arrange a separate element forming such recess on the housing, for example by welding. Preferably, the recess is U-shaped and is provided such that an open side faces downward when the load carrier coupling is mounted on the trailer coupling. Furthermore, the U-shaped recess can be provided on a side wall, for example in such a manner that the side wall of the housing closes one side of the U-shaped element. Preferably, the side wall of the housing on which the recess can be formed, extends substantially perpendicular to the pivot axis of the receiving portion.

According to a further configuration of the first comparative example, the recess can be defined by two substantially parallel side portions and a bottom portion connecting the side portions, wherein the bottom portion comprises a recess which is formed such that an upper portion of the support protrusion is at least partially not in contact with the supporting portion when the load carrier coupling is mounted on the trailer coupling.

With the above-described load carrier coupling according to the first comparative example and the configurations related to the first comparative example it is possible to provide a simple and reliable load carrier coupling which is mountable on a trailer coupling of a vehicle from above. Furthermore, with the configurations as presented above, a solution is provided in which a tightening of the mechanism is possible by the user with an application of a low force or even without the application of any force.

Advantages of the load carrier coupling as described in connection with the first comparative example and the configurations related thereto are a configuration in which no pressure is applied on the top of the coupling body of the trailer coupling. In other words, it is possible to provide a solution in which a fixation of the load carrier coupling according to the first comparative example can be realized in that the load carrier coupling is supported against an upper portion of the support protrusion and against a lower portion of the coupling body, for example the ball head. For stability reasons, the housing can be configured such that it provides abutment surfaces facing end surfaces of the support protrusions as mentioned above. In the concept according to the first comparative example, the moving part of the mechanism which corresponds to the above-mentioned receiving portion contacts the coupling portion, for example a towball, on the lower portion. The housing or the recess provided on the housing is configured to contact the support protrusion on an upper portion thereof. With the above-described solutions, a load carrier coupling with increased initial stability and a self-centering function is achieved. Furthermore, the configuration as described above can be self-locking. In case the above-described receiving portion and the locking member are specifically designed, it is even possible to realize a self-adjustability during use of the load carrier coupling. As described above, the locking member can be configured to apply a force on the receiving portion in order to urge the receiving portion towards the engaging state and lock the same in this position. The contact portions between the receiving portion and the locking member can be configured such that the receiving portion is able to move into the engaging state even if the dimension of the trailer coupling varies.

According to a second comparative example not covered by the claimed invention, a load carrier coupling for mounting a load carrier on a trailer coupling of a vehicle is disclosed. The trailer coupling can be a trailer coupling as described before. The load carrier coupling comprises a housing which is configured to at least partially receive the coupling body of the trailer coupling. The load carrier coupling according to the second comparative example further comprises a supporting portion which is configured to contact the at least one support protrusion. The supporting portion is arranged pivotably movable with respect to the housing about a pivot axis between an engaging state in which the supporting portion contacts an inserted support protrusion and an open state which is taken by the supporting portion when no support protrusion is inserted. The movement of the supporting portion from the open state to the engaging state is at least partially caused by a pushing force applied on the supporting portion by the support protrusion upon inserting the load carrier coupling on the trailer coupling. Accordingly, an engaging state is achieved by a pivoting movement of the supporting portion.

According to a configuration of the second comparative example, the supporting portion comprises a recess. The recess can be a slot and is intended for accommodating the support protrusion.

According to a further configuration, the recess extends in a direction which is skew to the pivot axis.

According to a further configuration of the second comparative example, the recess comprises an inner surface which at least partially extends substantially parallel to the pivot axis. Preferably, at least a portion of the inner surface is U-shaped with a preferably non-circularly curved bottom portion.

According to a further configuration of the second comparative example, the supporting portion comprises a plate extending in a direction substantially perpendicular to the pivot axis of the supporting portion wherein the recess is formed in the plate.

According to a further configuration of the second comparative example, the supporting portion further comprises a protrusion configured to receive the pushing force from the support protrusion. The protrusion can comprise a sliding surface for contacting the support protrusion and can be configured to slide on the support protrusion when the supporting portion is moved between the open state and the engaging state.

According to a further configuration of the second comparative example, the load carrier coupling further comprises an abutment portion for contacting the support protrusion on one side. Preferably, the abutment portion is formed by one of two walls of an insertion recess which can be provided in the housing.

According to a further configuration of the second comparative example, the load carrier coupling further comprises a locking mechanism for releasably locking the supporting portion at least in the engaging state.

According to a further configuration of the second comparative example, the supporting portion comprises a cam surface and the locking mechanism is configured to apply a normal force on the cam surface. The cam surface and the locking mechanism are configured such that the supporting portion is releasably locked in the open state and the engaging state.

According to a further configuration of the second comparative example, the cam surface comprises a first surface area which is formed such that a normal force acting on the same generates a first moment urging the supporting portion towards the open state and a second surface area which is formed such that a normal force acting on the same generates a second moment urging the supporting portion towards the engaging state.

According to a further configuration of the second comparative example, the locking mechanism comprises a force application member which is pushed onto the cam surface by an urging member. Preferably, the urging member is a spring. Preferably, the force application member is provided on a tip end of a lever which is arranged pivotable about a pivot axis which is parallel to the pivot axis of the supporting portion.

According to a further configuration of the second comparative example, the locking mechanism comprises an engaging member for locking a movement of the supporting portion relative to the housing. The engaging member can be a pin. Preferably, the engaging member is pretensioned in engaging direction by means of an urging member. The urging member can be a spring. Preferably, the engaging member is movable in a disengaging direction by an operating member which is operable by a user.

According to a further configuration of the second comparative example, the load carrier coupling further comprises a lever fixedly coupled to the supporting portion and allowing a manual operation of the supporting portion.

According to a further configuration of the second comparative example, the receiving portion is configured to receive an upper portion of the coupling body. The supporting portion can be configured to support a lower portion of the support protrusion.

According to a third comparative example not covered by the claimed invention, a load carrier coupling for mounting a load carrier on a trailer coupling of a vehicle is disclosed. The trailer coupling can be a trailer coupling as described above. The load carrier coupling comprises a receiving portion, a supporting portion and an engaging member. The receiving portion comprises an accommodating section which is configured to accommodate a portion of the coupling body. The supporting portion is configured to contact at least one support protrusion. The engaging member is adapted to engage with a support protrusion and to apply a tightening force on the support protrusion by a movement including a pivoting movement and a translatory movement. With such a construction, it is possible to bring the engaging member into engagement with a support protrusion and to then apply a tightening force on the support protrusion via the engaging member by moving the engaging member translatory.

According to a configuration of the third comparative example, the engaging member is configured to at least partially perform a combined movement in which the pivoting movement and the translatory movement are superimposed. Accordingly, the pivoting movement and the translatory movement can at least partially be performed at the same time.

According to a configuration of the third comparative example, the engaging member is arranged pivotably about a pivot which is translatory movable in a radial direction thereof. Accordingly, the pivoting movement of the engaging member can be performed about the pivot whereas the translator movement can be performed in a radial direction of the pivot. The pivot can be a pivot pin for instance.

According to a further configuration of the third comparative example, the load carrier coupling further comprises a housing having a guiding portion for supporting and guiding the pivot. The guiding portion can be a guiding recess. Furthermore, the guiding portion can be an opening formed in the housing, such as a slot.

According to a further configuration of the third comparative example, the guiding recess is formed so as to guide the pivot on an at least partially curved path. Accordingly, the guiding recess can be guided on a path which is curved in sections or fully curved. On the other hand, it is possible that the path comprises straight sections between curved sections.

According to a further configuration of the third comparative example, the recess is formed in the housing such that it extends substantially vertically when the load carrier coupling is mounted on the trailer coupling. Accordingly, the recess can be formed straight. According to this configuration, when the load carrier coupling is mounted on the trailer coupling, the pivot of the engaging member is movable in vertical direction. The recess and the pivot can be configured such that the width of the recess substantially corresponds to a diameter of the pivot. Thus, the pivot is able to slide within the recess between a lower position and an upper position.

According to a further configuration of the third comparative example, the engaging member comprises a lever. The lever can comprise an engaging portion which is adapted to engage with the support protrusion. The engaging portion can comprise a recess configured to accommodate at least a portion of the support protrusion therein. The recess can comprise a U-shape with an inner wall defining at least two contact areas for supporting the support protrusion.

According to a further configuration of the third comparative example, the engaging member comprises a deformation portion which is formed such that an application of a tensile load bendably deforms the deformation portion. Accordingly, the engaging member can act as a spring.

According to a further configuration of the third comparative example, the deformation portion comprises a curved shape.

According to a further configuration of the third comparative example, the engaging member is a plate. The plate can be cut from a sheet metal.

According to a further configuration of the third comparative example, the load carrier coupling further comprises an operating lever for operating the engaging member. The operating lever can be pivotably movable about a pivot which is parallel to the pivot of the engaging member. Preferably, the operating lever and the engaging member form a self-locking knee joint mechanism.

According to a further configuration of the third comparative example, the engaging member is movable between an engaging state and an opened state. When the load carrier coupling is mounted on a trailer coupling fixed to the rear of a vehicle, the engaging member preferably extends in substantially vertical direction. Extending in substantially vertical direction means that the above-described engaging portion as well as all pivot portions of the engaging member are substantially arranged on a vertical line. Preferably, the engaging member engages the support protrusion such that the same is contacted on its lower vehicle facing side of the support protrusion.

According to a fourth comparative example not covered by the claimed invention, a load carrier coupling for mounting a load carrier on a trailer coupling of a vehicle is provided. The trailer coupling can be configured as described with respect to the previous comparative examples. The load carrier coupling comprises a receiving portion and a supporting portion. The receiving portion comprises an accommodating section which is configured to accommodate a portion of the coupling body therein. The supporting portion comprises an engaging section which is configured to contact at least one support protrusion. According to the third comparative example the receiving portion and the supporting portion are pivotably coupled to each other by means of a pivot such that a distance between the accommodating section and the engaging section can be varied by pivoting the receiving portion or the supporting portion about the pivot. The receiving portion and the supporting portion can be pivoted between an open state in which the distance between the accommodating section and the engaging section is such that the load carrier coupling is insertable on the trailer coupling, and a closed state in which the distance is such that a load carrier coupling inserted on the trailer coupling cannot be removed from the trailer coupling.

According to a configuration of the fourth comparative example, the load carrier coupling is configured such that in a condition in which the load carrier coupling is mounted on a trailer coupling, the pivot is located at a position which is vertically between the coupling body and the support protrusion. According to a further configuration of the fourth comparative example, the receiving portion is configured to contact the coupling body from below. Furthermore, the supporting portion is configured to contact the support protrusion from above.

According to a further configuration of the fourth comparative example, the receiving portion is configured to contact the coupling body from above and the supporting portion is configured to contact the support protrusion from below.

According to a further configuration of the fourth comparative example, the load carrier coupling further comprises an urging member for applying an urging force on the supporting portion and the receiving portion. The urging member is arranged to urge the supporting portion and the receiving portion towards the open state or can be arranged to urge the supporting portion and the receiving portion towards the closed state.

According to a further configuration of the fourth comparative example, the load carrier coupling further comprises a locking mechanism for releasably locking a movement between the receiving portion and the supporting portion such that a movement towards the open state is blocked.

According to a further configuration of the fourth comparative example, the locking mechanism comprises a tightening member with an abutment portion wherein the position of the abutment portion is variable by rotation of the tightening member about its own longitudinal axis.

According to a further configuration of the fourth comparative example, the locking mechanism comprises a locking lever arranged pivotably on the receiving portion between a locking position in which a free end of the locking lever contacts an abutment portion of the supporting portion and a released position in which the free end is pivoted away from the abutment portion.

According to a further configuration of the fourth comparative example, the locking mechanism comprises a cam mechanism for varying and locking a distance between the receiving portion and the supporting portion. The cam mechanism preferably comprises an operating lever having a cam portion wherein the cam portion comprises a cam surface which is operatively coupled to the receiving portion or the supporting portion and wherein the operating lever is further hingedly coupled to a link which is operatively coupled to the other one of the supporting portion or the receiving portion such that a movement of the lever moves the receiving portion and the supporting portion towards and away from each other.

According to a fifth comparative example not covered by the claimed invention, a load carrier coupling for mounting a load carrier on a trailer coupling of a vehicle is provided. The trailer coupling can be configured like the trailer couplings as described before with respect to the other comparative examples. The load carrier coupling according to the fifth comparative example comprises a receiving portion, a supporting portion and a force transfer member. The receiving portion comprises an accommodating section which is configured to accommodate at least a portion of the coupling body.

The supporting portion is configured to engage with the support protrusion of the trailer coupling. The force transfer member is adapted to vary a distance between the receiving portion and the supporting portion by translatory moving at least one of the receiving portion and the supporting portion in a first direction.

The force transfer member can be arranged movable in a second direction which is different from the first direction. The force transfer member can be movable between a disengaging position and an engaging position. In the disengaging position, the distance between the receiving portion and the supporting portion is larger than in the engaging position. The force transfer member can be part of a linkage mechanism. For example, the force transfer member can be a link of the linkage mechanism, which link can be hingedly coupled to the receiving portion. The linkage mechanism can be a knee joint mechanism. The linkage mechanism can comprise an operating lever which is hingedly coupled to the housing by means of a first pivot and to a link by means of a second pivot which is offset from the first pivot by a predetermined distance. The link is pivotably coupled to the receiving portion by means of a third link. The first pivot is coupled to the housing at a portion which is located under the third pivot. Alternatively, the first pivot can be arranged above the third pivot. The pivot axes of the pivots are preferably parallel with respect to each other.

According to a configuration of the fifth comparative example, the force transfer member is arranged translatory movable in the second direction.

According to a configuration of the fifth comparative example, the second direction is substantially perpendicular to the first direction. Accordingly, the force transfer member can be movable perpendicular to the movement direction of the receiving portion or the supporting portion.

According to a further configuration of the fifth comparative example, the force transfer member can be a wedge-like member having a supporting surface and a force application surface arranged at an angle with respect to the supporting surface. The force application surface can be in contact with a force receiving surface of the receiving portion.

According to a further configuration of the fifth comparative example, the force application surface and the force receiving surface are provided such that a force acting on the receiving portion in the first direction cannot effect a movement of the force transfer member in the second direction.

According to a further configuration of the fifth comparative example, the supporting surface is arranged substantially perpendicular to the first direction. The force application surface can be arranged with respect to the supporting surface at an angle which is preferably smaller than 45 degrees.

According to a further configuration of the fifth comparative example, the force transfer member can be pretensioned in the engaging direction by an urging member. The urging member can be a spring. According to a further configuration of the fifth comparative example, the load carrier coupling further comprises a housing. Preferably, the supporting portion is integrally formed in the housing. Preferably, the receiving member and the force transfer member are slideably supported on the housing.

According to a further configuration of the fifth comparative example, the load carrier coupling further comprises a lever which is operatively coupled to the force transfer member and configured to at least move the force transfer member to the disengaging position upon operation of the same. The lever is preferably pivotably coupled to the force transfer member at a first end. Furthermore, the lever is preferably pivotably mounted on the housing. Preferably, the lever comprises a handle on a second end thereof. The handle can be configured to be grasped by a user for operating the lever. The first end of the lever can be coupled to a pivot pin. The pivot pin can be slideably accommodated in a guiding recess formed in the force transfer member. The guiding recess can be a slot. The guiding recess can be straight and can extend in a direction which is substantially perpendicular to the second direction.

According to a sixth comparative example not covered by the claimed invention, a load carrier coupling for mounting a load carrier on a trailer coupling of a vehicle is provided. The trailer coupling can be configured identical to the trailer couplings as described before with respect to the other comparative examples. The load carrier coupling according to the sixth comparative example comprises a contact portion and a supporting mechanism. The contact portion is configured to contact at least a portion of the coupling body. The supporting mechanism comprises a blocking portion which is operatively coupled with the contact portion and movable between a blocking position and a release position. In the blocking position, the blocking portion is positioned with respect to the support protrusion such that a movement of the contact portion with respect to the coupling body is substantially blocked in at least one movement direction. In the release position, the blocking portion is positioned with respect to the support protrusion such that a movement of a contact portion with respect to the coupling body is not blocked by the blocking portion. The blocking portion is arranged so as to be movable into the blocking position by a movement in an extension direction of the support protrusion in which the support protrusion extends away from the neck, and at least partially along a lateral surface of the support protrusion.

According to a further configuration of the sixth comparative example, the load carrier coupling comprises two blocking portions arranged on opposite sides of the contact portion and arranged movable towards and away from each other.

According to a further configuration of the sixth comparative example, each blocking portion is pivotably movable about a pivot which extends perpendicular to and is offset from the extension direction of the support protrusion.

According to a further configuration of the sixth comparative example, each blocking portion comprises an abutment surface facing the lateral surface when the support protrusion is positioned in the blocking position.

According to a further configuration of the sixth comparative example, each blocking portion comprises a recess adapted to accommodate at least a portion of the support protrusion. The recess can be preferably formed as a through hole extending in the blocking portion in a movement direction of the blocking portion. The recess is preferably formed slot like with an extension direction perpendicular to and offset from the pivot axis defined by the pivot which extends perpendicular to and is offset from the extension direction of the support protrusion.

According to a further configuration of the sixth comparative example, each blocking portion is formed from a metal sheet by cutting and bending.

According to a further configuration of the sixth comparative example, each blocking portion comprises a contact surface for contacting a neck support surface. The neck support surface is preferably a ring-like surface provided at a route portion of the support protrusion.

According to a further configuration of the sixth comparative example, the load carrier further comprises a support structure. The support structure preferably comprises a portion of a frame of a load carrier. The frame of the load carrier can comprise a hollow metal profile. Preferably, the contact portion and each blocking portion are provided on the support structure. Preferably, the contact portion limits an upper end of an accommodating space for accommodating the coupling member. Preferably, the contact portion is integrally formed with the support structure. Alternatively, the contact portion can be formed as an adjustable member allowing to adjust a position of the contact portion relative to the support structure. For example, the adjustable member can be a threaded element which is threadedly engaged with a threaded opening provided in an upper portion of the support structure. In this way, the adjustable member is adjustable by rotation of the same owing to the threaded engagement between the adjustable member and the support structure.

According to a further configuration of the sixth comparative example, each blocking portion is operatively coupled to a knee lever mechanism for moving the blocking portion between the blocking position and the release position. The knee lever mechanism is preferably configured to be brought in an over-center position in which a movement of the blocking portion is substantially blocked. Preferably, the knee lever mechanism comprises an operating handle for operating the knee lever mechanism.

According to a further configuration, the supporting mechanism is configured to apply a tightening force on the blocking portion when the blocking portion is in contact with the support protrusion. Preferably, the supporting mechanism is configured to allow a rotation of the blocking portion beyond a position of first contact with the support protrusion.

According to an aspect covered by the claimed invention, a load carrier coupling for mounting a load carrier on a trailer coupling of a vehicle is provided. A trailer coupling can be configured like the trailer couplings as described before with respect to the comparative examples.

The load carrier coupling comprises a receiving portion configured to at least partially receive the coupling body upon inserting the load carrier coupling on the trailer coupling in an insertion direction. Thus, the receiving portion is configured to at least partially receive the coupling body or to fully receive the coupling body upon inserting the load carrier coupling on the trailer coupling. For that, the receiving portion can define an accommodating space in which the coupling body is at least partially receivable. The receiving portion can be configured to provide a closed accommodating space or an open accommodating space. If a closed accommodating space is provided by the receiving portion, the receiving portion can be at least partially formed as a housing surrounding the coupling body when the load carrier coupling is inserted on the trailer coupling. The receiving portion can be configured to correspond to or to follow an outer contour of the coupling body. In case the coupling body is provided as a ball head, the receiving portion can comprise an inner wall which follows an outer contour of the ball head. For example, the receiving portion can comprise a tubular or hollow cylindrical shape. In particular, the receiving portion can comprise a tubular or hollow cylindrical portion in which the inner wall follows a curved, preferably circular, path having a radius which is slightly larger than the radius of the ball head. However, other configurations are possible depending on the shape of the coupling body. The coupling body may be embodied by a cylindrical body or may be embodied by a cylindrical body having a polygonal base. The receiving portion may be a right hollow cylinder.

The insertion direction is the direction in which the load carrier coupling is inserted on the trailer coupling, in particular such that the coupling body is received in the receiving portion. The insertion direction may be a substantially vertical direction which means that the load carrier coupling is inserted on a trailer coupling mounted on a vehicle vertically from above. Accordingly, the insertion direction may coincide with a vertical direction.

The load carrier coupling further comprises a supporting portion configured to support the at least one support protrusion upon inserting the load carrier coupling on the trailer coupling in the insertion direction. Thus, the supporting portion may be provided for establishing a contact with the support protrusion. The supporting portion may define a supporting surface to contact an outer peripheral surface of the support protrusion. For that, the supporting portion can be configured to provide a surface which at least partially follows an outer contour of the outer surface of the support protrusion. In this way, it is possible to provide a surface contact between the supporting portion and the support protrusion. The supporting portion can be configured to support the load carrier coupling on the support protrusion such that the support protrusion receives a load in the vertical direction. Accordingly, the supporting portion can be configured such that a load acting in vertical direction is supported by the support protrusion only. If all of the load in the vertical direction is supported by the support protrusion, the receiving portion may be configured without an abutment portion contacting an upper surface of the coupling body. In other words, the receiving portion can be configured to not apply any force in vertical direction on the coupling body.

The supporting portion may also be configured to receive the at least one support protrusion. In particular, the supporting portion may be configured to receive the at least one support protrusion between two walls. For that, the supporting portion can be configured as a hollow cylindrical body comprising a recess for receiving the at least one support protrusion. In a simple configuration, the recess can be configured to extend in a direction which is substantially parallel to the insertion direction. Accordingly, the at least one support protrusion can be received in the supporting portion when the load carrier coupling is inserted on the trailer coupling from above in vertical downward direction. The recess may be configured as a straight recess having a substantially constant width preferably substantially corresponding to an outer dimension of the support protrusion so that the support protrusion may be received in the recess without substantial play. The recess may be U-shaped.

The receiving portion and the supporting portion are integrally formed in a single housing. The housing is of a hollow cylindrical shape. The supporting portion can comprise a recess extending from a lower end of the supporting portion in the direction of the receiving portion. More precisely, the supporting portion may extend in a direction substantially parallel to the insertion direction. Accordingly, when such a load carrier coupling is inserted on the trailer coupling, the coupling body, preferably a ball head, is received in the receiving portion and at least one support protrusion, preferably two support protrusions, is/are received in the supporting portion upon lowering the load carrier coupling on the trailer coupling from above.

The receiving portion may be configured to not apply any force in vertical direction on the coupling body. The supporting portion may configured such that forces for supporting the load acting in the vertical direction are applied on the support protrusion or support protrusions only. It has been found that a load carrier may be securely coupled to a trailer coupling using such a simple configuration of a load carrier coupling. In particular, in a modification not covered by the claims, it has been found that no specific fixation mechanism is necessary for fixing the load carrier coupling on the trailer coupling. In such a simple configuration, the own weight of the load carrier coupling and further elements of a load carrier are enough for preventing that the load carrier coupling and/or a load carrier associated therewith comes off from the trailer coupling of a vehicle during use of the vehicle. In particular, it has been found that during use of a load carrier on a trailer coupling with a load carrier coupling as described before, the forces applied on the trailer coupling by the load carrier coupling tend to generate a moment urging the load carrier coupling to rotate about a horizontal axis generating a friction fit between support protrusion and supporting portion and between the coupling body and the receiving portion.

In order to further secure the load carrier coupling on the trailer coupling, a fixation mechanism is provided for locking the load carrier coupling on the trailer coupling by preventing or at least limiting a movement of the load carrier coupling in a detachment direction opposite to the insertion direction. The fixation mechanism can be configured to provide a locking of the load carrier coupling on the trailer coupling on its own. For example, specific elements of the fixation mechanism can be brought into a position not allowing to detach the load carrier coupling from the trailer coupling. Such means are configured to clamp the the neck. On the other hand, the fixation mechanism can comprise a means for assisting or contributing to the locking of the load carrier coupling on the trailer coupling.

The fixation mechanism is a mechanism that engages behind the coupling body when the load carrier coupling is inserted on the trailer coupling. For example, in case the coupling body is a ball head, the fixation mechanism can comprise an element which gets in contact with a portion of the neck of the trailer coupling carrying the ball head. It is even be enough if the fixation mechanism is configured to reduce the dimension of the load carrier coupling at a portion below an inserted ball head such that the ball head may not pass the fixation mechanism thereby preventing a movement of a load carrier coupling in the detachment direction. The fixation mechanism can be configured to contribute to or to generate a positive locking between the load carrier coupling and the trailer coupling at least in the detachment direction. Furthermore, the fixation mechanism can be configured to clamp the coupling body and/or the support protrusion in the load carrier coupling.

According to a preferable embodiment of the seventh aspect, the supporting portion is configured engageable with the at least one support protrusion such that a positive locking is achievable between the supporting portion and the support protrusion for blocking a movement in the detachment direction. Accordingly, the supporting portion can be specifically configured to enable a positive locking.

The supporting portion may comprise a supporting wall adapted to contact the support protrusion when the load carrier coupling is mounted on the trailer coupling. The supporting wall can at least partially extend along the insertion direction. Preferably, the supporting wall can at least partially extend parallel to the insertion direction. Accordingly, the supporting wall can be provided such that the supporting wall is moved along the support protrusion upon mounting the load carrier coupling on the trailer coupling. Hence, when the load carrier coupling is mounted on the trailer coupling, the supporting wall is in contact with an outer surface of the support protrusion, in particular with a side portion of the support protrusion. The load carrier coupling may comprise a single supporting wall, preferably one supporting wall per support protrusion, and may in particular not comprise an additional wall forming a recess between the same and the supporting wall. In other words, according to a preferable embodiment, it is enough to provide a single supporting wall for contacting the support protrusion.

According to a preferable embodiment, the supporting portion further comprises a guiding wall. The supporting wall and the guiding wall can define an insertion section for receiving the support protrusion upon inserting the load carrier coupling on the trailer coupling. Accordingly, contrary to the embodiment as described above in which a supporting wall is provided as a single element and without a further wall, it is also possible to provide a guiding wall for defining an insertion section. In such a configuration, the supporting wall and the guiding wall can be provided so as to at least partially extend axis-symmetrically with respect to a middle axis of the insertion section. Alternatively or in addition, the supporting wall and the guiding wall can be arranged facing inwardly towards each other. Accordingly, the supporting wall and the guiding wall can comprise portions which extend axis-symmetrically with respect to the middle axis of the insertion section. Such portions of the supporting wall and the guiding wall can thus be arranged parallel with respect to each other or inclined at an angle with respect to the middle axis. It is also possible to provide the supporting wall and the guiding wall such that they extend along curved paths that are axis-symmetrically with respect to the middle axis. Portions of the supporting wall and the guiding wall which at least partially extend axis-symmetrically with respect to a middle axis can be configured to securely guide the support protrusion in the insertion section. For example, the insertion section can be configured such that a distance between the supporting wall and the guiding wall in a lower portion is greater than a distance between the supporting wall and the guiding wall in a portion located nearer to the receiving portion. Accordingly, different configurations are possible for facilitating an insertion of a supporting portion on a support protrusion.

In the above described configurations, the supporting wall can comprise a recess for accommodating the support protrusion in a positive locking manner. In the context of the present disclosure, a positive locking manner is to be understood as a manner in which a movement in a specific direction is prevented or limited by an element or portion of an element that blocks a passing of the support protrusion. The shape of the recess can follow the outer contour of the support protrusion. The recess can define a step surface which is oriented towards the receiving portion. Accordingly, as soon as the support protrusion is accommodated in such a recess, the step surface is positioned between the support protrusion and a lower end of the supporting portion such that a movement of the load carrier coupling in the detachment direction is prevented by a contact between the step surface and the support protrusion.

A positive locking of the support protrusion in the supporting portion can be realized in further ways. For example, in case the supporting portion comprises a recess for accommodating the support protrusion, for example a substantially straight recess extending in a direction parallel to the insertion direction of the load carrier coupling, a positive locking can be achieved by a further member that is able to close a lower opening of the recess or to reduce the dimension of the recess such that an accommodated support protrusion is blocked from disengaging with the recess. Furthermore, it is possible to provide an insertion section similar to the insertion section as described above with the difference that a lower portion of the insertion section defining an opening for receiving the support protrusion may be shiftable to create a step surface when the support protrusion is accommodated in the supporting portion. For example, the lower portion of an insertion section can be arranged twistable with respect to an upper portion of the insertion section to generate the step surface.

According to a preferable embodiment, the insertion section is configured for guiding the support protrusion to a locking section. The locking section can comprise a width greater than the width of an adjacent portion of the insertion section and can allow to accommodate the support protrusion therein in an offset manner. Accordingly, a locking section can be provided continuing from the insertion section and having a different shape allowing to accommodate the support protrusion in a manner offset to the position of the support protrusion in the insertion section. For example, if the insertion section is configured to guide or receive the support protrusion along a specific path, preferably parallel to the insertion direction, the locking section is provided to move or allow a movement of the support protrusion in a direction cross to the path in the insertion section. In this way, a step is again created in the supporting portion allowing to accommodate the support protrusion in a positive locking manner.

According to a preferable embodiment, the insertion section extends from a forward end of the engaging portion along an insertion path parallel to the middle axis and the locking section continues from the insertion section and extends along a locking path extending cross to the insertion path. In the context of the present disclosure, a forward end is to be understood as the end forming a forward portion in the insertion direction of the load carrier coupling. The forward end corresponds to a lower end when the load carrier coupling is mounted on the trailer coupling. The insertion section may be open in the insertion direction at the forward end. A locking section extends cross to the insertion path and continues from the insertion section. Accordingly, upon mounting the load carrier coupling on the trailer coupling, the supporting portion has to perform a movement in a direction cross to the insertion direction in order to accommodate the support protrusion in the locking section as the load carrier coupling has first to be moved such that the support protrusion upon receipt in the supporting portion follows the insertion path and then follows the locking path.

According to a further preferable embodiment, the fixation mechanism can be configured for maintaining and/or bringing the support protrusion in a positive locking state and/or for clamping the load carrier coupling on the trailer coupling.

The fixation mechanism comprises an urging member for applying a force on the neck of the trailer coupling, preferably on a vertically extending cylindrical portion of the neck. In addition or alternatively, the urging member is preferably a pushing member for exerting a pushing force on the neck of the trailer coupling. Preferably, the pushing member comprises a threaded bolt or a pin. Alternatively, the urging member can be a pulling member for exerting a pulling force on the neck of the trailer coupling. For example, the pulling member can be a bracket or tensioning arm configured to engage behind the neck. The urging member can be generally configured to move the supporting portion relative to the trailer coupling such that the support protrusion is accommodated in a positive locking manner as described above or firmly pressed against the above-described supporting wall.

According to a further preferable embodiment, the fixation mechanism comprises a flexible elongate member adapted to clasp a portion of the neck and/or a portion of one of the at least one support protrusion. Preferably, the flexible elongate member comprises a wire for clasping a horizontal portion of the trailer coupling. Instead of a wire, a strap can be used instead. The horizontal portion of the trailer coupling can be a horizontal portion of the neck.

According to a further preferable embodiment, the receiving portion and the supporting portion are integrally formed. For that, the load carrier coupling can comprise a unitary housing in which both, the receiving portion and the supporting portion, are formed. Accordingly, in a very basic configuration, the load carrier coupling can be made from a tubular member, in other words a hollow cylindrical member in which recesses are provided in the lower portion for accommodating the support protrusions.

Preferably, the housing is formed hollow cylindrical, preferably as a right circular hollow cylinder. Accordingly, the housing can be formed as a cylindrical shell.

According to a further preferable embodiment, the receiving portion extends along a middle axis being parallel to the insertion direction and comprises a supporting surface for contacting a side portion of the coupling body. Preferably, the supporting surface partially extends about the middle axis. The receiving portion can be formed such that the middle axis is coaxial with a middle axis of a vertical portion of the trailer coupling.

According to a further preferable embodiment, a load carrier is provided. The load carrier can be a bike carrier. The load carrier may comprise a load carrying platform coupled to a load carrier coupling according to one of the preceding claims. In particular, the load carrying platform can be coupled to the receiving portion or the supporting portion from an outside. Preferably, if the receiving portion and the supporting portion are configured as a unitary housing, the load carrying platform can be coupled to such a housing. The load carrying platform can comprise frame elements for supporting further means for carrying specific goods. For example, the load carrying platform can comprise wheel trays for supporting wheels of a bike.

According to a further comparative example not covered by the claimed invention, a load carrier coupling for mounting a load carrier on a trailer coupling of a vehicle is provided. The trailer coupling can be configured as described before in connection with the other aspect, comparative examples, embodiments and modifications of the present disclosure. In particular, the trailer coupling can comprise a neck, a coupling body, preferably a ball head, supported by the neck, and at least one support protrusion, preferably a cylindrical pin, provided on the neck.

A load carrier coupling according to the comparative example can comprise a receiving portion configured to at least partially receive the coupling body upon inserting the load carrier coupling on the trailer coupling in an insertion direction. Accordingly, the receiving portion is configured to receive a portion of the coupling body, for example of a ball head, or to completely receive the coupling body. For that, the receiving portion can be configured to at least partially surround the coupling body and to provide a supporting surface which is arranged to contact an upper portion of the coupling body, for example an upper portion of a ball head. Accordingly, the receiving portion can be configured to support the load carrier coupling on an upper portion of the coupling body.

The load carrier coupling according to the comparative example can furthermore comprise a supporting portion configured to accommodate the at least one support protrusion by a movement of the supporting portion about the coupling body when the coupling body is received in the receiving portion for coupling the receiving portion on the coupling body. In order to accommodate the at least one support protrusion, the supporting portion can be configured to receive the at least one support protrusion in a recess formed in the supporting portion.

Preferably, the supporting portion is configured such that at least one support protrusion is in engagement with the supporting portion and, thus, contacts the same. Accordingly, the supporting portion can be configured to engage with the at least one support protrusion by a movement of the supporting portion about the coupling body. In the context of the present disclosure, an engagement is provided as soon as a contact between the supporting portion and a support protrusion is established. The movement of the supporting portion about the coupling body can be a pivoting movement. In order to provide a pivoting movement about the coupling body, a guide member can be provided which guides the supporting portion on a portion of the neck of the trailer coupling. Preferably, the supporting portion is configured such that a pivoting movement of the supporting portion about a coupling body leads to a clamping action of the receiving portion on the coupling body. Accordingly, the supporting portion is configured to transfer a pivoting movement of the supporting portion into a force acting on the at least one support protrusion thereby generating a clamping force acting on the support protrusions in a direction of the receiving portion so that the receiving portion is firmly pressed against an outer surface of the coupling body.

The load carrier coupling can further comprise an operating portion which is preferably fixedly coupled to the supporting portion so as to be integrally movable with the supporting portion. Preferably, the operating portion comprises a load supporting portion for supporting loads to be transported. Accordingly, the configuration of the load carrier coupling according to the comparative example can be such that an operating portion or operating member also acts as a load supporting portion for supporting loads to be transported. Therefore, a separate operating member for operating the supporting portion can be omitted and is substituted by an element which has an additional function of supporting loads. Preferably, the load supporting portion is a platform or an element of a platform. On such a platform, loads to be transported can be securely fixed. Accordingly, an element of the load carrier coupling can provide a member of a load carrier in an integral manner.

According to a preferable embodiment, the receiving portion comprises a guiding surface for guiding the supporting portion along a movement path about the coupling body when the receiving portion is inserted on the coupling body. Preferably, the guiding surface gets in contact with the coupling body. Accordingly, the load carrier coupling is configured such that the receiving portion is able to contact the coupling body in a manner defining a movement path for the supporting portion.

Preferably, the load carrier coupling is configured such that the supporting portion is movable about the coupling body between an insertion position and a coupling position. In the insertion position, an insertion of the receiving portion on the coupling body is possible. In the coupling position, the support protrusion is accommodated in the supporting portion thereby at least generating a positive locking of the load carrier coupling on the trailer coupling to block a movement of the load carrier coupling in a release direction extending parallel to a vertical direction when the load carrier coupling is mounted on the trailer coupling.

According to a further preferable embodiment, the supporting portion comprises a receiving section for receiving the support protrusion when the supporting portion is in the coupling position. Preferably, the receiving section is configured to apply a force on the support protrusion thereby generating a clamping force for clamping the receiving portion on the coupling body when the supporting portion is in the coupling position. Accordingly, the load carrier coupling is clamped on the trailer coupling by first inserting the receiving portion on the coupling body and then pivoting the supporting portion about the coupling body in order to receive the support protrusion in the receiving section.

Preferably, the receiving section comprises a lower inner wall portion for contacting the support protrusion.

According to a further preferable embodiment, the lower inner wall portion comprises an engaging recess extending in a direction opposite to the direction in which the force is applied on the support protrusion and configured to engage with the support protrusion to provide a positive locking for blocking a movement of the supporting portion towards the insertion position.

According to a preferable embodiment, the guiding surface can be configured partially mating with an outer surface of the coupling body. Preferably, the guiding surface can be formed as continuous surface or can be formed as discontinuous surface comprising two or more guiding surface sections.

According to a preferable embodiment, the guiding surface is defined by a curve, preferably a circular arch, rotated about a middle axis of the receiving portion, preferably over an angle of at least 180°, more preferably over an angle of more than 180°, for example 220°. Accordingly, the guiding surface can be provided so as to surround more than half of an outer contour of the coupling body. In case the coupling body is a ball head, such a configuration is beneficial as a contact surface ranging about more than 180° prevents the receiving section from sliding off of the coupling body in an undesired manner. In particular, in case a force is exerted on the receiving portion in a tangential direction to the coupling body, the latter described configuration at least makes it more difficult for the receiving portion to translatory slide on the coupling body.

According to a further preferable embodiment, the receiving portion and the supporting portion are integrally formed. Preferably, both portions are integrally formed from cutting and bending a metal plate.

Preferably, the receiving portion and the supporting portion are integral portions of a housing.

According to a preferable embodiment, the housing can comprise two sidewall portions, preferably extending parallel to each other, wherein each sidewall portion comprises a recess defining the receiving portion.

According to a further preferable embodiment, the housing comprises a supporting wall extending between the sidewall portions and comprises a recess for accommodating an upper portion of the neck when the load carrier coupling is inserted on the trailer coupling in the insertion direction.

According to a further preferable embodiment, the load carrier coupling further comprises a blocking member for preventing the guiding surface from coming off of the coupling body when the load carrier coupling is in the coupling position. The blocking member preferably comprises a removable blocking element, preferably a pin.

According to a further preferable embodiment, a load carrier is disclosed. The load carrier can be a bike carrier. The load carrier can comprise a load carrier coupling as described before and a means for fixing load to be transported coupled to the load supporting portion.

According to a seventh comparative example not covered by the claimed invention, a load carrier coupling for mounting a load carrier on a trailer coupling of a vehicle is provided. The trailer coupling can be configured identical to the trailer couplings as described before with respect to the other aspects, comparative examples, embodiments and modifications. The load carrier coupling according to the seventh comparative example comprises a receiving portion and a supporting portion. The receiving portion is configured to receive a portion of a coupling body of the trailer coupling. If the coupling body is a ball head, the receiving portion can be configured to get in contact with a spherical outer surface of the ball head. The receiving portion can comprise an inner surface having a spherical shape. In particular, the inner surface of the receiving portion can comprise the shape of a shell of a spherical segment.

The supporting portion is configured to contact a support protrusion of the trailer coupling. In particular, the supporting portion is configured to get in contact with an outer circumferential surface of a support protrusion. As already described above, the support protrusion can have the shape of a cylindrical pin. In this case, the supporting portion can be configured to at least contact a portion of the outer circumferential surface, more precisely of the cylindrical shell surface, of the cylindrical pin. For that, the supporting portion can comprise a recess for accommodating a portion of the support protrusion.

The load carrier coupling according to the seventh comparative example is configured to be clamped on the trailer coupling. In order to generate a clamping force, a contact of the receiving portion with the coupling body and a contact between the supporting portion and the support protrusion is established in order to apply clamping forces on the coupling body and the support protrusion, respectively. In general, a clamping can be achieved when the receiving portion applies a force on the coupling body from below and the supporting portion applies a clamping force on the support protrusion from above. On the other hand, it is also possible that the receiving portion applies a force on an upper portion of the coupling body and the supporting portion applies a force on a lower portion of the support protrusion. In these cases, if a sufficiently high force is applied on the respective portions, a clamping is achieved.

Preferably, a recess provided in the supporting portion is oriented upwards in order to get in contact with a lower portion of the support protrusion. In other words, the recess is configured to accommodate a lower portion of the support protrusion therein. The receiving portion is configured to establish a contact with an upper portion of the coupling body. As already described before, the receiving portion may comprise an inner surface which is formed according to an outer contour of the coupling body. In a preferred configuration, the coupling body is a ball head and the receiving surface of the receiving portion is formed in a spherical manner. Furthermore, in a preferable configuration, the receiving surface and the recess of the supporting portion are oriented towards each other in order to accommodate the coupling body and the support protrusion between the same. In other words, a clamping space for accommodating a portion of the trailer coupling including the coupling body and the support protrusions is defined by the inner wall of the receiving portion and the recess for receiving the support protrusions in the supporting portion.

According to the configurations in connection with the seventh comparative example of the present disclosure, clamping is effected by varying or adjusting a distance between the receiving portion and the supporting portion. In the configuration according to the seventh comparative example, a movement of one of the receiving portion and the supporting portion towards the other one of the supporting portion and the receiving portion is effected via an elastic deformation. For example, the supporting portion can be coupled to the receiving portion in resilient manner. In another configuration, the receiving portion may be coupled to a base portion for coupling the load carrier coupling to an element of a load carrier, in particular a frame member of a load carrier, and the supporting portion can be resiliently coupled to the base portion. In one configuration, the receiving portion can be rigidly coupled to an element of the load carrier by means of the base portion. On the other hand, the supporting portion can be elastically coupled to the base portion.

The receiving portion, the base portion and the supporting portion can be configured as an integral unit. For coupling the supporting portion to the base portion, a bridging portion can be provided. The receiving portion, the base portion, the bridging portion and the supporting portion can be configured so as to be able to accommodate a frame member of a load carrier between the base portion, the bridging portion and a portion of the receiving portion. The latter mentioned portion of the receiving portion can also be referred to as coupling portion which connects the receiving portion with the bridging portion. The receiving portion and the base portion may together be referred to as upper portion of the load carrier coupling and the supporting portion and the coupling portion may together be referred to as lower portion of the load carrier coupling.

The upper portion and the lower portion of the load carrier coupling are coupled to each other by the bridging portion and together may define a substantially C-shaped bracket wherein the free ends of the C-shape define the receiving portion and the supporting portion, respectively.

The base portion can comprise openings for fixing the load carrier coupling to a frame member of a load carrier by means of bolts or screws. However, it is also possible to fix the load carrier coupling on the frame member in other ways, for example by welding. The bridging portion and/or the coupling portion is/are formed resilient. In other words, the bridging portion and/or the coupling portion can be configured as spring members. In this way, the supporting portion is movable towards and away from the receiving portion and therefore towards and away from the support protrusion by an elastic deformation of the bridging portion and/or the coupling portion. It is noted, that instead of using the bridging portion, the coupling portion may also be directly mounted to a frame member of a load carrier or to a housing coupling the lower portion of the load carrier coupling with the upper portion of the load carrier coupling.

Preferably, the load carrier coupling according to the seventh comparative example comprises a tightening member for coupling the upper portion and the lower portion and configured to apply a tightening force on the lower portion so as to move the supporting portion towards the receiving portion. Preferably, the tightening member is a bolt arranged at a distance from the bridging portion adjacent to the receiving portion and the supporting portion. The bolt is rotatably supported in the upper portion and threadedly engaged with the lower portion adjacent the receiving portion and the supporting portion, respectively. Due to this, when the bolt is rotated in a tightening direction, the lower portion is translatory moved, preferably pulled towards the upper portion thereby moving the supporting portion towards the receiving portion.

A load carrier coupling according to this comparative example is configured such that the supporting portion can be brought into an opened state in which an insertion of the coupling body in the receiving portion is possible and into a closed state in which an inserted coupling body is clamped by applying a force on the support protrusions. Preferably, the bridging portion and/or the coupling portion, when being formed as elastically deformable or resilient portions, are in an unstressed, stress-free or relieved condition when the supporting portion is in the closed state. Accordingly, when the tightening member is actuated to move the supporting portion away from the receiving portion, a tightening force has to be generated acting against a spring force generated by the respective resilient members. The configuration can also be vice versa such that a force for closing or moving the supporting portion towards the receiving portion has to be applied against a spring force generated by the bridging portion and/or the coupling portion. Further features and modifications can be gleaned from the below detailed description of the seventh comparative example.

According to an eighth comparative example not covered by the invention, a load carrier coupling for mounting a load carrier on a trailer coupling of a vehicle is provided. The trailer coupling may comprise a neck, a coupling body, preferably a ball head, supported by the neck, and at least one support protrusion, preferably a cylindrical pin, provided on the neck and can be configured as described above with respect to the other aspects, comparative examples, embodiments and modifications. The load carrier coupling can comprise a receiving portion configured to at least partially receive the coupling body, and a supporting portion configured to contact the at least one support protrusion upon inserting the load carrier coupling on the trailer coupling. The supporting portion can be arranged pivotably movable with respect to the receiving portion. Furthermore, the load carrier coupling can comprise a contact portion for contacting at least a section of the neck, preferably a section of the neck extending in vertical direction of the load carrier coupling in a condition mounted on a vehicle, preferably a cylindrical section of the neck carrying the coupling body. The contact portion is preferably arranged so as to be integrally movable with the supporting portion. Preferably, the supporting portion and the contact portion are fixedly provided on a pivot arm. The pivot arm can be mounted on the receiving portion pivotably and translatory movable with respect to the receiving portion, in particular such that the receiving portion can be hooked on the coupling body by a rotational movement about the coupling body. A load carrier may comprise a load carrier coupling and a platform or supporting frame coupled to the load carrier coupling. Further features of the load carrier coupling according to the eighth comparative example can be gleaned from the below detailed description.

### BRIEF DESCRIPTION OF THE DRAWINGS

Figure 1 shows a side view of a load carrier coupling according to the first comparative example not covered by the claimed invention.
Figure 2 shows a view of the load carrier coupling of Figure 1 obliquely from above.
Figure 3 shows a perspective view of the load carrier coupling of Figure 1 from below.
Figure 4 shows a perspective view of a receiving portion of the load carrier coupling of Figure 1.
Figure 5 shows a sectional side view of the load carrier coupling of Figure 1 in a dismounted state.
Figure 6 shows a sectional side view of the load carrier coupling of Figure 1 in a state, in which the load carrier coupling is already partially inserted on the trailer coupling.
Figure 7 shows a sectional side view of the load carrier coupling of Figure 1 in a state in which the load carrier coupling is fixedly mounted on the trailer coupling.
Figure 8 shows an enlarged view of a supporting portion of the load carrier coupling according to Figure 1.
Figure 9 shows a sectional side view of the load carrier coupling of Figure 1 in a state, in which a locking member of the same is operated in preparation of a dismounting action by a user.
Figure 10 shows a sectional side view of the load carrier coupling of Figure 1 in a state in which the load carrier coupling is already partially removed from the trailer coupling.
Figure 11 shows contact areas of the load carrier coupling according to the first comparative example not covered by the claimed invention on a trailer coupling.
Figure 11a shows a modification of the load carrier coupling according to the first comparative example.
Figure 12 shows a rear view of a trailer coupling 1 to which the load carrier coupling is mountable.
Figure 13 shows a side view of the trailer coupling as shown in Figure 12.
Figure 14 and Figure 15 show perspective views of a load carrier coupling according to a second comparative example not covered by the claimed invention.
Figure 16 and Figure 17 show perspective sectional side views of the load carrier coupling according to the second comparative example.
Figure 18 shows a side view of a supporting portion as used in the load carrier coupling according to the second comparative example.
Figures 19 to 21 show a mounting process of the load carrier coupling according to the second comparative example.
Figures 22 to 24 show a dismounting process of the load carrier coupling according to the second comparative example.
Figures 25 to 27, 25a and 27a show perspective views of modifications of the load carrier coupling according to the second comparative example.
Figure 28 shows contact areas of the load carrier coupling according to the second comparative example on a trailer coupling.
Figure 29 shows a perspective view of a load carrier coupling according to the third comparative example not covered by the claimed invention which is arranged above a trailer coupling.
Figure 30 is a perspective view showing the rear side of the load carrier coupling shown in Figure 29.
Figure 31 shows a side view of the load carrier coupling of Figures 29 and 30 in an open state.
Figure 32 shows the load carrier coupling of Figure 31 in engaging state.
Figure 33 shows a portion of a housing of the load carrier coupling according to the third comparative example.
Figure 34 shows an engaging member of the load carrier coupling according to the third comparative example.
Figure 35 shows a sectional side view of the load carrier coupling according to the third comparative example.
Figure 36 shows a modification of the load carrier coupling according to the third comparative example.
Figure 37 shows a modification of the engaging member of the load carrier coupling according to the third comparative example.
Figure 38 shows contact areas of the load carrier coupling according to the third comparative example on a trailer coupling.
Figure 39 and Figure 40 show perspective views of a configuration of a load carrier coupling according to a fourth comparative example not covered by the claimed invention.
Figures 41 to 43 show side views of a trailer coupling and of the load carrier coupling according to the first configuration of the fourth comparative example during a mounting process.
Figure 44 shows contact areas of the load carrier coupling according to a first configuration of the fourth comparative example on a trailer coupling.
Figures 45 and 46 show a second configuration of a load carrier coupling according to the fourth comparative example.
Figures 47 to 49 illustrate a mounting process of the load carrier coupling according to the second configuration of the fourth comparative example on a trailer coupling.
Figure 50 shows contact areas of the load carrier coupling according to the second configuration of the fourth comparative example on a trailer coupling.
Figure 51 and Figure 52 show perspective views of a third configuration of a trailer coupling according to the fourth comparative example.
Figures 54 to 56 show a mounting process of the load carrier coupling according to the third configuration of the fourth comparative example on a trailer coupling.
Figure 57 shows contact areas of the load carrier coupling according to the third configuration of the fourth comparative example on a trailer coupling.
Figure 58 shows a perspective view of a load carrier coupling according to the fifth comparative example not covered by the claimed invention.
Figures 59 to 61 show sectional views of the load carrier coupling according to the fifth comparative example.
Figure 62 shows a perspective view of a force transfer member as used in the load carrier coupling according to the fifth comparative example.
Figures 63 to 65 illustrate a mounting process of the load carrier coupling according to the fifth comparative example on a trailer coupling.
Figure 66 shows contact areas of the load carrier coupling according to the fifth comparative example on the trailer coupling.
Figures 66a and 66b show a further configuration of a load carrier coupling according to the fifth comparative example.
Figure 67 shows a perspective view of a load carrier coupling according to a sixth comparative example not covered by the claimed invention.
Figure 68 shows a perspective view of the load carrier coupling according to the sixth comparative example from below.
Figure 69 and Figure 70 show side views of the main elements of the load carrier coupling according to the sixth comparative example in different states.
Figures 71 to 73 illustrate a mounting process of the load carrier coupling according to the sixth comparative example on the trailer coupling.
Figure 74 shows a configuration according to an embodiment according to a first aspect in a partially sectional side view.
Figure 75 shows the load carrier coupling of Figure 74 in a condition mounted on trailer coupling.
Figure 76 shows a modification of the embodiment shown in Figure 74 and does not form part of the invention.
Figures 77 and 78 show partially sectional perspective views of a modification of the load carrier coupling of Figure 76.
Figures 79 and 80 show a modification of the load carrier coupling of Figure 74.
Figure 81 shows a further configuration of an embodiment according to the first aspect in a side view.
Figure 82 shows a perspective view of the embodiment of Figure 81.
Figure 83 shows a modification of the embodiment shown in Figures 81 and 82.
Figure 84 shows the modification of Figure 83 in a mounted condition.
Figure 85 shows an adapter for changing the dimensions of support protrusions in a condition mounted on a trailer coupling.
Figure 86 shows the adapter of Figure 85 in exploded view.
Figure 87 shows a further adapter for changing the dimensions of a support protrusion.
Figures 88 and 89 show perspective views of a load carrier coupling according to a comparative example not covered by the invention of the present disclosure.
Figure 90 shows a side view of the load carrier coupling shown in Figures 88 and 89.
Figure 91 shows a bottom view of the load carrier coupling of Figures 88 to 90.
Figure 92 shows a perspective view in which the load carrier coupling according to Figures 88 to 91 is inserted on a trailer coupling.
Figure 93 shows a side view of the load carrier coupling as received on the trailer coupling.
Figures 94 and 95 show a state in which the load carrier coupling is engaged on the trailer coupling.
Figure 96 shows a sectional view of the load carrier coupling of Figures 94 and 95.
Figure 97 shows a modification of the comparative example not covered by the claimed invention in a perspective view.
Figure 98 shows a bottom view of the modification of Figure 97.
Figure 99 shows a configuration according to a seventh comparative example not covered by the claimed invention in perspective view.
Figure 100 shows a side view of the configuration shown in Figure 99.
Figure 101 shows a side view of the load carrier coupling shown in Figures 99 and 100 in which a frame member of a load carrier is omitted.
Figure 102 shows a perspective view of the load carrier coupling shown in Figure 101.
Figure 103 shows a perspective view of a load carrier coupling of an eighth comparative example not covered by the claimed invention.
Figure 104 shows a side view of components of the load carrier coupling of Figure 103.
Figure 105 shows a side view of a modification of a load carrier coupling according to the fifth comparative example.
Figure 106 shows a sectional view of the load carrier coupling according to Figure 105.
Figure 107 shows a possible modification of the shape of support protrusions on a trailer coupling.
Figure 108 shows a further possible modification of the shape of support protrusions.
Figure 109 shows a sectional perspective view of a modification of the load carrier coupling according to the first comparative example.
Figure 110 shows a sectional side view the load carrier coupling of Figure 109.
Figure 111 shows a perspective view of an indicator element provided on the load carrier coupling according to Figure 109.
Figures 112 to 114 show different states of the load carrier coupling according to Figure 109.
Figure 115 shows a modification of the load carrier coupling according to the sixth comparative example.
Figure 116 shows a modification of the load carrier coupling according to the fifth comparative example.

### DETAILED DESCRIPTION OF EMBODIMENTS

Aspects and embodiments of the present disclosure will be described with reference to the drawings. It is noted that the same reference numerals in the drawings denote identical or similar elements.

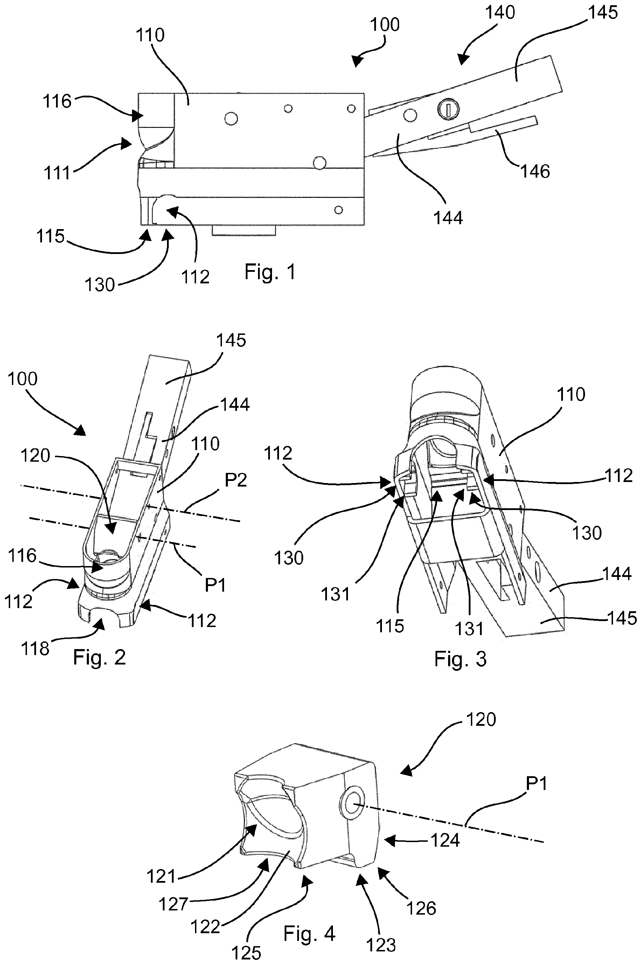

Figure 1 shows a load carrier coupling 100 according to a first comparative example of the present disclosure. The load carrier coupling 100 is depicted in side view and comprises a housing 110. The housing defines an accommodating space 115 which is configured to accommodate and receive a coupling body 3 embodied as a tow ball or ball head as well as a portion of the neck 2 of the trailer coupling 1 therein.

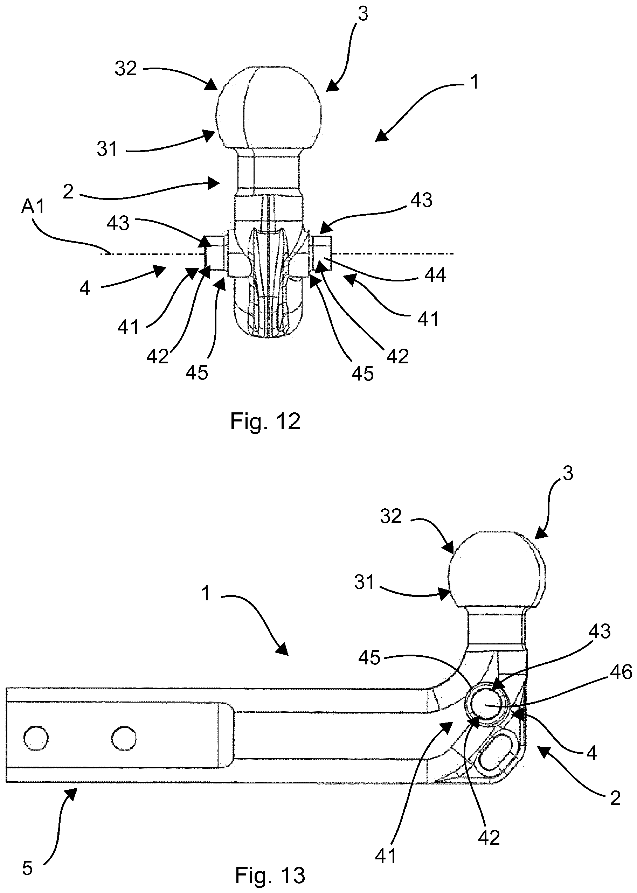

The load carrier coupling 100 as well as all load carrier couplings described below are configured to be used with a specific trailer coupling 1 of the type as is shown in Figures 12 and 13. The trailer coupling 1 comprises a neck 2, a coupling body 3 which is supported by the neck 2 and two support protrusions 4 that protrude from the neck on opposite sides. The coupling body is a ball head also referred to as tow ball. The support protrusions 4 have the shape of cylindrical pins 41. The ball head or coupling body 3 comprises a spherical outer surface which comprises a lower portion 31 and an upper portion 32. In the present context, the lower portion 31 is the portion of the coupling body which is located below a horizontal plane extending through the middle point of the ball head. On the other hand, the upper portion 32 is the portion which is located above that plane.

Similar to the latter definition of the upper portion 32 and the lower portion 31, the cylindrical pins 41 comprise an upper portion 43 and a lower portion 42. More precisely, the portion which is located below a horizontal plane extending through the middle axis of the cylindrical pin is considered a lower portion 42 and the portion which is located above the latter plane is considered the upper portion 43. The cylindrical pin 41 furthermore comprises a lateral surface 44 which extends in a ring-like manner about the rotational axis of the cylindrical pins 41. Accordingly, a portion of the lateral surface 44 is located in the upper portion 43 and another portion of the lateral surface 44 is located in the lower portion 42. The lateral surface is available for supporting an element of the load carrier coupling thereon. Furthermore, a neck support surface 45 is provided at a bridging portion or root portion of the cylindrical pins 41 which in the present configuration extends substantially perpendicular to the middle axis or rotational axis of the cylindrical pins 41. The neck support surfaces 45 are also available for supporting a portion of a load carrier coupling thereon. The cylindrical pins 41 further comprise end surfaces 46 which in the configuration as shown extend substantially perpendicular to the longitudinal axis A1 of the cylindrical pins 41. The end surfaces 46 are arranged so as to face away from each other. The end surfaces 46 are available to get in contact with a load carrier coupling in order to provide a support in lateral direction of the trailer coupling 1 or to allow a suitable guiding of the load carrier coupling onto the trailer coupling 1. The neck support surface 45 and the end surface 46 of one of the cylindrical pins 41 are also shown in Figure 13 which shows a side view of the trailer coupling 1. On the opposite end to the end at which the ball head 3 is supported by the neck 2, the trailer coupling 1 comprises a mounting portion 5 which is configured for mounting the trailer coupling 1 to a vehicle (not shown).

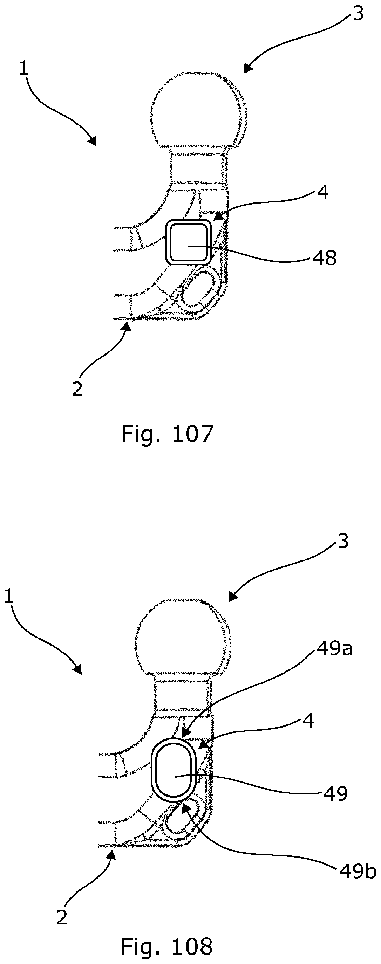

Other possible configurations of the support protrusions 4 are shown in Figures 107 and 108. In the configurations, the support protrusions 4 do not comprise a circular cross section but are formed with shapes being non-circular in cross section. The support protrusion 4 as shown in Figure 107 comprises a body 49 having an outer contour corresponding to a square having rounded corners and edges. The support protrusion 4 as shown in Figure 108 has a body 49 having an outer contour being based on a rectangle extending in vertical direction and having two opposite rounded ends, more precisely an upper rounded end 49a and a lower rounded end 49b. In general, the support protrusions can be configured for better contact, stability and durability, for example elongated, rectangular or square shaped, particularly to get an elongated surface contact between support protrusion and load carrier coupling.

Referring back to Figure 1, the housing 110 further comprises a supporting section 111 and side walls 112 limiting the above-mentioned accommodating space 115 on opposite sides. On the side walls, a supporting portion 130 is provided which will be described later. The side walls 112 are coupled to each other by means of a bridging portion 116. In the present configuration, the bridging portion 116 comprises a rounded shape and limits the above-mentioned accommodating space 115 on a side of the load carrier coupling 100 which in use or when mounted on the trailer coupling 1 is oriented towards the rear of a vehicle.

As is further shown in Figure 1, the load carrier coupling further comprises a locking member 140 which can also be described as operating member for a user. The locking member 140 comprises a lever 144 and a gripping portion 145 which is graspable by a user. The locking member 140 has the function of locking the load carrier coupling 100 onto the trailer coupling 1 as soon as the coupling body 3 of the trailer coupling 1 is fully inserted into the above-described accommodating space 115. The function and further details of the locking member 140 will be described later.

Figures 2 and 3 show perspective views of the load carrier coupling 100 wherein Figure 2 shows a perspective view from above and Figure 3 shows a perspective view from below. The load carrier coupling 100 further comprises a receiving portion 120 which is configured to partially receive the ball head 3. The receiving portion 120 is a separate member which is pivotably coupled to the housing 110, for instance by means of a pivot pin (not shown). The receiving portion 120 can also be referred to as receiving member. The receiving portion 120 is pivotable about a pivot axis P1. The lever 144 is coupled to the housing 110 pivotably movable about a pivot axis P2. The receiving portion 120 and the lever 144 are coupled to the housing such that the pivot axis P1 and P2 are arranged parallel with respect to each other. The lever 144 and the receiving portion 120 are arranged such that they can contact each other.

The housing 110 further comprises a recess 118 which is formed in the lower portion of the bridging portion 116 and serves for accommodating a portion of the neck of the trailer coupling 1 to which the load carrier coupling 100 is mountable. As is shown in Figure 3, the supporting portion 130 comprise recesses 131 that are provided on an inner side of the side walls 112 and in such a manner that they are substantially symmetrically formed with respect to a vertical middle plane of the load carrier coupling 100 that extends along the longitudinal direction of the load carrier coupling 100. The recesses 131 are formed so as to be able to accommodate the support protrusions 4 of the trailer coupling 1 therein.

Figure 4 shows a perspective view of the receiving portion 120. As already mentioned above, the receiving portion 120 is a separate element or member which can also be described as receiving member in the present configuration. The receiving portion 120 comprises a recess 121 for accommodating a portion of the ball head 3. The recess 121 comprises a bowl shape with an inner surface 122 which is formed such that the ball head is only contacted at a section of a spherical zone of the same when the recess 121 or inner surface 122 is in contact with the outer surface of the ball head 3. In a lower portion 125 of the receiving portion 120, an accommodating recess 127 is provided which is able to accommodate a portion of the neck 2 of the trailer coupling 1 therein. With this configuration, the inner surface 122 can be provided such that the outer surface of the ball head 3 can be contacted to a greater extent.

The side on which the recess 121 with the inner surface 122 is provided on the receiving portion 120 will also be referred to as front portion of the receiving portion 120. Following this definition, the receiving portion 120 also comprises a back portion which is arranged on the opposite side of the pivot axis P1, a lower portion which is located below the pivot axis P1 and an upper portion which is located above the pivot axis P1. On the lower back portion of the receiving portion 120, a first abutment portion 123 is provided in the form of a flat surface extending substantially parallel to the pivot axis P1. On the back portion of the receiving portion 120, a second abutment portion 124 is provided in the form of another flat surface which extends in a plane which is substantially parallel to the pivot axis P1. The first abutment portion 123 and the second abutment portion 124 are arranged at an angle with respect to each other and the surfaces of the first abutment portion 123 and the second abutment portion 124 are connected to each other via a surface of a bridging portion 126 which in the configuration is a rounded edge provided at a lower edge portion of the receiving portion 120. The first abutment portion 123 and the second abutment portion 124 as well as the bridging portion 126 are provided for an interaction with the locking member 140 as will be described later.

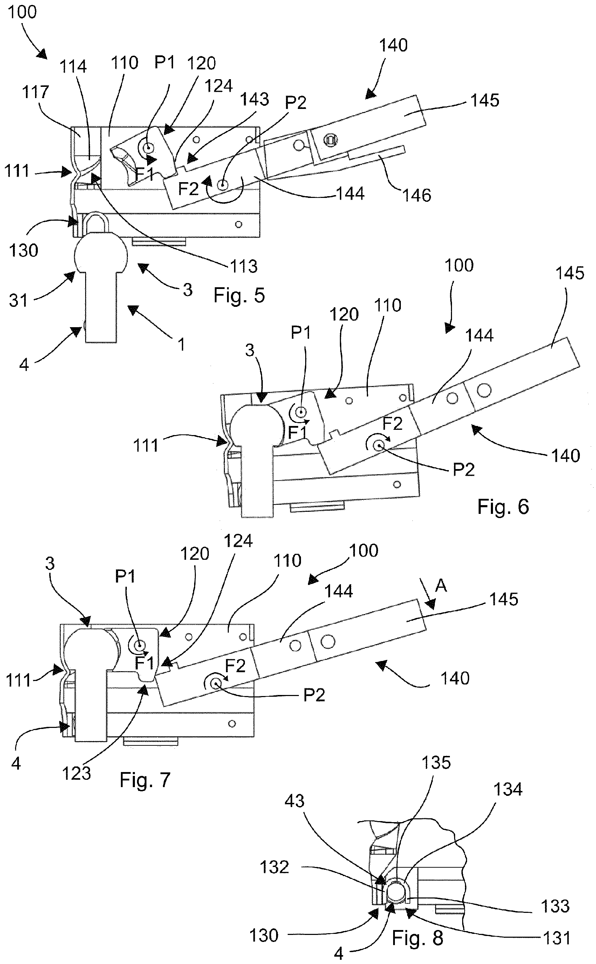

The configuration of the supporting portion 130 will be described in greater detail with respect to Figure 8. The supporting portion 130 comprises the recess 131 as already mentioned above which in the configuration is provided on the housing 110, more precisely integrally formed with the housing 110. The recess 131 is U-shaped with an open side facing downward towards the lower portion of the housing 110. The recess 131 is defined by two substantially parallel side portions 132, 133 and a bottom portion 134 connecting the side portion on an upper side. The bottom portion 134 comprises a recess 135 which is formed such that an upper portion 43 of the support protrusion 4 is at least partially not in contact with the supporting portion 130. In other words, since the recess 135 is provided in the bottom portion 134, the supporting portion gets in contact with two surface sections on the lateral surface of a support protrusion 4. In Figure 8, a support protrusion 4 inserted into the recess 131 of the supporting portion 130 is shown. The bottom portion 134 is supported against the upper portion of the support protrusion 4 on both sides of the recess 135. By providing the recess 135, it is possible to distribute the supporting forces acting on the support protrusion 4 away from the center of the support protrusion 4.

The interior structure of the load carrier coupling as well as the operation and function thereof will be described with reference to Figures 5 to 7 and Figures 9 and 10. In Figure 5, an interior configuration of the supporting section 111 of the housing 110 is shown. The supporting section 111 comprises a protrusion 113 for supporting the lower portion 31 of the coupling body 3 when the same is inserted into the load carrier coupling 100. The protrusion 113 is arranged so as to protrude towards the engaging portion 120. The protrusion 113 comprises a support surface 114 configured to support the lower portion 31 of the ball head 3. In the present configuration, the protrusion 113 is formed by deforming a portion of the housing 110. Therefore, the protrusion 113 is visible as a recess on the outer surface of the housing 110.

As already mentioned above, the bridging portion 116 comprises a rounded shape and consequently a curved inner surface 117. The inner surface 117 is formed according to an outer contour of the ball head 3. The above-described support surface 114 is formed such that it joins with the inner surface 117 at an upper end thereof. The support surface 114 comprises a bowl-like shape and is configured to contact a portion of a spherical zone of the ball head 3 at a lower portion 31 thereof. The support surface 114 and the lower portion of the inner surface of the receiving portion 120 are arranged substantially at the same height when the load carrier coupling 100 is fixedly mounted to the trailer coupling 1. As is indicated by an arrow F1, the receiving portion 120 is pretensioned in a counter-clockwise direction. For that purpose, an urging member (not shown) is provided which urges the receiving portion 120 about the pivot axis P1 in counter-clockwise direction. Furthermore, the lever 144 is also pretensioned or prebiased in the direction of arrow F2 in clockwise direction. Accordingly, the receiving portion 120 and the lever 144 are pretensioned or prebiased in opposite directions about their respective pivot axis.

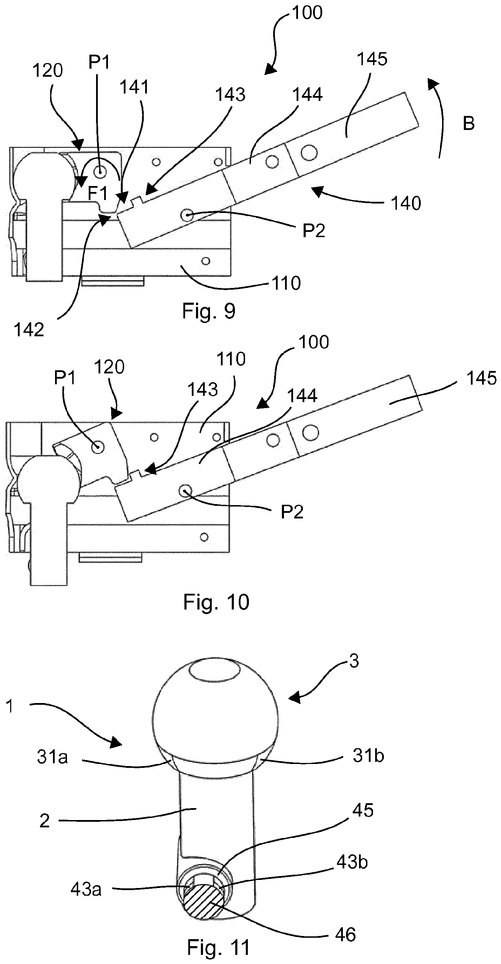

As is shown in Figure 9, the lever 144 comprises a contact portion consisting of a first contact portion 141, a second contact portion 142 and an abutment protrusion 143 that are all provided for contacting specific portions of the receiving portion 120. With respect to the pivot axis P2 of the lever 144, the contact portion and the gripping portion 145 are arranged on opposite sides of the lever 144. In the configuration, the first contact portion 141 is a substantially flat surface which extends in a plane which is parallel to the pivot axis P2 and parallel to the longitudinal direction of the lever 144. The second contact portion 142 is embodied as a rounded edge extending substantially parallel to the pivot axis P2. The first contact portion 141 and the second contact portion 142 are configured such that the surfaces smoothly merge with each other. The abutment protrusion 143 extends substantially perpendicular to the first contact portion 141, that is substantially perpendicular to a longitudinal extension direction of the lever 144. With the above configurations of the lever 144 and of the receiving portion 120, it is possible to hold the receiving portion 120 in an open state in which the second abutment portion 124 abuts and is urged against the abutment protrusion 143. In this way, a pivoting motion of the receiving portion 120 in counter-clockwise direction, that is in the direction of arrow F1, is blocked by the abutment protrusion 143. Since the lever 144 is prebiased and urged about the pivot axis P2 in the direction of arrow F2 or a clockwise direction, the contact portion in the front portion of the lever 144 is held in contact with the lower portion of the receiving portion 120. In this way, the receiving portion 120 is locked in the open state and is only movable in clockwise direction upon application of a force which exceeds a receiving portion pretensioning force acting in the direction of arrow F1. In the open state, a distance between the lower portion 125 of the receiving portion 120 and the protrusion 113 of the housing 110 is large enough to pass the ball head between them.

Figure 5 shows a pre-mounting state of the load carrier coupling 100 in which the load carrier coupling 100 is placed above the trailer coupling. More precisely, the load carrier coupling 100 is positioned such that the load carrier coupling 100 can be inserted on the trailer coupling 1 with a movement in vertical direction.

Figure 6 shows an intermediate state in which the load carrier coupling 100 was already lowered onto the trailer coupling 1 such that the ball head 3 is already positioned in the accommodating space 115. In this state, the upper portion 32 of the ball head 3 is at a position where it has already passed the supporting section 111 and contacts an upper portion of the inner surface 122 of the receiving portion 120. When the ball head 3 is in contact with the inner surface 122 of the receiving portion 120, a movement of the load carrier coupling 100 relative to the trailer coupling 1 in downward direction leads to an application of a pushing force on the inner surface 122 by the ball head 3. The application of such a pushing force is high enough to rotate the receiving portion 120 in a clockwise direction about the pivot axis P1 and against the above-mentioned receiving portion pretensioning force acting in the direction of arrow F1. Upon moving the receiving portion 120 in this way, the second abutment portion 124 gets out of contact with the abutment protrusion 143 and the lower portion of the receiving portion 120 slides along the first contact portion 141 towards the forward end of the lever 144, more precisely towards the second contact portion 142. When the receiving portion 120 is moved further in the clockwise direction, the lower portion of the receiving portion 120 slides along the first contact portion 141 until the bridging portion 126 passes the second contact portion 142 which, as described above, is provided in the form of an edge of the lever 144. As soon as the bridging portion 126 has passed, the second contact portion 142, the second contact portion 142 gets in contact with the second abutment portion 124. As soon as this is the case, the lever 144 exerts a pushing force on the second abutment portion 124 which leads to a movement of the receiving portion 120 against the receiving portion pretensioning force acting in the direction of arrow F1. Accordingly, the receiving portion 120 is actively pushed in a clockwise direction by the lever 144. In this way, a pushing force is applied on the lower portion 31 of the ball neck 3 by a lower portion of the inner surface 122. Therefore, the load carrier coupling 100 is actively pushed downwards. Due to this, the supporting portion 130 is pushed onto an upper portion 43 of the support protrusion 4.

The state as shown in Figure 7 is also referred to as engaging state as the ball head is fixedly locked between the supporting section 111 and the receiving portion 120. Since the second contact portion 142 is in contact with the second abutment portion 124 and since the lever 144 is urged about the pivot axis P2 in the direction of arrow F2 by a locking member pretensioning force, the movement of the receiving portion 120 in the counter-clockwise direction is actively prevented unless a user moves the lever in counter-clockwise direction. With this configuration, a self-locking function of the load carrier coupling 100 is realized. The self-locking function is effected since the lever 144 automatically moves in the direction of arrow A when the bridging portion 126 has passed the second contact portion 142. Accordingly, tightening of the load coupling carrier is possible without an application of a force or with the application of only low force by the user. In order to release the engaging state, a user has to move the lever 144 in the direction as indicated with arrow B in Figure 9. When the lever 144 is rotated in counter-clockwise direction about the pivot axis P2, the second contact portion 142 gets out of contact with the second abutment portion 124. Accordingly, the receiving portion 120 is now free to move in the counter-clockwise direction and the movement of the receiving portion 120 is only limited by the ball head 3 still inserted in the load carrier coupling 100. In order to fixate the lever 144 in the engaging state, a locking lever 146 can be provided on the lever 144 as is shown in Figures 1 and 5. The locking lever 146 is pivotably mounted on the lever 144 and is configured to engage with the housing 110 in order to block a movement of the lever 144. The locking lever 146 can be prebiased by an urging member such as a spring so as to normally engage with the housing 110 as soon as the lever 144 is in the engaging state or position. The locking lever 146 can comprise a latching portion which engages with an edge of an opening provided in the housing 110.

When the load carrier coupling 100 is moved in the upward direction, the ball head 3 is pulled out of the accommodating space with a corresponding movement of the receiving portion 120. A rotation of the receiving portion 120 is possible until the same abuts with the abutment protrusion 143 provided on the lever 144 as can be seen in Figure 10. In the above-described manner, the receiving portion 120 can be brought into the engaging state and the open state and the lever 144 is able to lock the receiving portion 120 in the respective states.

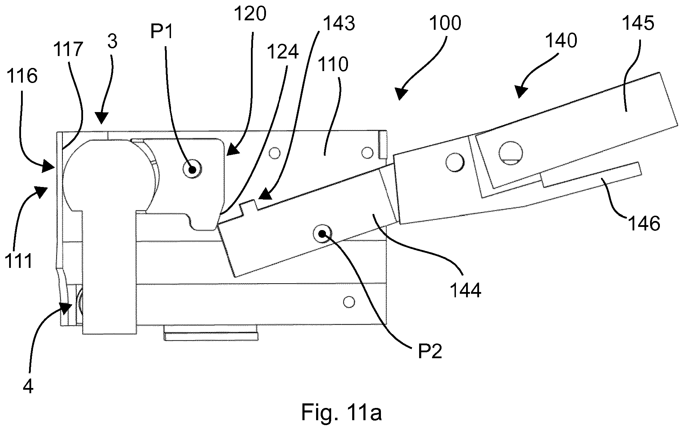

Figure 11 shows the sections of the trailer coupling 1 that are in contact with the load carrier coupling 100 when the same is fixedly mounted on the trailer coupling 1. Due to the above configuration of the present configuration, the ball head 3 is only contacted at two contact sections 31a, 31b by the support surface 114 and the inner surface 122. The supporting portion 130 contacts the upper portion 43 of the support protrusion 4 at two contact section 43a, 43b that are spaced from each other due to the presence of the recess 135. The end surfaces 46 of the support protrusions 4 can get in contact with the inner surface of the side walls 112 respectively during inserting the support protrusions 4 into the supporting portions 130. Accordingly, the end surfaces 46 have a guiding function for positioning the load carrier coupling 100 on the trailer coupling 1.

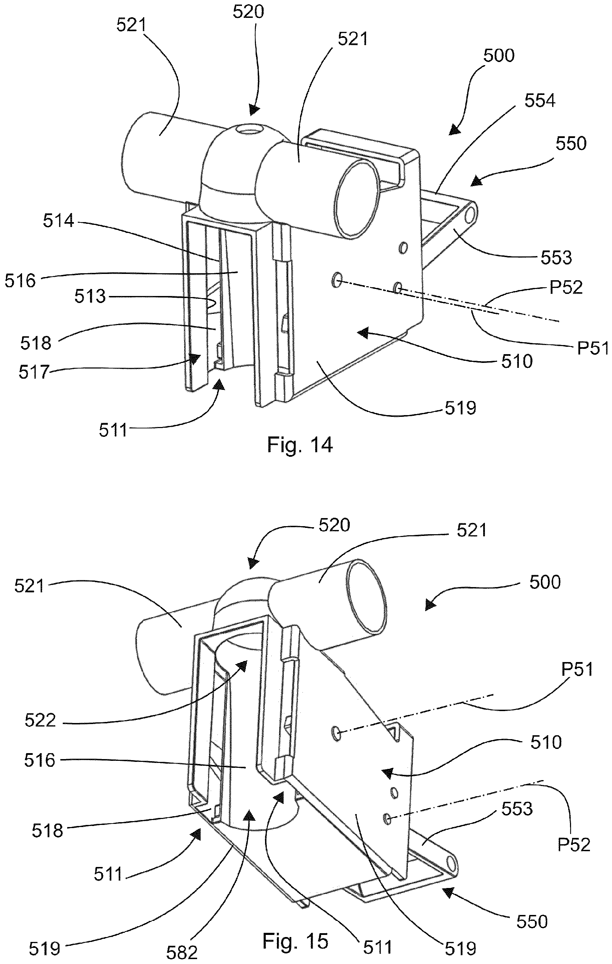

Figure 11a shows a modification of the load carrier coupling described above. The load carrier coupling 100 shown in Figure 11a differs from the above described load carrier coupling in that the protrusion 113 and the support surface 114 on the protrusion 113 are omitted. The inner surface 117 extends along the entire supporting section 111 so that the ball head 3 is in contact therewith only at a side portion of the same. The inner surface 117, i.e. a supporting surface of the ball head, is defined by substantially parallel straight lines which preferably extend in substantially vertical direction when the load carrier coupling is mounted on the trailer coupling. The supporting section 111 formed in this way is configured to contact a middle section of the ball head 3 at which the upper and the lower portion of the ball head 3 meet. Accordingly, the supporting section 111 is configured to get in line contact with the outer surface of the ball head. The housing does not comprise a section that allows a clamping between the receiving member and the supporting section 111 of the housing on diagonally opposite portions of the ball head. Accordingly, the housing is formed such that a movement of the load carrier coupling towards the support protrusions is not blocked by an element of the housing. In other words, the housing 110 is configured such that the housing is not supported by an upper portion of the ball head when the load carrier coupling is fully inserted on the trailer coupling. A load carrier coupling 500 according to the second comparative example will be described with reference to Figures 14 to 28. The load carrier coupling 500 comprises a housing 510, a receiving portion 520 provided at a forward upper end of the housing 510 and a locking mechanism 550. In the present configuration, the receiving portion 520 is integrally formed with the housing 510. Coupling portions 521 are shown as being fixedly coupled to the receiving portion 520. The coupling portions 521 can be portions for fixing the load carrier coupling 500 to further elements such as a supporting structure of a load carrier such as a bike carrier. The receiving portion 520 comprises an accommodating space for accommodating a coupling body 3 embodied as a ball head of the trailer coupling 1. The receiving portion 520 comprises an inner surface which comprises a bowl-like shape and is configured to get in contact with an upper portion 31 of the ball head 3.

On the lower portion of the load carrier coupling 500, an insertion opening 582 is provided into which the ball head 3 of the trailer coupling 1 can be inserted. Accordingly, the load carrier coupling 500 is configured to be inserted on the trailer coupling from above. In order to guide the ball head 3 inserted into the insertion opening 582 towards the accommodating space 522, a guiding surface 516 is provided ranging from the edge of the insertion opening 582 to the inner surface of the receiving portion 520. The guiding surface 516 is curved corresponding to the outer contour of the ball head 3.

The housing 510 further comprises side walls 519. The side walls 519 are arranged substantially parallel with respect to each other and the guiding surface 516 as well as the insertion opening 582 are arranged between the side walls 519. Insertion recesses 511 for accommodating the support protrusion 4 or cylindrical pin 41 therein are provided in the side walls 519. The insertion recesses 511 extend from the lower end of the load carrier coupling 500, more precisely from the lower end of the side walls 519 towards an upper end of the housing 510. The insertion recesses 511 form guiding sections 517 for guiding the cylindrical pin 41 of the trailer coupling 1. Each guiding section is limited by walls 514 and 513 facing each other as well as by a guiding surface 518 which is a portion of an inner surface of the side walls 519. Each guiding surface 518 is configured to provide an abutment for an end surface 46 of the cylindrical pin 41. The walls 513, 514 are configured to get in contact with the lateral surface 44 of the support protrusion or cylindrical pin 41. Accordingly, as soon as the cylindrical pin 41 is inserted into the insertion recess 511, a movement of the load carrier coupling 500 is only possible in the longitudinal extension direction of the insertion recess 511, that is in the vertical direction when the load carrier coupling 500 is mounted on the trailer coupling 1 on a vehicle.

The locking mechanism 550 comprises a lever 553 and a handle 554 coupled to the lever 553. The handle 554 is configured to be grasped and operated by a user in order to release an engagement of the load carrier coupling 500 with the trailer coupling 1.

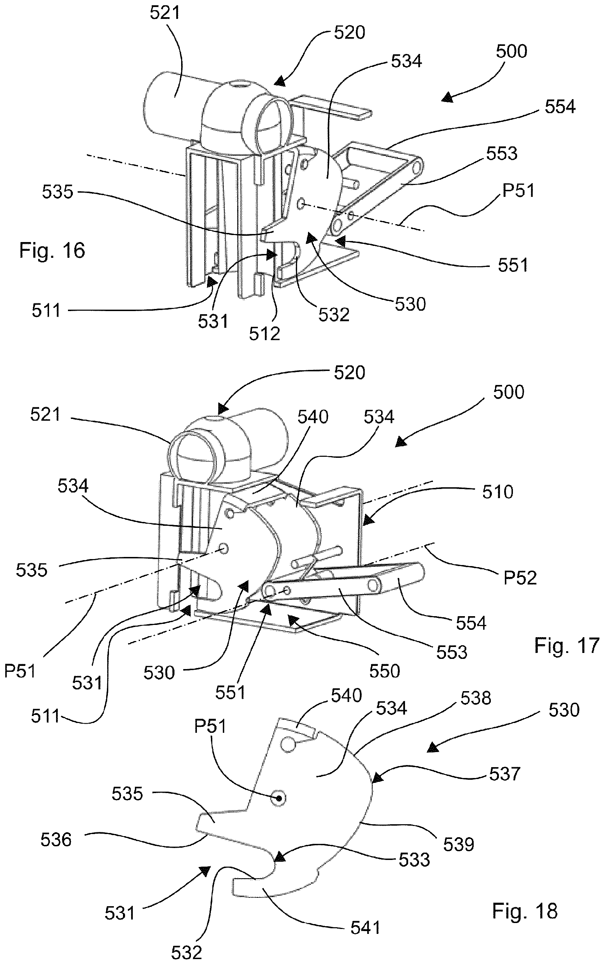

In Figures 16 and 17, an interior configuration of the load carrier coupling 500 is visible. A supporting portion 530, also referred to as supporting member, is arranged in the housing 510 pivotably about a pivot axis P51. The supporting portion 530 comprises two plates 534 which are arranged parallel with respect to each other at a predetermined distance, more precisely such that they are arranged on lateral outward sides of the insertion recesses 511. The plates 534 are pivotably coupled to the housing 510 by means of pivot pins (not shown) and are furthermore coupled to each other by means of a bridging portion 540 which will also be referred to as abutment section due to its function which will be described later.

The configuration of the plates 534 is shown in Figure 18 in greater detail. The plates 534 of the supporting portion 530 comprise a recess 531 for accommodating the cylindrical pin 41. Thus, the portion of the supporting portion 530 in which the recess 531 is provided can also be referred to as engaging section of the supporting portion 530. The recess is formed between a force receiving portion 535 and a lower contact portion 541. In the configuration, the force receiving portion 535 is a protrusion. The recess 531 comprises an inner surface 532 ranging from the force receiving portion 533 via a bottom portion 533 of the recess 531 to an inner surface of the lower contact portion 541. The surface of the force receiving portion 535 joining the inner surface of the recess 531 can also be referred to as sliding surface 536.

Besides the above-described engaging section in which the recess 531 is provided, the supporting portion 530 further comprises an operating section which is provided for affecting a movability of the supporting portion 530 in the housing 510. The operating section comprises a cam surface 537 which is formed on each lateral outer side of the plates 534. The cam surface 537 comprises a first surface area 538 and a second surface area 539. In the present configuration, both surface areas 538 and 539 are curved and smoothly join at an intermediate section. The cam surface 537 is configured to receive a pushing force applied thereon by the locking mechanism 550.

As already mentioned above, the locking mechanism 550 comprises a lever 553 and a handle 554. The lever 553 is mounted to the housing 510 pivotably movable about a pivot axis P52. The handle 554 is arranged at a first end portion of the lever 553 and a force application member 551 is provided at the opposite second end portion of the lever 553. In the configuration, the lever 553 is formed by means of two elongate plates that are arranged at a distance with respect to each other. The force application member 551 is a cylindrical element which couples the plate members at the second end portion of the lever 553. The handle 554 is also arranged between the plate portions at the first end portion of the lever 553. The lever 553 is pretensioned by means of an urging member 552 embodied as a spring. More precisely, the lever 553 is pretensioned such that its forward end portion with the force application member 551 is urged in clockwise direction in the drawings. Accordingly, the force application member 551 is normally pushed on the cam surface 537 of the supporting portion 530. In other words, the force application member 551 can only get out of contact with the cam surface 537 when a user operates the lever 553 by grasping the handle 554 and moving the lever 553 against the force of the urging member 552 in counter-clockwise direction in the drawings. An interaction between the lever and the specifically designed cam surface 537 generate different urging forces or moments acting on the receiving portion 520 and urging the same either in clockwise or in counter-clockwise direction.

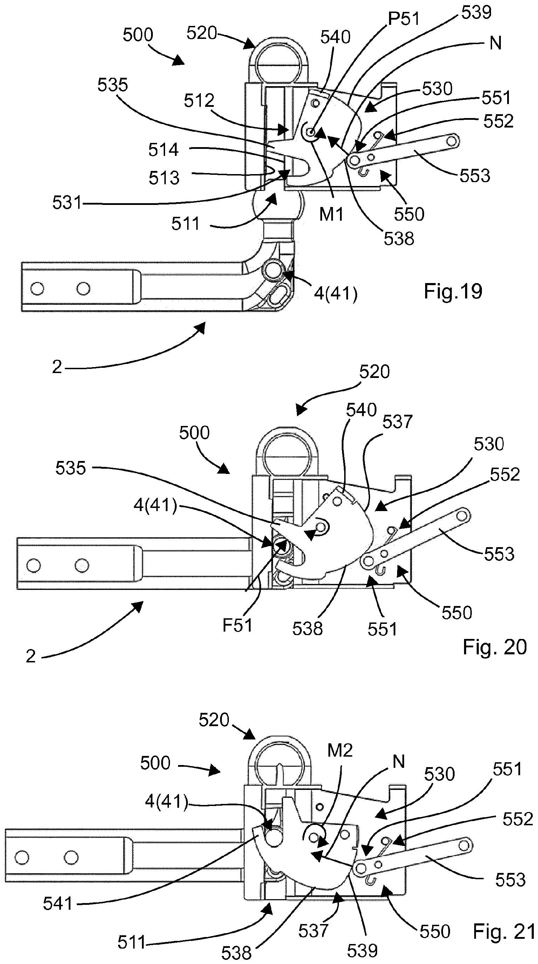

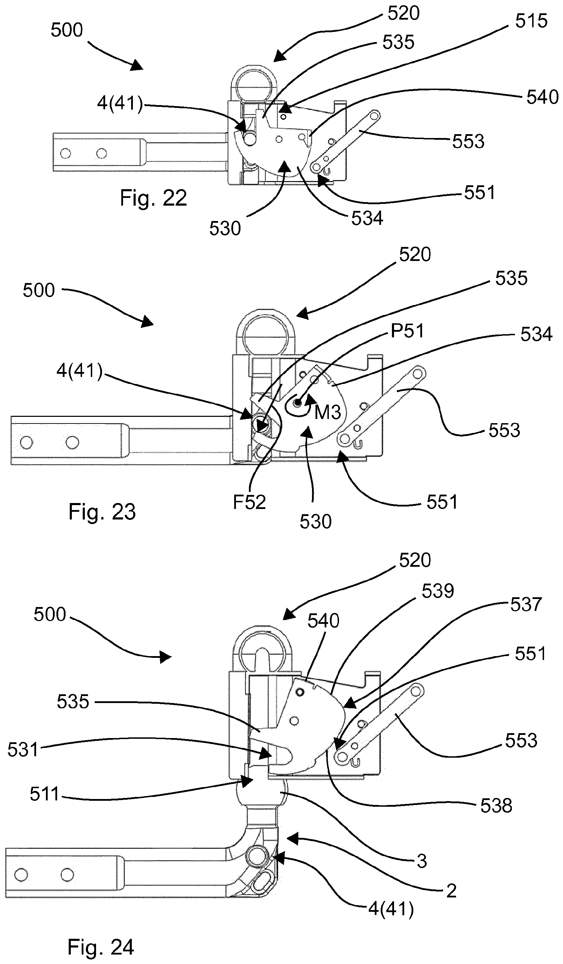

The supporting portion 530 is movable between an open state and an engaging state. The open state is shown in Figure 19. In this state, the above-described abutment section 540 is in contact with a contact portion 515 (shown in Figure 22) of the housing 510. In this way, a further movement of the receiving portion 520 in counter-clockwise direction is prevented. In order that the receiving portion 520 is securely held in the open state, the force application member 551 contact the first surface area 538 of the cam surface 537. As is shown in Figure 19, the first surface area 538 comprises a shape such that a normal force N applied on the first surface area 538 acts in a direction which passes the pivot axis P51 on the upper side. In this way, a moment M1 is generated in counter-clockwise direction about the pivot axis P51 so that the receiving portion 520 is urged in counter-clockwise direction.

As is also shown in Figure 19, the force receiving portion 535 of the receiving portion 520 is positioned besides the insertion recess 511 such that an insertion of the cylindrical pin 41 into the insertion recess 511 leads to a contact between the cylindrical pin 41 and the force receiving portion 535. Thus, when the load carrier coupling 500 is inserted on the trailer coupling 1, the support protrusion 4 in the form of a cylindrical pin 41, more precisely the lateral surface 44 of the cylindrical pin 41 gets in contact with the above-described sliding surface 536 of the force receiving portion. As soon as such a contact is established, a further insertion of the load carrier coupling 500 onto the trailer coupling 1 in downward direction leads to an application of a pushing force F51 acting on the force receiving portion 535 which leads to a movement of the receiving portion 520 in clockwise direction. Figure 20 shows a state, in which the cylindrical pin 41 already applied a pushing force F51 on the force receiving portion and in particular a state in which the receiving portion 520 was already rotated in clockwise direction to a certain extent.

As is also visible from Figure 20, the recess 531 approaches the cylindrical pin 41 from below due to the rotation of the receiving portion 520. When the load carrier coupling 500 is further lowered onto the trailer coupling 1, the state as shown in Figure 21 is reached. In this state, the ball head 3 contacts the inner surface of the receiving portion 520 and is thus supported on the ball head 3. In this state, the supporting portion 530 is rotated into an engaging state in which the recess 531 is brought into a position in which the cylindrical pin 41 is accommodated in the recess 531 and in contact with the inner surface 532 of the recess 531. In this connection it is noted that the recess 531 comprises a shape such that the cylindrical pin 41 accommodated therein is contacted at two contact sections which are spaced from each other.

As can be gathered from Figure 21, the second surface area 539 of the cam surface 537 is configured such that a normal force applied on the second surface area 539 by the force application member 551 passes the pivot axis P51 on lower side thereof so that a moment in the direction of arrow M2 is generated on the supporting portion 530. Accordingly, the normal force N now applied on the second surface area 539 urges the supporting portion 530 in clockwise direction so that the supporting portion 530 exerts a pushing force on the cylindrical pin 41. The locking mechanism 550 and the cam surface 537 are configured such that the normal force applied on the cam surface 537 in the engaging state is high enough to prevent a movement of the load carrier coupling 500 in the upward direction or disengaging direction from the trailer coupling 1. Accordingly, the load carrier coupling 500 is securely fixed on the trailer coupling 1 when the supporting portion 530 is in the engaging state. Due to the above-described configuration of the cam surface 537, the force application member 551 is able to ride on the cam surface 537 during the movement of the supporting portion 530 from the open state into the engaging state. Therefore, the supporting portion 530 is automatically locked in the engaging state. In other words, no further action is necessary for locking the supporting portion 530 in the engaging state. Accordingly, the mechanism has a self-locking capability so that tightening of the load carrier coupling is possible without the application of a force of a user.

In order to dismount the load carrier coupling 500 from the trailer coupling 1, the user simply has to move the lever 553 in counter-clockwise direction into a release position in which the force application member 551 is out of contact with the cam surface 537 as is shown in Figure 22. If this is the case, the supporting portion 530 is free to be moved towards the open state in counter-clockwise direction in Figure 22 by a movement of the cylindrical pin 41.

Figure 23 shows a state in which the load carrier coupling 500 has already been slightly moved in the upward direction. The cylindrical pin 41 contacts the lower contact portion 541 of the supporting portion 530 and applies a force F52 on the same. This force induces a rotation of the supporting portion 530 in counter-clockwise direction towards the open state. The open state is reached when the abutment section 540 contacts the contact portion 515. In this state, the lower contact portion 541 is brought out of the way of the cylindrical pin41 so that the load carrier coupling 500 can be disengaged from the trailer coupling 1. Furthermore, the user can now release the lever 553 which will again contact the cam surface and apply a pushing force on the first surface area 538 which keeps the supporting portion 530 in the open state.

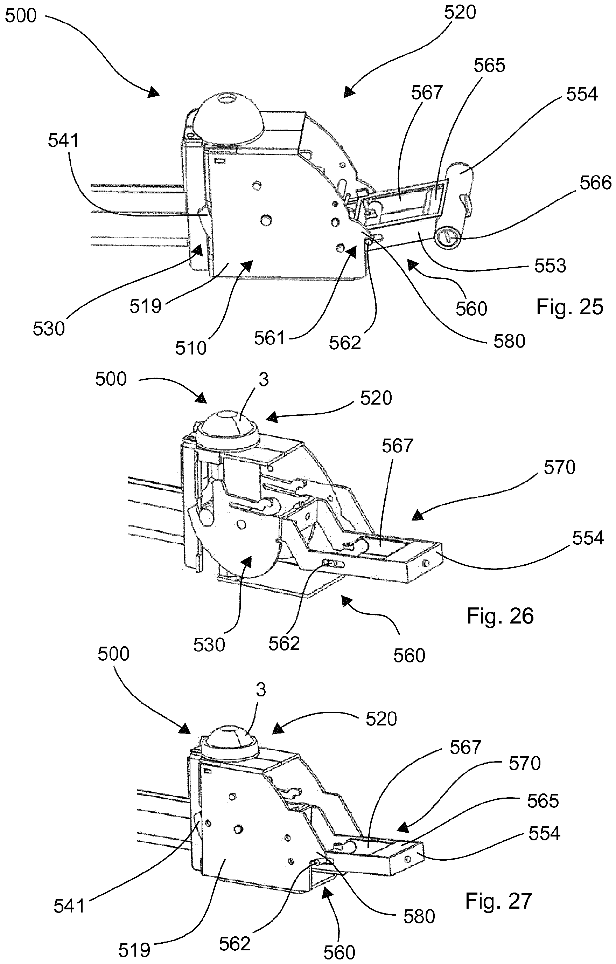

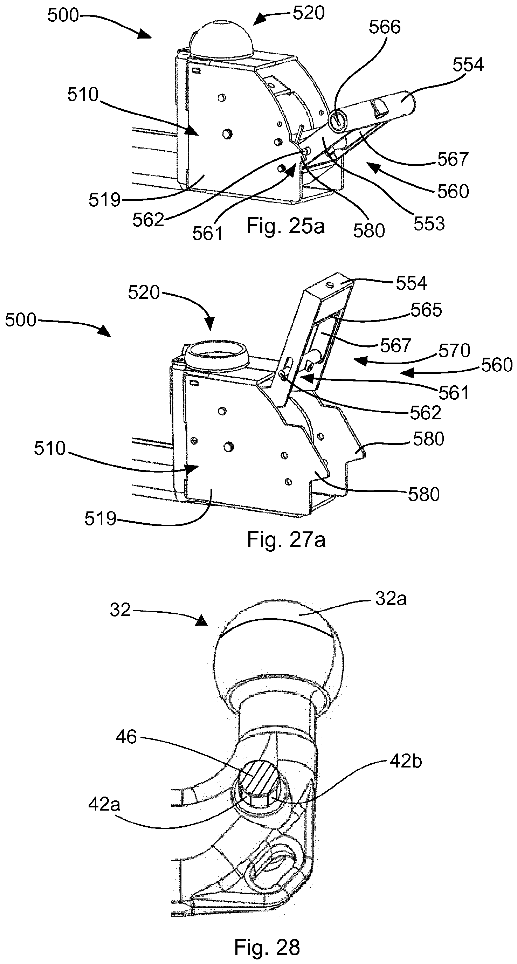

Figure 25 shows a slight modification of the load carrier coupling 500 as described above. In Figure 25, an additional locking mechanism 560 is shown. The locking mechanism 560 comprises an engaging member 561 embodied as a movable pin 562. The pin 562 is coupled to an operating member 565 via a link 567. The operating member 565 is mounted on the handle 554 so as to be movable in a radial direction of the handle 554. The operating member 565 is prebiased by a spring in locking direction of the pin 562. The pin 562 is guided in longitudinal slots provided in the plates of the lever 553. By squeezing the operating handle 554 and the operating member 565, the pin 562 is moved. As is also shown in Figure 25, the housing 510 comprises a contact portion 580 which is formed in the side wall 519. The contact portion 580 provides an abutment for the pin 562. Thus, when the lever 553 is in the position as shown in Figure 25 and the operating member 565 is not operated, a movement of the lever 553 in the upward direction is prevented by a contact between the pin 562 and the contact portion 580. When the operating member 565 is operated, the pin 562 is brought into a position in which it is able to pass the contact portion 580 and the lever 553 can be brought into the release position as shown in Figure 25a.

A further modification of the load carrier coupling 500 is shown in Figures 26, 27 and 27a. Contrary to the above-described configuration and the modification, the locking mechanism 560 as shown comprises a lever 570 which is coupled to the supporting portion 530 so as to be integrally movable with the same. The remaining features of the locking mechanism 560 are the same as those of the modification as shown in Figures 25 and 25a. Thus, an operation of the lever 570 is directly transferred onto the supporting portion 530.

Figure 28 shows the portions on the trailer coupling 1 that are contacted by the load carrier coupling 500 according to the second comparative example and its modifications. The ball head 3 is contacted at an upper portion 32 thereof at contact section 32a which is a spherical zone on the ball head 3. The cylindrical pin 41 is contacted at two contact sections 42a, 42b on the lower portion 42 of the cylindrical pin 41. The guiding surfaces 518 are positioned such that they face the end surfaces 46 of the cylindrical pins 41 when the load carrier coupling 500 is mounted on the trailer coupling 1. A contact between the end surfaces 46 and the guiding surfaces 518 can occur during use of the load carrier coupling 500, in particular during driving the vehicle on which the trailer coupling 1 with the load carrier coupling 500 is provided.

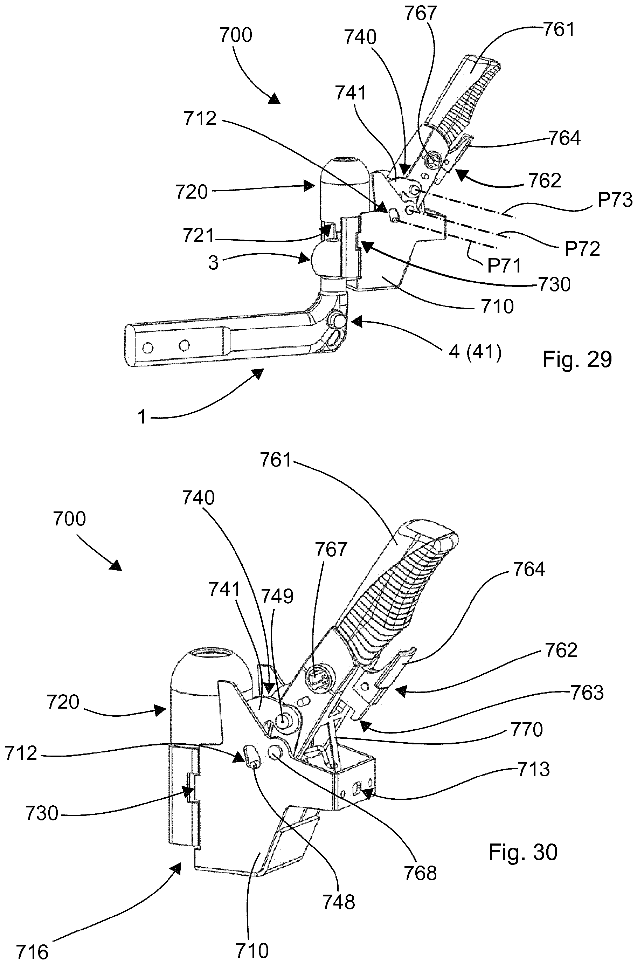

A possible configuration as well as modifications of a load carrier coupling according to the third comparative example will be described with reference to Figures 29 to 38. The load carrier coupling 700 according to the third comparative example comprises a housing 710, a receiving portion 720, a supporting portion 730 and an engaging member 740.

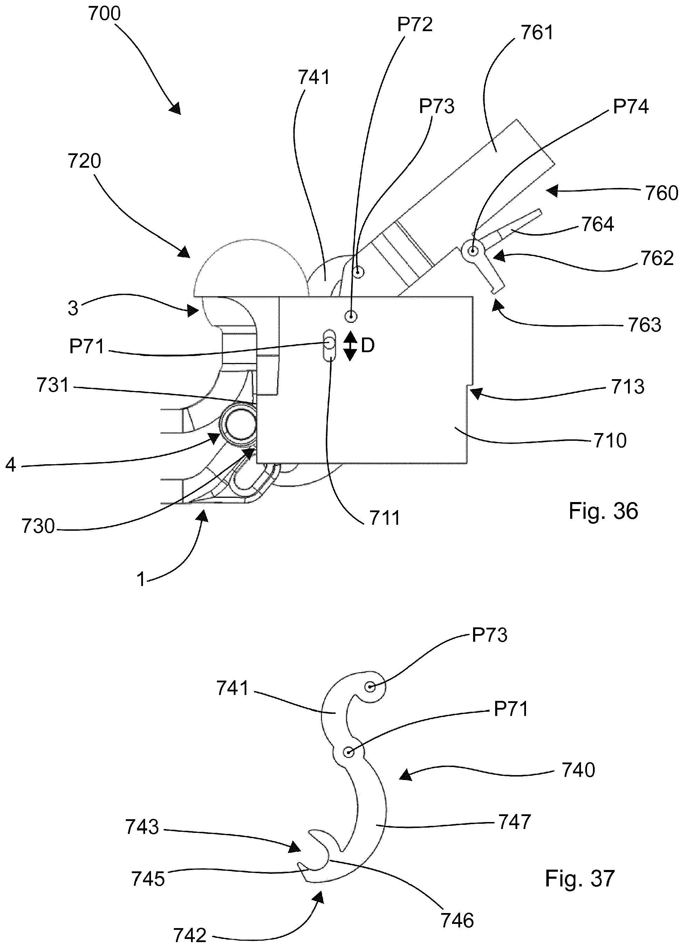

The housing 710 comprises a guiding recess 712. In the configuration as shown in Figures 29 to 35, the guiding recess 712 is an opening comprising five rounded corners with substantially straight portions between the rounded corners. According to a modification as shown in Figure 36, the guiding recess 711 can also be a substantially vertical elongate slot. The guiding recess 712 is configured to accommodate a pivot P71 which is embodied as a pivot pin 748 coupled to the engaging member 740. In this way, the engaging member 740 is pivotably supported in the guiding recess 712. More precisely, each guiding recess 712 supports the pivot pin 748 such that the same can move rotatably and translatory. The housing 710 further comprises an engaging recess 713 which is configured to cooperate with a locking mechanism 762 that will be described later.

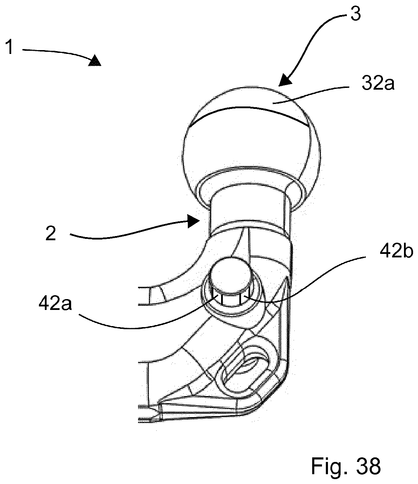

The load carrier coupling 700 further comprises the above-mentioned receiving portion 720 which is provided on the housing 710 at an upper portion of the housing 710. The receiving portion 720 is configured to accommodate a portion of the coupling body 3. The coupling body 3 is embodied as a ball head. The receiving portion 720 comprises an accommodating section 721 forming an accommodating space for receiving the ball head 3. The accommodating section 721 is formed such that the receiving portion 720 can get in contact with a spherical zone of the ball head 3. When the load carrier coupling 700 is mounted on the trailer coupling 1 or is inserted thereon, the receiving portion 720 contacts a ring-like outer surface 32a on the upper portion of the ball head 3 as is shown in Figure 38.

The housing 710 further comprises the supporting portion 730. The supporting portion 730 comprises an abutment surface 731 for an abutment with the support protrusion 4 or cylindrical pin 41. In the present configuration, the abutment surface 731 defines a substantially straight abutment surface which extends in vertical direction when the load carrier coupling 700 is mounted or inserted on the trailer coupling 1. The purpose of the abutment surface 731 is to contact the support protrusion 4 in order to prevent a rotation of the load carrier coupling 700 about the trailer coupling 1 when the same is inserted on the trailer coupling 1 and to provide a counter surface for the support protrusion 4 when a tightening force is applied on the same.

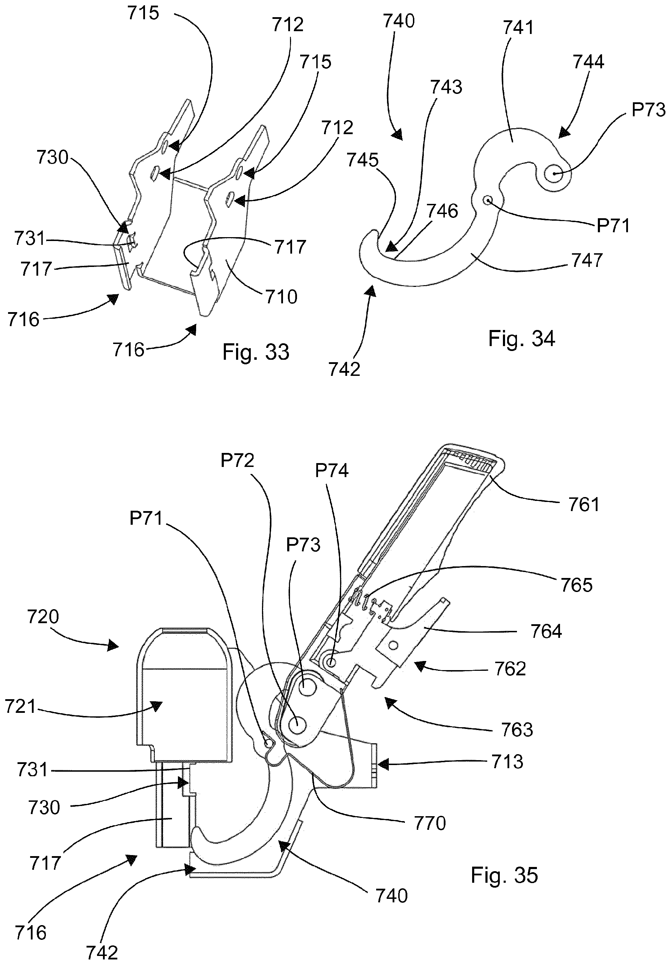

An example of a construction of the housing 710 is shown in Figure 33. Besides the above-described features of the housing 710, the housing further defines bearing openings 715 and guiding sections 716 each of which comprising a guiding surface 717. The guiding surfaces 717 are provided so as to face each other and are configured so as to provide an abutment for end surfaces 46 of the support protrusion 4. The guiding surfaces 717 and the abutment surfaces 731 are arranged such that the abutment surfaces 731 can get in contact with a lateral outer surface 44 of the support protrusion 4 as shown in Figures 12 and 13. The abutment surfaces 731 and the guiding section 716 are formed in side walls of the housing 710. The side walls are formed form a sheet metal by cutting and bending.

The load carrier coupling 700 further comprises an engaging member 740 which is adapted to engage with the support protrusion 4 and to apply a tightening force on the support protrusion 4 by a movement including a pivoting movement and a translatory movement. The engaging member 740 is arranged pivotably and slidably moveable in the guiding recess 712. The pivot pin 748 is also referred to as pivot P71 in the following. The construction of the engaging member 740 is shown in Figure 34 in greater detail. The engaging member 740 is a plate-like lever 741 which can be formed from a sheet metal by cutting for instance. The lever 741 is a substantially flat member which comprises a meandering shape.

The lever 741 comprises an engaging portion 742 which is configured to engage with the support protrusion 4. The engaging portion 742 comprises a hook-like section defining a recess 743 with a curved inner surface having a first contact area 745 and a second contact area 746 which contact the support protrusion 4 at two different contact sections. The first contact area 745 and the second contact area 746 are spaced from each other on the inner surface of the recess 743. The engaging portion 742 is coupled to a pivot portion of the lever 741 by means of a deformation portion 747. At the pivot portion, the lever 741 comprises the pivot P71 for supporting the lever 741 in the guiding recess 712 or the guiding recess 711. The deformation portion 747 is configured to be flexible in longitudinal direction of the engaging member 740. Accordingly, a distance between the recess 743 and the pivot P71 can increase by a deformation of the deformation portion 747 when a tensile load is applied on the engaging member 740. As is shown in Figure 34, the deformation portion comprises a curved shape.

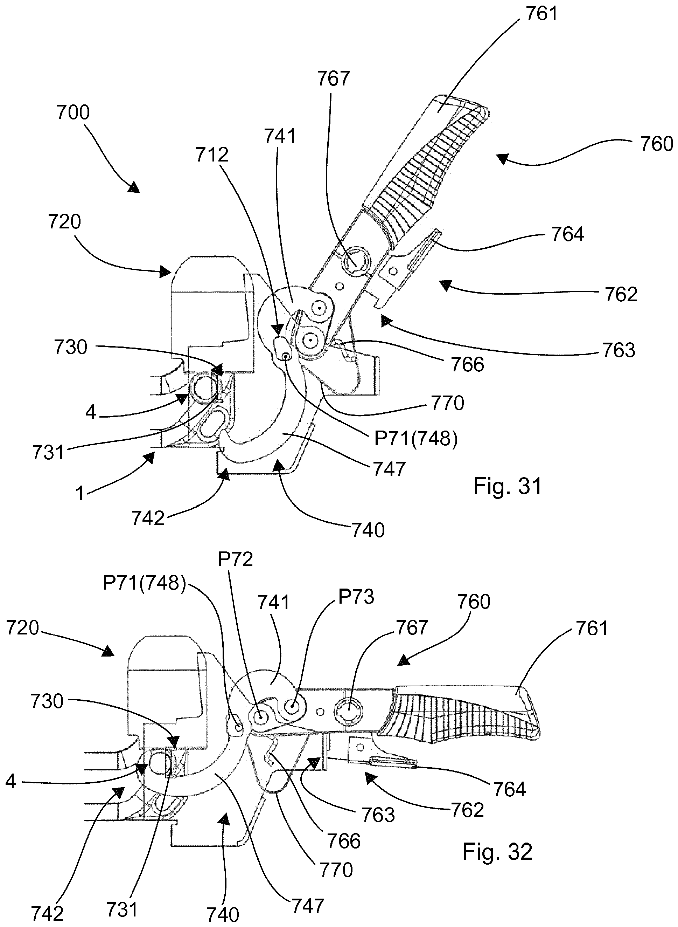

The engaging member 740 further comprises a coupling portion 744 which comprises a pivot P73. By means of the pivot P73, the engaging member 740 is coupled to an operating member 760 which is embodied as an operating lever. The operating lever 760 is configured for operating the engaging member 740. The operating lever 760 is pivotably movable about a pivot P72 which is supported in the above-described bearing opening 715. Accordingly, the operating lever 760 is pivotably held on the housing 710. The operating lever 760 and the engaging member 740 form a knee joint mechanism. As is shown in Figure 29, the operating lever 760 and the engaging member 740 are pivotable about parallel pivot axes that are referenced with the reference signs relating to the corresponding pivot pins or pivots P71, P72 and P73. In the construction as shown in Figures 29 to 35, the pivot P72 is located between the pivot P71 and the pivot P73 in such a manner that the lever 760 can be brought into an over-center position in which a connection line between the pivots P71 and P73 is located below pivot P72. Such an over-center position is possible due to the presence of the deformation portion 747. The over-center position in which the mechanism is self-locked is shown in Figure 32.

In order to provide an additional safety feature, the load carrier coupling 700 comprises a locking mechanism 762 which comprises a latching portion 763 which is embodied as a hook that is configured to engage with the engaging recess 713 formed in the housing 710. The locking mechanism 762 is embodied as a lever which comprises an operating portion 764 and which is arranged pivotable about a pivot P74. The pivot P74 is formed by a pivot pin which is rotatably held in the operating lever 760, more precisely near a handle portion 761 which is configured to be grasped by a user for operating the operating lever 760. The locking mechanism 762 is prebiased by an urging member 765 embodied as a spring so as to seek an engaging state in which the latching portion 763 or hook is urged towards an engagement with the engaging recess 713. Accordingly, when the operating lever 760 is brought into a tightening state as shown in Figure 32, the latching portion 763 will remain in engagement with the engaging recess 713 unless the operating portion 764 is operated.

In order to lock a movement of the locking mechanism 762, a further locking mechanism 767 can be provided for locking a movement of the locking mechanism 762, more precisely the lever of the locking mechanism 762. This additional locking mechanism 767 can be a mechanism which can be operable by means of a key.

A mounting procedure of the load carrier coupling 700 on a trailer coupling 1 will be described with reference to Figures 29, 31 and 32. As is shown in Figure 29, the load carrier coupling 700 is in a first step arranged above the trailer coupling 1, more precisely above the ball head 3. The trailer coupling 700 is then moved downwards onto the trailer coupling 1 until the ball head 3 gets into contact with the receiving portion 720, more precisely with an inner surface of the accommodating section 721 which gets in contact with an upper portion or spherical zone of the ball head 3. The state in which the ball head 3 is received in the receiving portion 720 is shown in Figure 31. In this state, the load carrier coupling is held in a defined position although it is not tightened in this state.

In order to fixedly secure the load carrier coupling 700 on the trailer coupling 1, the operating lever 760 is moved downwards into a locking state as is shown in Figure 32. Due to this movement of the operating lever 760, the above-described shape of the guiding recess 712 and the specific fixation of the engaging member 740 on the housing 710 and the operating lever 760, the lever 741 is moved so as to perform a pivoting movement as well as a translatory movement which are superimposed. More precisely, the pivot pin 748 is moved along a side surface of the guiding recess 712 from the position as shown in Figure 31 to the position as shown in Figure 32. In the shown configuration, the pivot pin 748 is moved slidingly along the inner surface of the guiding recess 712 in clockwise direction. The inner surface of the guiding recess 712 is formed such that in a first section of the movement of the pivot pin 748, the engaging portion 742 is brought behind the support protrusion 4 whereas in the next section of the movement a tightening force is generated by guiding the pivot pin 748 such that a tensile force is generated in the engaging member 740 in order to pull the support protrusion 4 towards the above-described supporting portion 730, more precisely to push the same against the abutment portion 731. Due to this construction, the support protrusion 4 is fixedly held between the engaging portion 742 and the abutment portion 731. The mechanism has such a configuration that the support protrusion 4 is not only urged towards the abutment portion 731 but also urged towards the receiving portion 720 so that an upper inner surface of the receiving portion 720 is pushed against the ball head 3 thereby fixedly clamping the load carrier coupling 700 to the trailer coupling 1.

In order to move the pivot pin 748, more precisely the pivot P71 along the inner surface of the guiding recess 712, the load carrier coupling 700 comprises an urging member 770 which is embodied as a spring element which is shown in detail in Figure 35. An end portion of the urging member 770 is fixedly coupled to the operating lever 760 at a lower portion thereof. A free end of the urging member 770 is in contact with the pivot P71 such that a movement of the lever 760 leads to a movement of the pivot P71 in the guiding recess 712. In this way, it is secured that the pivot P71 performs the desired movement upon operation of the operating lever 760 so that the engaging portion 742 is brought into the positions as needed for tightening the load carrier coupling 700.

A modification of the load carrier coupling 700 is shown in Figured 36 and 37. The modification mainly differs from the above-described configuration in that the guiding recess 711 is provided as a straight slot which is arranged in substantially vertical direction of the load carrier coupling 700 when the same is mounted on the trailer coupling 1. The modification also differs from the above-described configuaration in the shape of the engaging member 740 which comprises an engaging portion 742 with a fork-like shape. The function is essentially the same as described above. Due to the formation of the guiding recess 711 as a straight slot, the pivot P71 is movable in vertical direction and rotatable. This construction also allows a movement of the engaging member 740 in order to bring the engaging portion 742 into engagement with the support protrusion 4.

In Figure 38, the areas on the trailer coupling 1 that are contacted by the load carrier coupling 700 when the same is mounted on the trailer coupling 1 are shown. The support protrusion 4 is contacted at the lower portion, more precisely at two contact sections 42a and 42b. The ball head 3 is contacted on its upper portion depending on the formation of the inner surface of the receiving portion 720. In the present configuration, the ball head 3 is contacted at spherical zone 32a on the upper portion of the ball head 3.

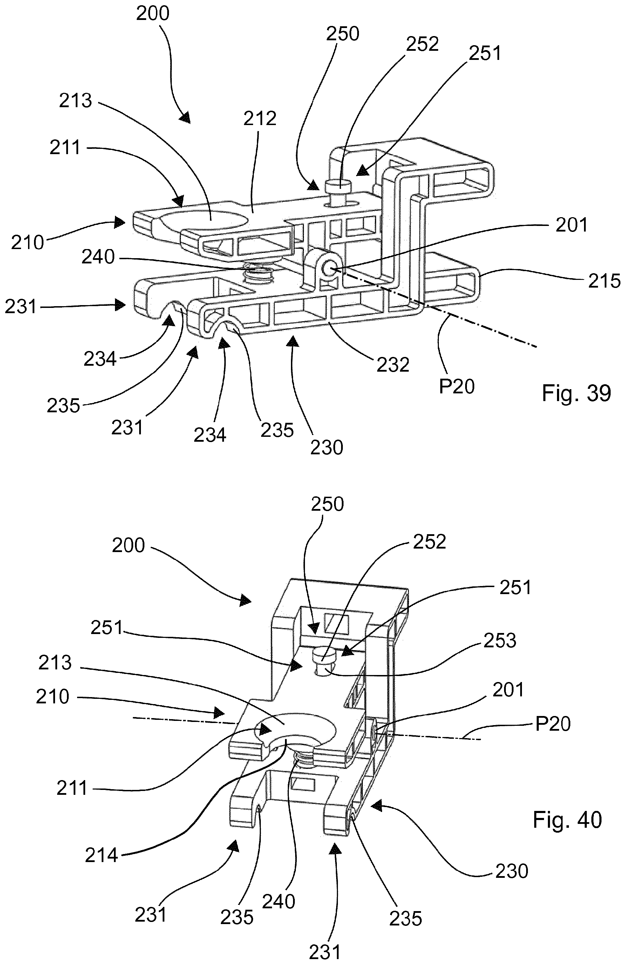

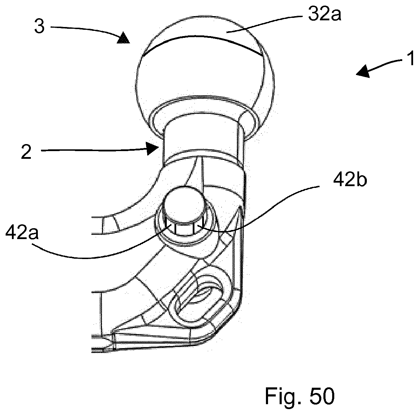

Configurations as well as modifications of a load carrier coupling according to the fourth comparative example will be described with reference to Figures 39 to 57. Each load carrier coupling is configured to be used in connection with the above described trailer coupling 1 as mentioned in connection with the other comparative examples.

Each configuration of a load carrier coupling 200, 300, 400 according to the fourth comparative example comprises a receiving portion 210, 310, 410 and a supporting portion 230, 330, 430. Each receiving portion 210, 310, 410 comprises an accommodating section 211, 311, 411 configured to accommodate a portion of the coupling body 3. The coupling body can be a coupling body as described above with respect to the other concepts and can be a ball head. Each supporting portion 230, 330, 430 comprises an engaging section 231, 331, 431 which is configured to contact a support protrusion 4, a cylindrical pin 41 in the present configurations. The receiving portions 210, 310, 410 and the supporting portions 230, 330, 430 are pivotably coupled to each other by means of pivots 201, 301, 401 such that a distance between the accommodating sections 211, 311, 411 and the engaging sections 231, 331, 431 can be varied by pivoting the receiving portions or the supporting portions about the pivot 201, 301, 401 between an open state in which the distance between the accommodating section 211, 311, 411 and the engaging section 231, 331, 431 is such that the load carrier coupling 200, 300, 400 is insertable on the trailer coupling 1 and a closed state in which the distance is such that the load carrier coupling 200, 300, 400 inserted on the trailer coupling 1 cannot be removed from the trailer coupling 1. Accordingly, in the closed state the distance is greater or smaller than in the open state depending on the configuration of the load carrier coupling 200, 300, 400.

In each configuration according to the fourth comparative example, the load carrier coupling 200, 300, 400 is configured such that in a condition in which the load carrier coupling 200, 300, 400 is mounted on the trailer coupling 1, the pivot 201, 301, 401 is located at a position which is vertically between the coupling body 3 and the support protrusion 4.

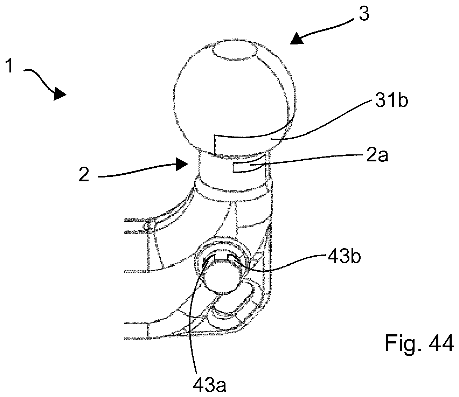

A first configuration of a load carrier coupling according to the fourth comparative example will be described with reference to Figures 39 to 44. Besides the above-mentioned features that are common to all configurations according to the fourth comparative example, the receiving portion 210 is a portion of a receiving member 212. The accommodating section 211 comprises a contact surface 213 that is oriented in the upward direction and is thus oriented away from the supporting portion 230. Accordingly, the contact surface 213 is configured to contact the coupling body or ball head 3 from below. As is shown in Figure 39 and Figure 40, the receiving portion 210 comprises a fork-like shape allowing to accommodate a portion of the neck of the trailer coupling 1 in a recess formed between two prongs of the receiving portion 210. The contact surface 213 continuously extends from one of the prongs to the other prong. Accordingly, the contact surface 213 can get in contact with an area 31b on the lower portion of the spherical surface of the ball head 3 as indicated in Figure 44. A side wall of the recess provided in the accommodating section 211 for accommodating a portion of the neck forms a neck contact surface 214 which is configured to contact a neck contact section 2a as shown in Figure 44.

The supporting portion 230 is a portion of a supporting member 232 and comprises engaging sections 231 which are configured to contact the support protrusion 4 or cylindrical pin 41. In the configuration as shown in Figures 39 to 43 each engaging section 231 is configured to contact the support protrusion 4 from above. More precisely, the supporting portion 230 and the engaging section 231 are configured such that the support protrusion is contacted at its lateral surface 44 at two different contact sections 43a, 43b on the upper portion 43 of the support protrusion 4. The engaging sections 231 comprise recesses 234 each of which having contact surfaces 235. Each recess 234 and its contact surface 235 is formed such that the support protrusion 4 is contacted at two contact sections 43a, 43b which are spaced from each other along the lateral surface 44. The receiving member 212 and the supporting member 232 are hingedly coupled to each other by means of the pivot 201 such that the receiving member 212 is pivotable about a pivot axis P20 with respect to the supporting member 232. In the present configuration, the receiving member 212 and the supporting member 232 are arranged in a scissor-like style in which the receiving members cross each other when viewed from the side. Furthermore, the receiving member 212 and the supporting member 232 are embodied as levers.

The load carrier coupling 200 further comprises an urging member 240 for applying an urging force on the supporting portion 230 and the receiving portion 210. The urging member 240 is arranged to urge the supporting portion 230 and the receiving portion 210 towards the closed state. In the configuration, the urging member is a spring.

The load carrier coupling 200 further comprises a locking mechanism 250 for releasably locking a movement between the receiving portion 210 and the supporting portion 230 such that a movement towards the open state is blocked. The locking mechanism 250 comprises a tightening member 251 with an abutment portion 252. The position of the abutment portion 252 is variable by rotation of the tightening member 251 about its own longitudinal axis. The tightening member 251 comprises a link 253 which is threadedly engaged with the supporting member 232 so that a rotation of the same leads to a movement of the abutment portion with respect to the supporting member 232.

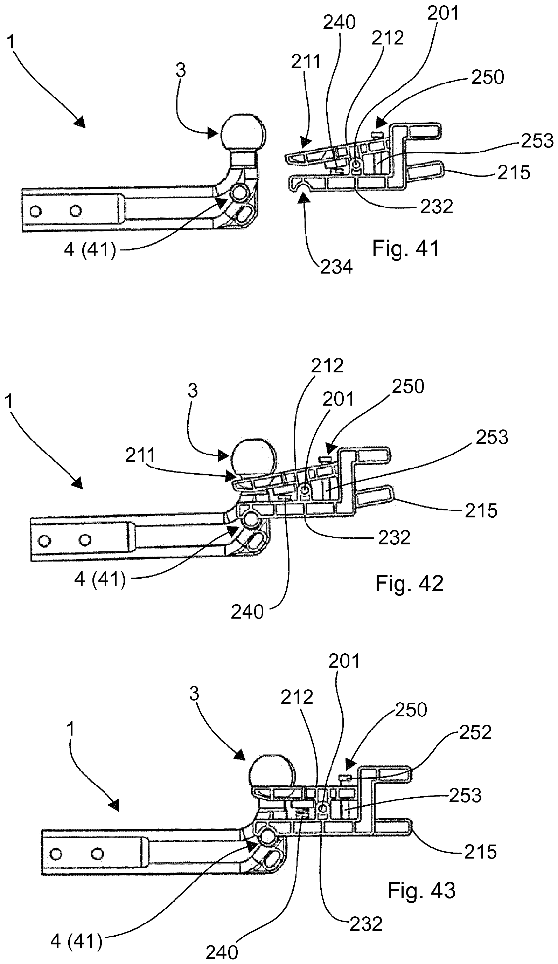

Figures 41 to 43 show a mounting process of the load carrier coupling. First, an operating portion 215 of the receiving member 212 is operated by a user in order to rotate the receiving portion 211 towards the supporting portion 230 as shown in Figure 41. In this state, it is possible to move the receiving portion 210 and the supporting portion 230 between the lower portion of the ball head 3 and the lateral surface 44 of the support protrusion 4 and to bring the supporting portion 230 in contact with the support protrusion 4 as shown in Figure 42. When the operating portion 215 is released, the receiving portion 211 is rotated away from the supporting portion 230 and contacts the ball head 3 from below as shown in Figure 43. After that, the locking mechanism 250 is operated such that the abutment portion 252 contacts the receiving member 212. In this way, a movement of the receiving portion 230 away from the ball head 3 is blocked und the load carrier coupling 200 is securely mounted on the trailer coupling 1.

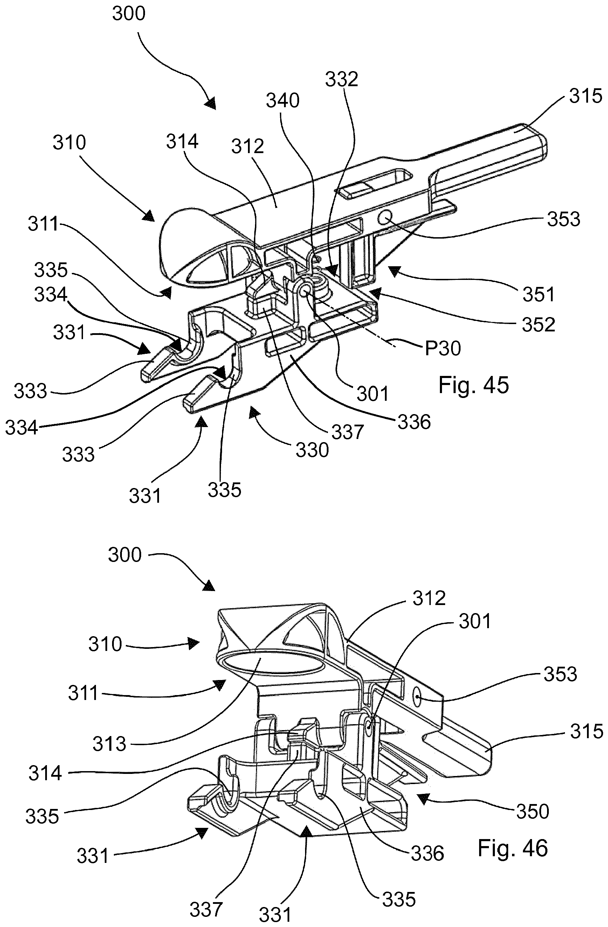

A second configuration of a load carrier coupling according to the fourth comparative example will be described with reference to Figures 45 to 50. Besides the above-mentioned features that are common to all configurations according to the fourth comparative example, the receiving portion 310 is a portion of a receiving member 312. The receiving portion 310 comprises an accommodating section 311 having a contact surface 313 that is oriented in the downward direction. Accordingly, the contact surface 313 is configured to contact the coupling body or ball head 3 from above. As is shown in Figure 45 and Figure 46, the receiving portion 310 comprises a bowl-like shape.

The supporting portion 330 is a portion of a supporting member 336 and comprises an engaging section 331 which is configured to contact the support protrusion 4 or cylindrical pin 41. In the second configuration the engaging section 331 is configured to contact the support protrusion 4 from below. More precisely, the supporting portion 330 and the engaging section 331 are configured such that the support protrusion is contacted at its lateral surface 44 at two different contact sections 42a, 42b on the lower portion 42 of the support protrusion 4. The engaging sections 331 comprise recesses 334 each of which having contact surfaces 335. The recess 334 and its contact surface 335 are formed such that the support protrusion 4 is contacted at two contact sections 42a, 42b which are spaced from each other. The receiving member 312 and the supporting member 336 are hingedly coupled to each other by means of a pivot 301 such that the receiving member 312 is pivotable about a pivot axis P30 with respect to the supporting member 336. The receiving member 312 and the supporting member 336 are embodied as levers.

The load carrier coupling 300 further comprises an urging member 340 for applying an urging force on the supporting portion 330 and the receiving portion 310. The urging member 340 is embodied as a spring and arranged to urge the supporting portion 330 towards the closed state. In order to define the positions of the supporting member and the receiving member with respect to each other in the closed state, the supporting member 330 comprises an abutment portion 337 and the receiving member 312 comprises an abutment portion 314 configured to contact each other when the supporting portion is in the closed state. Due to the presence of the urging member 340 the supporting member 330 normally seeks the closed state.

The load carrier coupling 300 further comprises a locking mechanism 350 for releasably locking a movement between the receiving portion 310 and the supporting portion 330 such that a movement towards the open state is blocked. The locking mechanism 350 comprises a locking lever 351 arranged pivotably on the receiving portion 310, more precisely between the accommodating section 311 and a handle 315 for grasping the receiving member 312, by means of a pivot 353 between a locking position in which a free end 352 of the locking lever 351 contacts an abutment portion 332 of the supporting portion 330 and a release position in which the free end 352 is pivoted away from the abutment portion 332. When the free end 352 is in contact with the abutment portion 332, a movement of the supporting member 332 towards the open state is blocked.

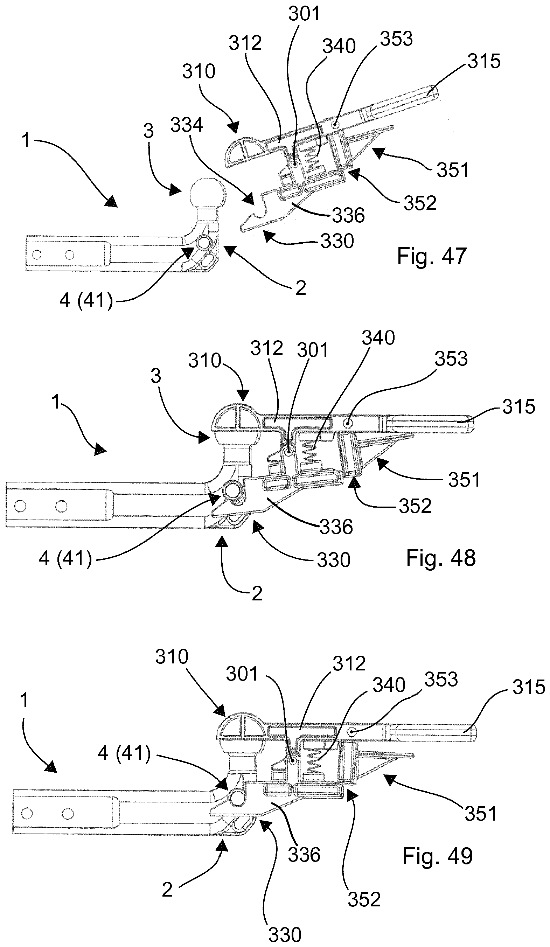

A mounting process of the load carrier coupling 300 on the trailer coupling 1 is shown in Figures 47 to 49. Firstly, the load carrier coupling 300 is positioned such that the receiving portion 310 can be brought into contact with the upper portion of the ball head as is shown in Figure 47. When the receiving portion 310 is supported on the ball head, the load carrier coupling 300 can be rotated downwards about the ball head 3 in order to lock the same on the trailer coupling 1. The supporting portion 330 comprises a guiding surface 333 which is arranged to get in contact with the support protrusion 4. Furthermore, the guiding surface 333 is configured such that a relative movement or sliding movement of the guiding surface 333 on the lateral surface 44 of the support protrusion 4 urges the supporting portion 330 towards the open state as shown in Figure 48. Accordingly, the load carrier coupling can snap on the support protrusion 4 simply by a rotating movement of the load carrier coupling in downward direction and without a specific interaction of the user. Figure 49 shows a state in which the load carrier coupling 300 is moved to the final mounting position in which it is locked on the trailer coupling 1. The recess 334 is engaged with the support protrusion 4 due to the force exerted by the urging member 340. Furthermore, the free end of the locking lever 351 is in contact with the abutment portion 332 so that the load carrier coupling 300 is securely mounted on the trailer coupling 1.

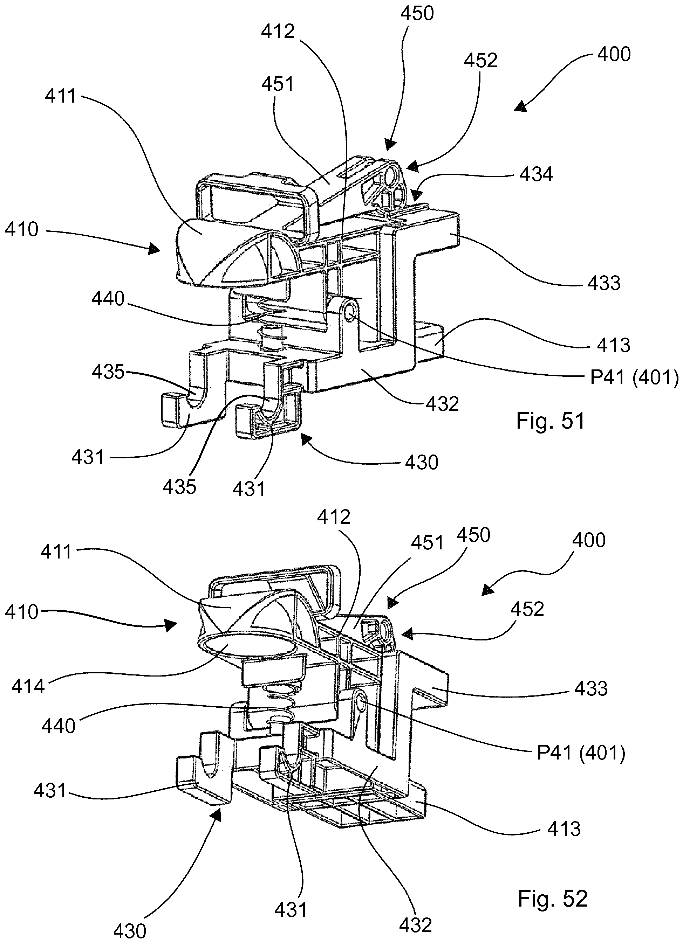

A third configuration of a load carrier coupling according to the fourth comparative example will be described with reference to Figures 51 to 57. Besides the above-mentioned features that are common to all configurations according to the fourth comparative example, the receiving portion 410 is a portion of a receiving member 412. The receiving portion 410 comprises an accommodating section 411 having a contact surface 414 that is oriented in the downward direction. Accordingly, the contact surface 414 is configured to contact the coupling body or ball head 3 from above. As is shown in Figure 52, the receiving portion 410 comprises a bowl-like shape.

The supporting portion 430 is a portion of a supporting member 432 and comprises an engaging section 431 which is configured to contact the support protrusion 4 or cylindrical pin 41. In the third configuration the engaging section 431 is configured to contact the support protrusion 4 from below. More precisely, the supporting portion 430 and the engaging section 431 are configured such that the support protrusion is contacted at its lateral surface 44 at two different contact sections 42a, 42b on the lower portion 42 of the support protrusion 4. The engaging sections 431 comprise recesses 434 each of which having contact surfaces 435. The recess 434 and its contact surface 435 are formed such that the support protrusion 4 is contacted at two contact sections 42a, 42b which are spaced from each other. The receiving member 412 and the supporting member 432 are hingedly coupled to each other by means of a pivot 401 such that the receiving member 412 is pivotable about a pivot axis P41 with respect to the supporting member 432. In the third configuration, the receiving member 412 and the supporting member 432 are arranged in a scissor-like style in which the receiving members cross each other when viewed from the side. The receiving member 412 and the supporting member 432 are embodied as levers.

The load carrier coupling 400 further comprises an urging member 440 for applying an urging force on the supporting portion 430 and the receiving portion 410. The urging member 440 is arranged to urge the supporting portion 430 and the receiving portion 410 towards the open state.

The load carrier coupling 400 further comprises a locking mechanism 450 for releasably locking a movement between the receiving portion 410 and the supporting portion 430 such that a movement towards the open state is blocked. The locking mechanism 450 comprises a cam mechanism for varying and locking a distance between the receiving portion 410 an the supporting portion 430. The cam mechanism comprises an operating lever 451 with a cam portion at one end and a handle 455 at the other end. The cam portion comprises a cam surface 452 which is operatively coupled to the supporting portion 430 and is hingedly coupled to a link 457 by means of a pivot 456. The link is operatively coupled to the receiving portion 410, more precisely to a locking section 413 of the receiving member 412, such that a movement of the lever moves the supporting portion 430 towards and away from the receiving portion 410.

The cam surface 452 comprises an engaging surface 453 and a releasing surface 454. The engaging surface 453 is arranged at a greater distance from the pivot 456 than the releasing surface 454. By operating the operating lever 451, the releasing surface 454 and the engaging surface 453 can be selectively brought into contact with a force application section 434 or force application surface on a locking section 433 of the supporting member 432. This leads to an arrangement of the pivot 456 at different distances with respect to the force application surface depending on the lever position. In this way, the locking sections 413, 433 are moved towards and away from each other leading to a corresponding movement of the accommodating section 411 and the engaging section 431.

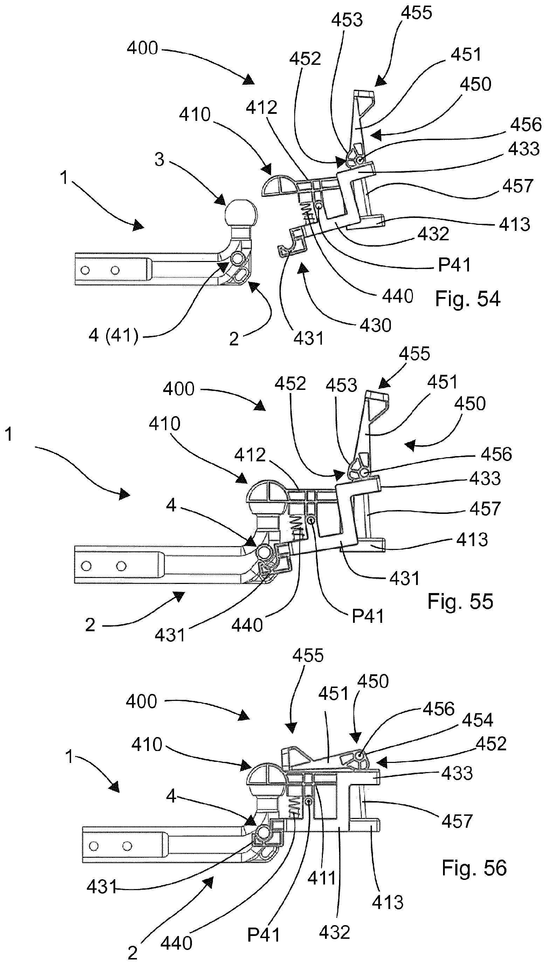

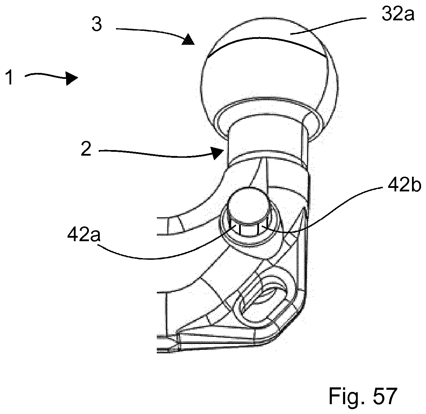

A mounting process of the load carrier coupling 400 on the trailer coupling 1 is shown in Figures 54 to 56. Before inserting the receiving portion 410 on the ball neck 3, the operating lever 451 is brought into a release position in which the above described releasing surface 454 is in contact with the force application section. Due to the urging force of the urging member 440 or spring pushing the accommodating section 411 and the engaging section 431 away from each other, they are moved with respect to each other such that a distance between them is great enough for inserting the load carrier coupling 400 on the trailer coupling 1 as shown in Figure 54. The opened load carrier coupling 400 is then inserted on the trailer coupling such that the accommodating section 411 is supported on the ball head 3 so as to contact contact section 32a on the ball head 3 as shown in Figure 57 and the engaging section 431 is positioned under the support protrusion 4 as shown in Figure 55. After that, the lever is brought into a tightening position in which the engaging surface 453 is in contact with the force application section 434 as shown in Figure 56 and the engaging section 431 is moved into contact with the lower portion of the support protrusion 4 and contacts the same at contact sections 42a, 42b on the lower portion 42 of the support protrusion. In this way, the load carrier coupling 400 is fixedly mounted on the trailer coupling 1. Since a surface portion between the engaging surface 453 and the releasing surface 454 is arranged at a greater distance, the operating lever has a self-locking function.

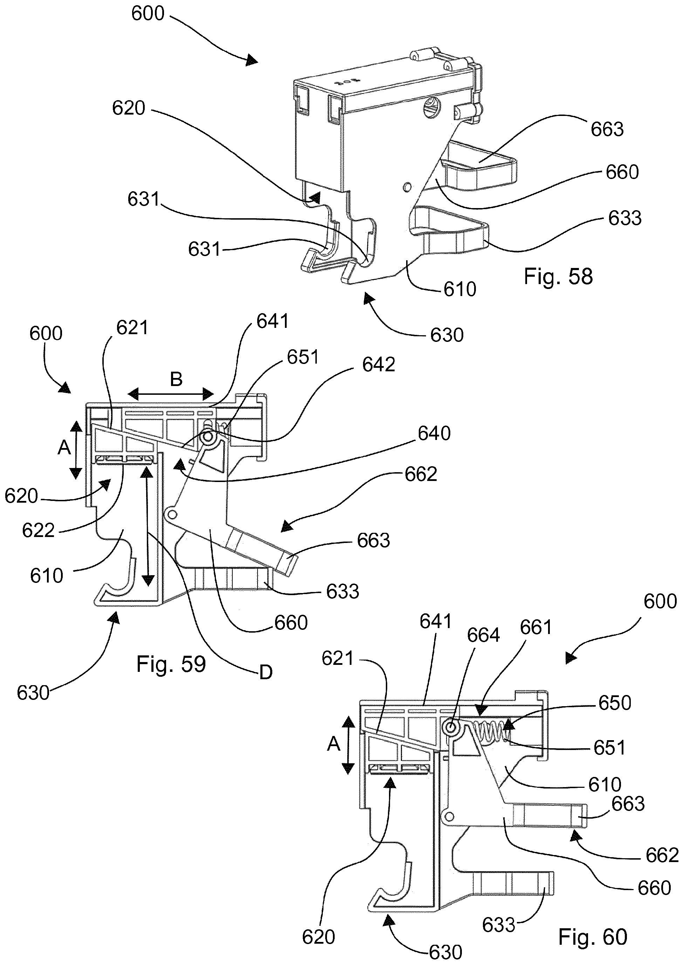

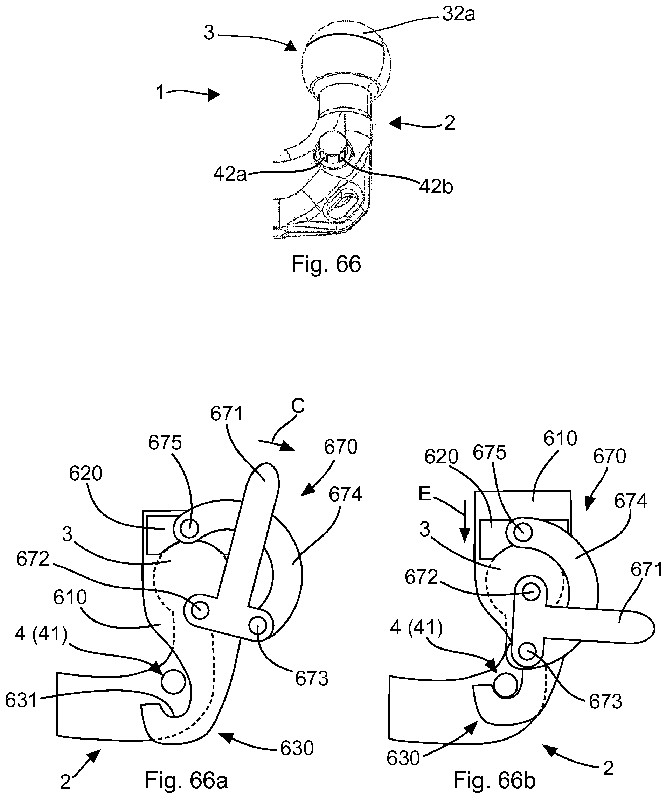

A configuration as well as modifications of a load carrier coupling according to the fifth comparative example will be described with reference to Figures 58 to 66. The load carrier coupling 600 is configured to be used in connection with the above described trailer coupling 1 as mentioned in connection with the other comparative examples. The load carrier coupling 600 according to the fifth comparative example comprises a receiving portion 620, a supporting portion 630 and a force transfer member 640. In the configuration, the receiving portion 620 is embodied as a receiving member which is slidably held in a housing 610 of the load carrier coupling 600. The receiving portion or receiving member 620 comprises a force receiving surface 621 for receiving a force from the above described force transfer member 640. Furthermore, the receiving portion 620 comprises an accommodating section 622 with a supporting surface 624 formed therein. The supporting surface 624 is configured to contact an upper portion 32a of the ball head 3 when the load carrier coupling 600 is inserted on the trailer coupling 1 as is shown in Figure 66. The force receiving surface 621 and the supporting surface 624 are provided on opposite sides of the receiving portion 620. The supporting surface 624 is provided on a lower side of the receiving portion and the force receiving surface 621 is provided on an upper portion of the receiving portion 620.

The receiving portion 620 is slidably held in the housing 610 movable towards and away from the above described supporting portion 630, more precisely in a vertical direction A when the load carrier coupling 600 is inserted on the trailer coupling 1. For that, the receiving portion 620 comprises a guided portion 623 embodied as a cylindrical protrusion which is slidably guided in a guiding portion 611 provided on the housing 610 and embodied as a cylindrical sleeve. By moving the receiving portion 620, a distance D between the supporting portion 630 and the receiving portion is changed allowing to clamp the load carrier coupling 600 on the trailer coupling 1.

The supporting portion 630 comprises a hook-like shape providing a supporting surface 631 which is configured to get in contact with a lateral surface of the support protrusion 4 from below. The supporting portion 630 is configured such that the support protrusion 4 is contacted at two different contact sections 42a, 42b that are spaced from each other on the lateral surface 44 as is shown in Figure 66. The supporting portion 630 is integrally formed in the housing 610.

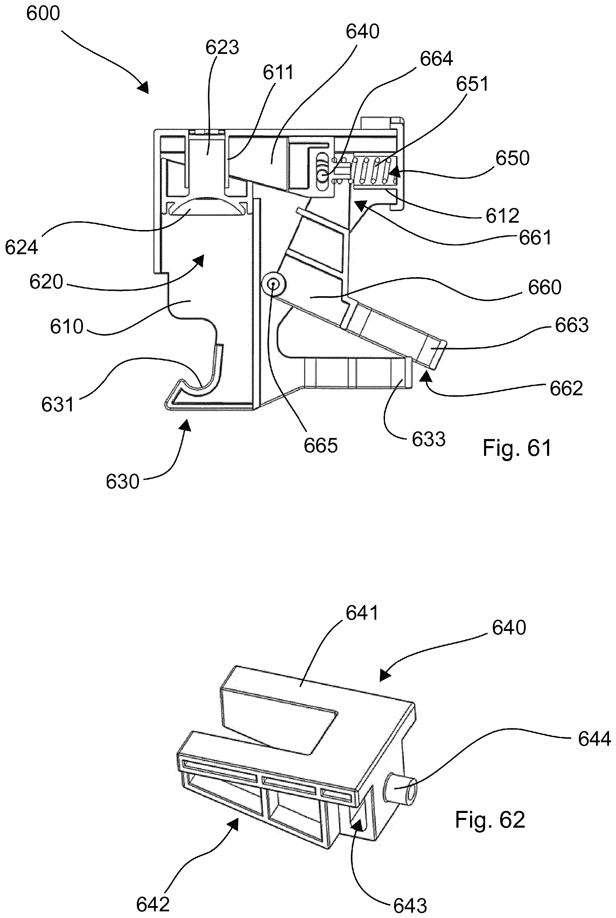

The force transfer member 640 is embodied as a wedge-like member having a supporting surface 641 and a force application surface 642 arranged at an angle with respect to the supporting surface 641. The force transfer member 640 has a fork-like shape such that the supporting surface and the force application surface 642 can pass the above-described guiding portion 611. The force transfer member 640 is shown in detail in Figure 62. The force application surface 642 is in contact with the force receiving surface 621 of the receiving portion 620. The supporting surface 641 is in contact with an upper inner surface of the housing 610. The force transfer member 640 is arranged movable in a direction B which is substantially perpendicular to the direction A in which the receiving portion 620 is movable. In the present configuration, the force transfer member 640 is movable in horizontal direction when the load carrier coupling is inserted on the trailer coupling. The force receiving surface 621 and the force application surface 642 can get in sliding contact and are arranged at the same angle with respect to a movement direction of the receiving member 620. The supporting surface 641 is arranged perpendicular to the movement direction of the receiving portion 620. Thus, a movement of the force transfer member 640 into a space between the force receiving surface 621 and the upper inner surface of the housing 610 leads to a movement of the supporting surface 624 towards the supporting portion 630 reducing a distance D between the receiving portion 620 and the supporting portion 630. The force application surface 642 and the force receiving surface 621 are provided such that a force acting on the receiving portion 620 cannot effect a movement of the force transfer member 640 due to the angles and frictional characteristics of the surfaces contacting each other.

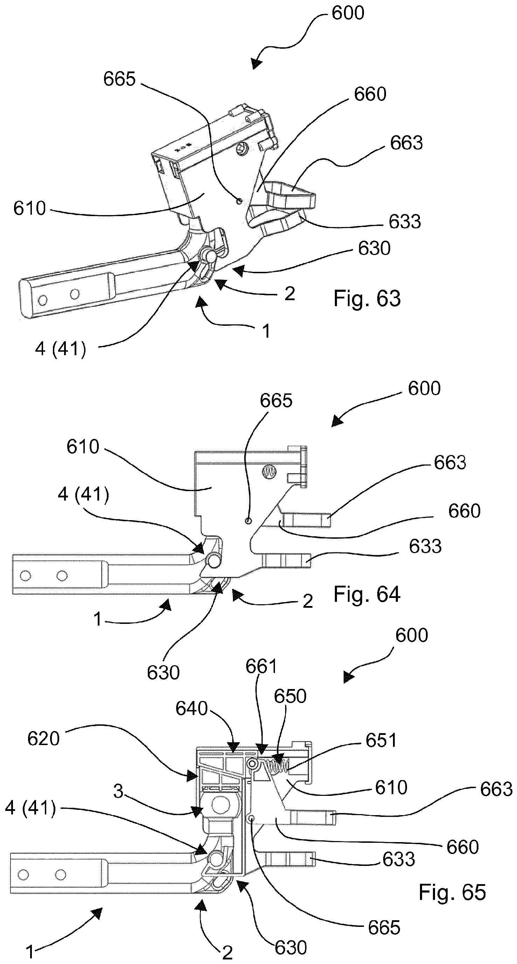

The force transfer member 640 is arranged movable between a disengaging position and an engaging position, wherein in the disengaging position the distance between the receiving portion and the supporting portion is larger than in the engaging position. In the configuration, the disengaging position is shown in Figures 59 and 61, for instance. The engaging position where the force transfer member is fully inserted in the above-mentioned space between the upper inner surface of the housing and the force receiving surface 621 is shown in Figures 60 and 65.

In the present configuration, the force transfer member 640 is prebiased by means of an urging member 650 embodied as a spring 651 towards the engaging position. One end of the spring 651 is received in an accommodating section 612, a cylindrical sleeve, provided on the housing 610 and the other end of the spring 651 is supported on a coupling portion 644 embodied as a cylindrical protrusion provided on the force transfer member 640.

The force transfer member 640 is operable by means of a lever 660. The lever 660 is operatively coupled to the force transfer member 640 and configured to at least move the force transfer member 640 to the disengaging position upon operation of the same. The lever 660 is pivotably coupled to force transfer member 640 at a first end 661 by means of a pivot pin 664 slidably accommodated in a guiding recess 643 formed in said force transfer member 640, and pivotably mounted on the housing 610 by means of a pivot pin 665. The pivot pin 665 is mounted to the housing 610 at a position which is located vertically between the receiving portion and the supporting portion and below the pivot pin 664. The guiding recess 643 is straight and extends in a direction which is substantially perpendicular to the movement direction of the force transfer member 640.The lever 660 comprises a handle 663 on a second end 662 thereof which is configured to be grasped by a user for lever operation.

When mounting the load carrier coupling 600 on the trailer coupling 1, the load carrier coupling is first inserted on the ball head 3 while the handle 663 is moved towards and held near a handle 633 provided on the housing. Due to the operation of the handle 663, the force transfer member 640 is moved such that the receiving portion 620 is allowed to move upwards in order to increase the above-mentioned distance D. After the load carrier coupling 600 is inserted on the trailer coupling 1, the handle 663 is released leading to a movement of the force transfer member 640 to the engaging position which in turn leads to a movement of the receiving portion 620 towards the supporting portion 630 as is shown in Figures 64 and 65. In this way, a pushing force is applied on the ball head 3 on a contact section 32a as shown in Figure 66. This in turn rises the supporting portion 630 and pushes the same against the lower portion of the support protrusion 4 so that the same contacts the contact areas 42a, 42b on the support protrusion 4 as shown in Figure 66.

A further configuration of the fifth comparative example is shown in Figures 66a and 66b. The load carrier coupling according to this configuration differs from the above described load carrier coupling 600 in the mechanism used to move the receiving portion 620. The force transfer member is embodied as a link 674 which is hingedly coupled at one end to the receiving portion 620 by means of a pivot 675 and to an operating lever 671 at a second end thereof by means of a pivot 673. The operating lever 671 is coupled to the housing 610 by means of a pivot 672 which is provided at a predetermined distance from pivot 673. The pivots are arranged such that the resulting pivot axes are parallel with respect to each other. With this configuration, it is possible to move the receiving portion 620 by moving the operating lever 671 about the pivot 672. Figure 66a shows a state in which the receiving portion 620 is moved to an upper portion of the housing 610 such that a distance between the receiving portion 620 and the supporting portion 630 is large enough for inserting the load carrier coupling 600 on the trailer coupling 1. In order to fixedly secure the load carrier coupling 600 on the trailer coupling 1, a user can turn the operating lever 671 in a direction leading to a movement of the receiving portion towards the supporting portion 630, i.e. in downward direction in the drawings. The turning direction of the operating lever 671 is indicated by arrow C in Figure 66a and Figure 66b indicates the resulting movement of the receiving portion 671 with arrow E. When the receiving portion 620 is in contact with the ball head 3, moving the receiving portion 620 downward in the housing 610 leads to a lifting of the housing 610 and thus of the supporting portion 630 which leads to a contact between the supporting portion 630 and the support protrusion 4 as shown in Figure 66b. As can be gathered from Figures 66a and 66b, the linkage mechanism formed by the operating lever 671 and the link 674 is embodied as a knee joint mechanism or knee lever mechanism which has a self locking function in that the operating lever 671 can be brought into an over center position. In order to allow such a movement, the link 674 comprises a curved shape allowing a deformation of the same upon application of a tensile force, i.e. the link 674 acts like a spring element.

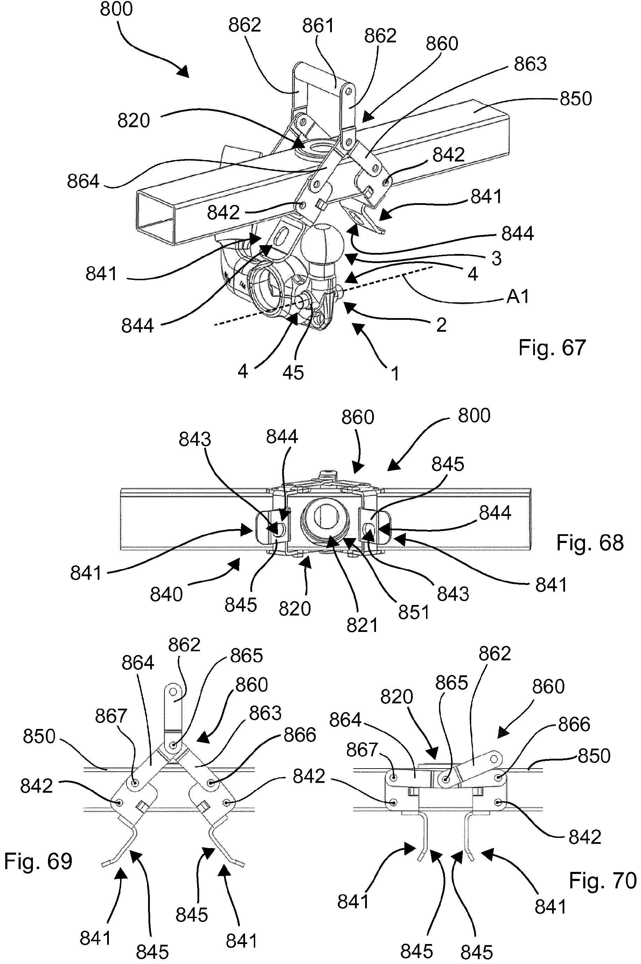

A configuration as well as modifications of a load carrier coupling according to the sixth comparative example will be described with reference to Figures 67 to 73. The load carrier coupling 800 is configured to be used in connection with the above described trailer coupling 1 as mentioned in connection with the other comparative examples.

The load carrier coupling 800 according to the sixth comparative example comprises a contact portion 820 and a supporting mechanism 840. The contact portion 820 is configured to contact at least a portion of the ball head 3. The supporting mechanism 840 comprises two blocking portions 841 which are operatively coupled with the contact portion 820 and movable between a blocking position in which the blocking portions 841 are positioned with respect to the support protrusion 4 such that a movement of the contact portion 820 with respect to the coupling body 3 is substantially blocked in at least one movement direction and a release position in which the blocking portion 841 is positioned with respect to the support protrusion 4 such that a movement of the contact portion 820 with respect to the coupling body 3 is not blocked by the blocking portion 841. The blocking portions 841 are arranged so as to be movable into the blocking position by a movement in an extension direction of the support protrusions 4 in which the support protrusions 4 extends away from the neck 2, and at least partially along lateral surfaces 44 of the support protrusions 4.

The two blocking portions 841 are arranged on opposite sides of the contact portion 820 and arranged movable towards and away from each other.

Each blocking portion 841 is pivotably movable about a pivot 842 which extends perpendicular to and is offset from the extension direction of said support protrusion 4.

Each blocking portion 841 comprises an abutment surface 843 facing the lateral surface 44 when the support protrusion 4 is positioned in the blocking position.

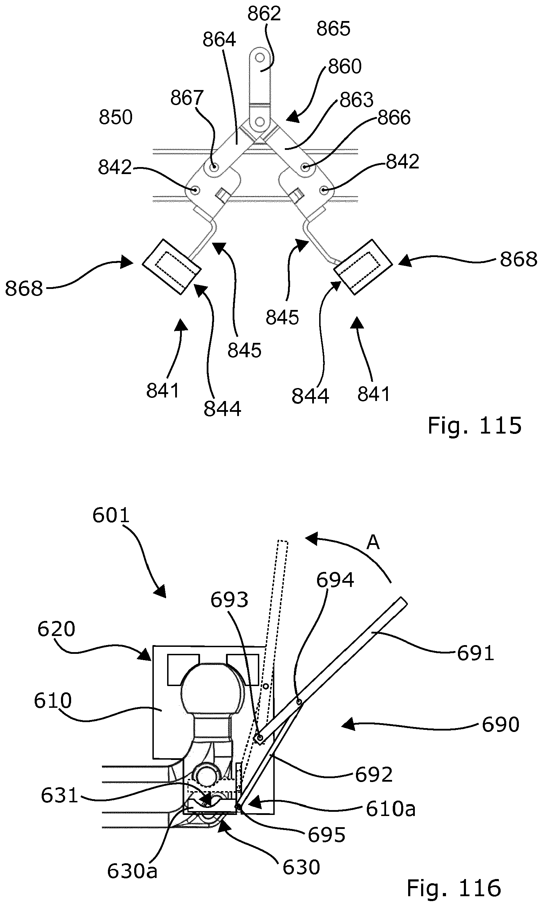

Each blocking portion 841 comprises a recess 844 adapted to accommodate at least a portion of a support protrusion 4. The recess 844 is formed as a through hole extending in the blocking portion 841 in a movement direction of the blocking portion 841. Optionally, as is shown in Figure 115, the recess 844 may be provided in a cup-like hollow receiving portion 868 provided on the blocking portion 810. In such a configuration, a support protrusion can be received in an interior space of the cup-like hollow receiving portion 868.

Each blocking portion 841 is formed from a metal sheet by cutting and bending.

Each blocking portion 841 comprises a contact surface 845 for contacting a neck support surface 45. The neck support surface 45 is a ring-like surface provided at a root portion of the support protrusion 4.

The load carrier coupling 800 further comprises a support structure 850 embodied as a portion of a frame of a load carrier. The support structure 850 comprises a hollow tube-like metal profile. The contact portion 820 and each blocking portion 841 are provided on the support structure 850. The contact portion 820 limits an upper end of an accommodating space 851 for accommodating the coupling member 3. The contact portion 820 is embodied as an adjustable member 821 allowing to adjust a position of the contact portion 820 relative to the support structure 850. In the configuration, the adjustable member 821 is a sleeve like member with an inner surface at the upper end which is configured to contact the ball head 3 and a cylindrical outer wall being threadedly engaged with an inner surface of a supporting sleeve 822 arranged in an opening of the support structure 850.

Each blocking portion 841 is operatively coupled to a knee lever mechanism 860 for moving the blocking portion 841 between the blocking position and the release position. The knee lever mechanism 860 is configured to be brought in an over-center position in which a movement of the blocking portion 841 is blocked. The knee lever mechanism 860 comprises an operating handle 861 for operating the knee lever mechanism 860. The handle 861 is coupled to a first pivot 865 by a first link 862. A second link 863 and a third link 864 are pivotably coupled to the first pivot 865 at one end and respectively pivotably coupled to a blocking portion 841 by means of a second pivot 866 and a third pivot 867. All pivots are arranged such that the pivot axes are arranged parallel with respect to each other. The second link 863 and the third link 864 comprise the same length. A movement of the first pivot 865 in the direction of the ball head 3 moves the second pivot 866 and the third pivot 867 away from each other leading to a rotation of the blocking portions 841 such that their contact surfaces 845 approach each other as can be gathered from Figures 69 and 70. As is shown in Figure 70, the first pivot 865 can be brought in an over-center position in which the same is located at a position below a line connecting the second pivot 866 and the third pivot 867. In this position, the knee-lever mechanism 860 is self-locked. The first pivot 865 can be guided in a guiding portion (not shown) provided on the support structure 850. The guiding portion can be a straight slot in which the pin is slidably accommodated. The slot can be provided on the support structure 850 such that it extends in substantially vertical direction when the load carrier coupling 800 is inserted on the trailer coupling.

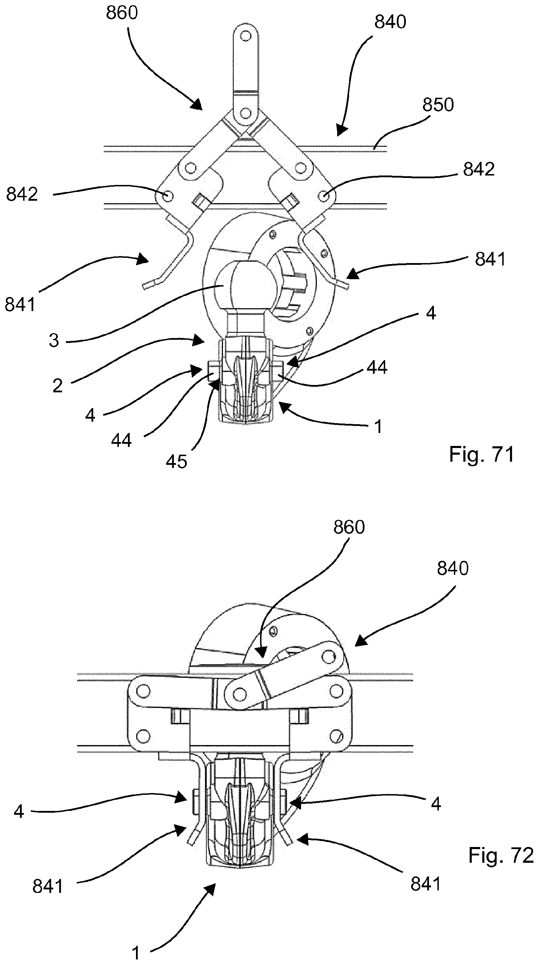

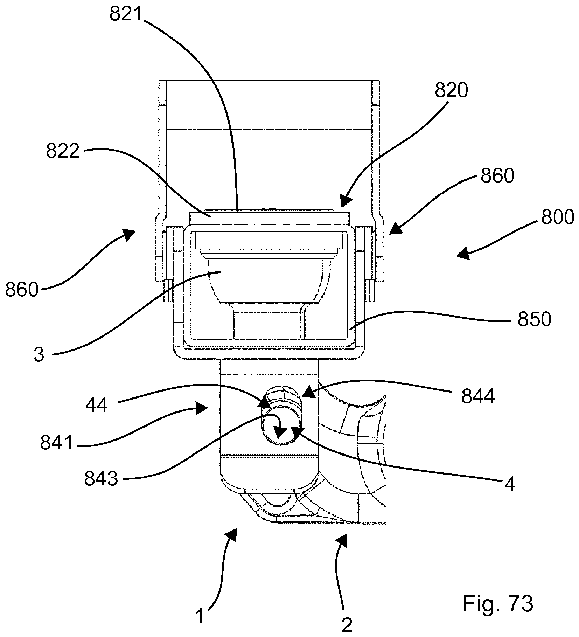

A mounting process of the load carrier coupling 800 is shown in Figures 71 to 73. The load carrier coupling 800 is positioned above the ball head 3 as shown in Figure 71 and lowered onto the ball head 3 until the contact portion 820 is in contact with the upper portion of the ball head 3. After that, the handle is pushed downwards by a user in order to rotate the blocking portions 841 on the support protrusions 4 as shown in Figure 72 and Figure 73. When the recesses 844 embodied as elongate openings are fully moved onto the support protrusions 4, each lateral surface 44 faces an abutment surface 843 embodied as an inner surface of the recesses 844. A movement of the load carrier coupling 800 in the upward direction and a rotation of the load carrier coupling 800 about the ball head 3 are prevented by a contact between the inner surface of the recesses 844 and the lateral surface 44 of the support protrusions. As is shown in the Figures, the recesses 844 can comprise a slot-like shape. By rotating the blocking portions 841 about the pivots 842, a lower portion of the inner surface of the recesses 844 is brought into contact with a lower portion of the support protrusions 4. As soon as such a contact is established, the blocking portions 841 can be further urged about the pivots 842 which leads to an application of a pushing force on the lower portions of the support protrusions 4 by the lower portion of the inner surface contacting the lateral surfaces 44 of the support protrusions. In other words, the blocking portions 841 are rotated beyond a position of first contact with the support protrusion. In this way, the receiving portion 820 is pulled onto an upper portion of the ball head 3 so that clamping of the load carrier coupling 800 is effected by clamping forces acting on the upper portion of the ball head 3 and the lower portions of the support protrusions 4. Accordingly, the supporting mechanism 840 is configured to apply a tightening force on the blocking portion 841 when the blocking portion 841 is in contact with said support protrusion 4.

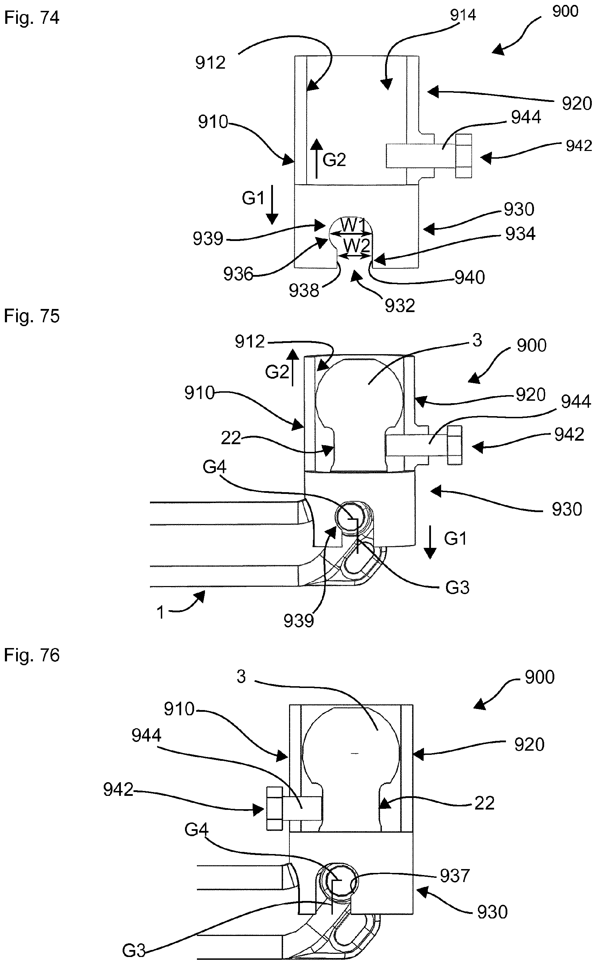

An embodiment according to a first aspect covered by the invention is shown in Figures 74 and 75. Figures 74 and 75 show side views of a load carrier coupling 900. In Figure 74, the load carrier coupling 900 is shown in an unmounted state and in Figure 75, the load carrier coupling 900 is shown in a state in which it is mounted on a trailer coupling 1. The trailer coupling 1 corresponds to the trailer coupling as shown in Figures 12 and 13 and comprises the same features as already described. Therefore, a repetition of the features of the trailer coupling 1 is omitted here and it is referred to the above text passages describing the specific features of the trailer coupling 1.

As is shown in Figure 74, the load carrier coupling 900 comprises a housing 910. The housing comprises a receiving portion 920 and a supporting portion 930. The receiving portion 920 is configured to receive the ball head 3 of the trailer coupling 1. The supporting portion 930 is configured to provide a support against the two support protrusions 4 protruding from the trailer coupling 1 on opposite sides and in a substantially horizontal direction when the trailer coupling 1 is fixed on a vehicle. The housing 910 is formed as a hollow cylinder with an inner wall 912 defining and limiting an accommodating space 914 for receiving the ball head 3. According to this embodiment, the receiving portion 920 of the load carrier coupling 900 is thus configured by a simple hollow cylindrical portion.

As shown in Figure 74 and Figure 75, the supporting portion 930 is formed by a lower portion of the housing 910 and comprises an accommodating recess 932. The accommodating recess 932 is configured to receive the support protrusion 4 upon mounting the load carrier coupling 900 on the trailer coupling 1. The load carrier coupling 900 according to this embodiment comprises an insertion direction G1 in which direction the load carrier coupling 900 is inserted on the trailer coupling 1. In the embodiment shown in Figures 74 and 75, the insertion direction G1 is substantially parallel to a middle axis of the hollow cylindrical housing 910. The accommodating recess 932 comprises a specific shape allowing a positive locking with the support protrusion 4. The accommodating recess 932 comprises an insertion section 934 and a locking section 936. When mounting the load carrier coupling 900 on the trailer coupling 1, the support protrusion 4 is first received in the insertion section 934 and is then positioned in the locking section 936 in a positive locking manner.

In the embodiment shown, the accommodating recess is formed by a supporting wall 938 and a guiding wall 940 arranged on opposite sides of an insertion path G3 and extending substantially parallel with respect to each other in the insertion section 934. In the insertion section 934, the distance or width W2 between the supporting wall 938 and the guiding wall 940 is substantially constant. However, it is also possible to provide an insertion section in which the distance or width between the supporting wall and the guiding wall is reduced towards the accommodating recess along the insertion path G3.

In the locking section 936, the accommodating recess 932 comprises a width W1 or dimension which is greater than the width W2 of the insertion section 934. In other words, in the insertion section 934, the accommodating recess 932 extends along an insertion path G3 which is substantially parallel to the insertion direction and middle axis of the housing 910 and extends along a locking path G4 in the locking section 936 wherein the locking path G4 extends in a direction substantially perpendicular to the extension direction of the insertion path G3. In this way, a recess 936 is provided in the supporting wall 938 allowing to accommodate the support protrusion 4 in a manner which is offset with respect to the insertion path G3. In other words, a step surface 937 oriented towards the receiving portion is created in the supporting wall 938 being able to block a movement of the load carrier coupling 900 in a detachment direction G2 opposite to the insertion direction G1. Accordingly, the supporting portion 930 is configured as a bayonet mount like receptor having L-shaped recesses for receiving the support protrusions 4 wherein the support protrusions 4 are first received in a vertical arm of the L shaped recess and are then received in a horizontal arm of the L shaped recess. However, in the present embodiment, contrary to a usual bayonet mount the pins are not inserted in the horizontal arm by rotation but by a substantially translatory movement of the supporting portion in horizontal direction. However, it is also possible to provide a portion of the supporting portion comprising the recess is a rotatable manner such that a receipt of the support protrusions in the horizontal arms is achieved by rotating the portion of the supporting portion.

The load carrier coupling 900 according to the embodiment further comprises a fixation mechanism 942 for maintaining the support protrusion 4 in the positive locking state. The positive locking state is achieved when the support protrusion 4 is accommodated in the locking section 936, more precisely in the recess 939 formed in the supporting wall 938. The locking mechanism 942 comprises a screw 944 which is provided in a threaded portion of the housing 910 so as to move in a radial direction upon turning the screw 944 about its own axis. The screw 944 is provided in the housing 910 at a position below the receiving portion 920 and above the locking section 936. More precisely, the screw 944 is provided at a position at which a free end of the screw 944 can get in contact with a cylindrical portion 22 of the neck 2 of the trailer coupling 1. The screw 944 acts as an urging member to apply a force on the cylindrical portion 22 in order to clamp the supporting portion 930 on the support protrusion 4 by moving the locking section 936 on the support protrusion 4, that is by accommodating the support protrusion 4 in the recess 939.

Figure 75 shows a state in which the load carrier coupling 900 is mounted on the trailer coupling 1. The ball head 3 is received in the receiving portion 920 and the support protrusion 4 is received in the recess 939. The free end of the screw 944 is brought into contact with the cylindrical portion 22 of the neck 2 of the trailer coupling 1 such that an inner wall of the recess 939 is firmly pushed against an outer circumferential surface portion of the support protrusion 4. In this way, the support protrusion 4 is securely accommodated in the recess 939 to establish a positive locking of the load carrier coupling 900 in the detachment direction G2. Accordingly, a tightening force is applied radially on the neck and no tightening force in the vertical direction has to be applied on any of the components of the trailer coupling 1 for securely fixing the load carrier on the trailer coupling. However, according to a modification it is possible to apply a tightening force against the neck and/or an underside or lower portion of a coupling body, preferably a ball head.

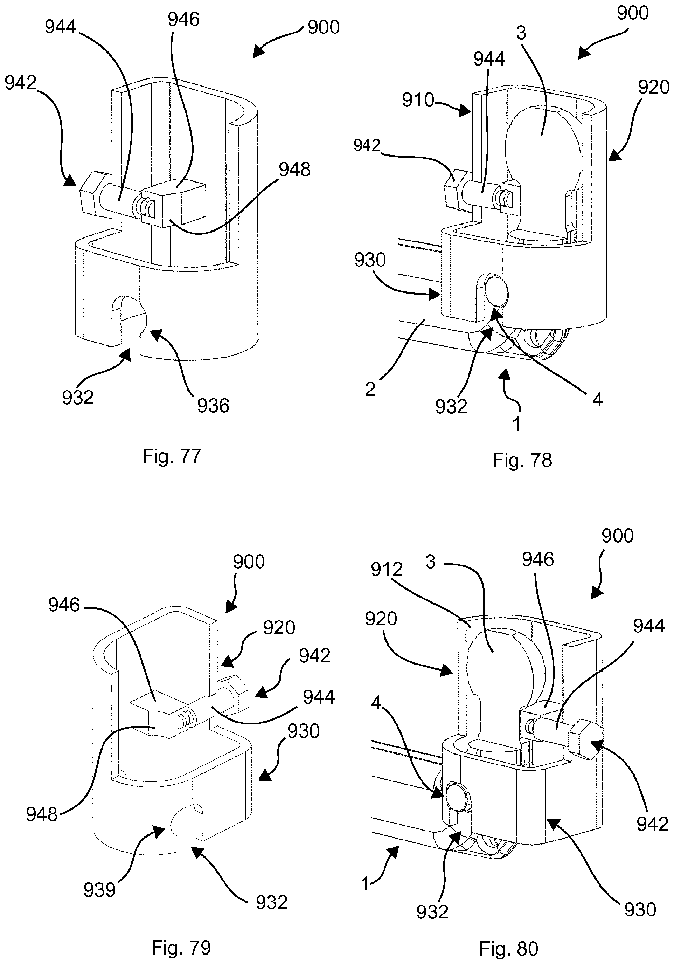

As can be gathered from the configurations of Figures 74 and 75, the locking means is to be configured to apply a force on the cylindrical portion 22 in a direction in which the accommodating recess 932 extends in the locking section 936. While in the present configuration, a screw is shown as urging member, it is possible to use other fixation mechanisms for applying the above-described force on the cylindrical portion 22. For example, it is possible to indirectly apply a force on the cylindrical portion 22 by a screw by means of a force application member arranged between a forward end of the screw 944 and the cylindrical portion 22. Such a modification is shown in Figures 79 and 80 where a force application member 946 is coupled to the inner free end of the screw 944 such that the screw 944 is rotatable with respect to the force application portion 946. The force application portion 946 is configured to establish a surface contact with the cylindrical portion 22. For that, the force application portion 946 comprises a contact surface 948 configured to follow the outer contour of the cylindrical portion 22. By rotating the screw 944, the force application portion 946 is translatory moved towards and away from the cylindrical portion 22 when the load carrier coupling 900 is inserted on the trailer coupling 1. Such a configuration has the benefit that the forward end of the rotatable screw is not in contact with the cylindrical portion 22. In this way, a damage due to friction on the cylindrical portion is prevented. Furthermore, the use of the force application portion 946 with its contact section 948 achieves a better load distribution on the cylindrical portion 22 thereby further preventing damage of the neck 2.

As is obvious from Figures 79 and 80, the housing 910 according to the modification is slightly modified compared to the housing of the embodiment shown in Figures 74 and 75 in order to accommodate the force application portion 946 therein. More precisely, although the housing 910 is again hollow cylindrical in the mathematical sense, the housing 910 is not a circular cylinder in this case. Rather, the housing 911 comprises two wall portions extending substantially parallel with respect to each other and allowing to guide the force application portion 946, as well as two half cylindrical wall portions connecting the wall portions. More precisely, lateral outer walls of the force application portion 946 are in sliding contact with inner surfaces of the parallel arranged wall portions so that a rotation of the force application portion 946 which could be induced by a rotation of the screw 944 is prevented.

A modification of the embodiment described with respect to Figures 74 and 75 is shown in Figure 76 not forming part of the invention. The modification of Figure 76 differs from the embodiment shown in Figures 74 and 75 in that the orientation of the locking path G4 is mirrored with respect to the insertion path G3. Accordingly, the recess 939 is provided on an opposite side. In order to accommodate and maintain the support protrusion 4 in such a recess provided on the opposite side, the locking mechanism is also provided on the opposite side. Besides from that, the configuration as shown in Figure 76 functions in an identical manner to the configuration shown in Figures 74 and 75. In Figures 77 and 78, a modification of the configuration according to Figure 76 is shown with the difference that in the configuration as shown in Figures 77 and 78, a force application portion 946 as described with respect to the configurations of Figure 79 and Figure 80 is used. The functional principle of the force application portion corresponds to the function of the force application portion 946 as described with respect to Figures 79 and 80.

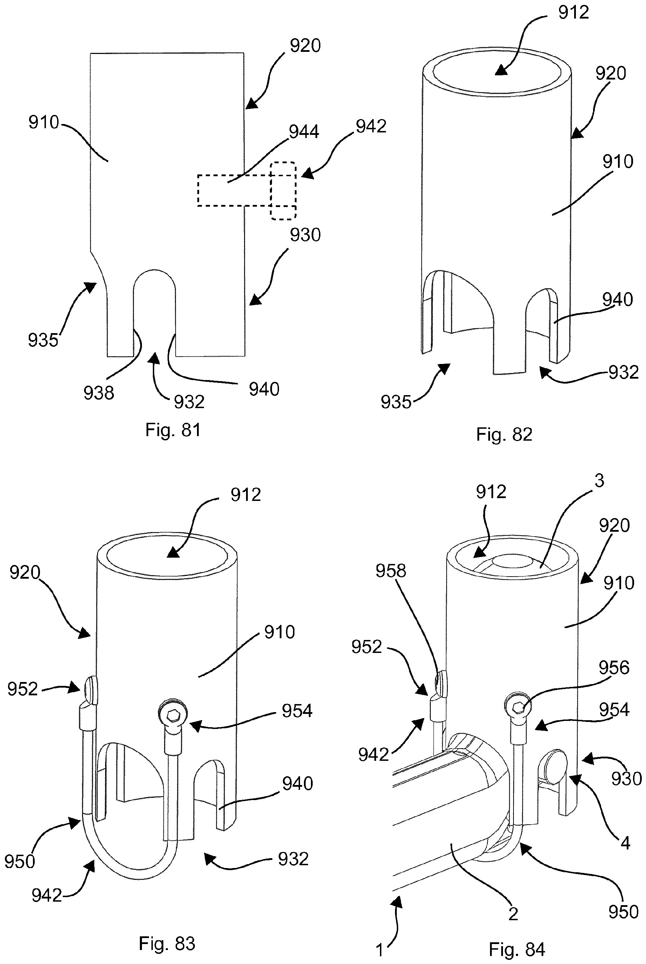

A further configuration will be described with reference to Figures 81 to 84. Figure 81 shows a sideview of a specific configuration of the housing 910 of the load carrier coupling 900. Figure 82 shows a perspective view of such a modified housing 910 according to a comparative example not covered by the invention. The modification as shown here differs from the embodiment shown in Figure 74 in that the locking mechanism 942 is omitted completely or substituted by a different locking mechanism. However, also in this configuration, the before described locking mechanism 942 can be used as indicated by the bolt 944. Furthermore, the accommodating recess 932 is provided axis symmetrical and does in particular not comprise the recess 939. Although not described in connection with the embodiments and modifications according to the first aspect as described before, the housing 910 comprises a neck accommodating section 935 provided in the supporting portion 930 and configured to accommodate an upper portion of the neck therein, when the load carrier coupling 900 is mounted on the trailer coupling 1 as shown in Figure 84, for instance.

As is visible from the schematic views of the modification in Figures 81 and 82, the load carrier coupling 900 can be of a very simple kind in that no locking mechanism is provided thereon. It has been found, that for certain load carrier arrangements a load carrier coupling consisting essentially of a housing 910 as shown in Figures 81 and 82 is enough to provide a sufficient coupling of a load carrier on a trailer coupling 1. This is due to the fact that a load carrier comprising such a load carrier coupling usually has the load carrier coupling 900 arranged offset to a center of gravity so that when the load carrier coupling 900 is inserted on the trailer coupling 1, a moment is generated pushing the load carrier coupling 900 against a support protrusion 4 on one side and pushing the housing 910 against the coupling body on the other side thereby clamping the load carrier coupling 900 on the trailer coupling 1. In some applications, such a configuration of the load carrier coupling 900 is enough so that a locking mechanism can be completely omitted as a self-locking capability of the housing is enough. However, it is possible to provide an accommodating recess 932 which is longer than the accommodating recess associated with a housing 910 on which a locking mechanism is provided.

A further modification is shown in Figures 83 and 84. The housing 910 according to the modification corresponds to the housing as described in connection with the modifications shown in Figures 81 and 82. In addition, the modification of Figures 83 and 84 comprises a locking mechanism 942 which comprises a flexible elongate member 950 configured to clasp or surround a portion of the neck 2 of a trailer coupling 1. The flexible elongate member 950 is a wire having a first end 952 and a second end 954 coupled to an outer surface of the housing 910 by means of screws 956, 958. In this way, a loop is generated by the flexible elongate member 950 in such a manner that an opening of the neck accommodating section 935 is closed by the wire thereby preventing the neck portion from coming off of the neck accommodating section 935 and thereby positively locking the load carrier coupling 900 on the trailer coupling 1. It is also possible to provide a tightening mechanism for thigtening the flexible elongate member 950 such that it pulls the neck portion upwards into the accommodating section 935. It is however enough to provide the flexible elongate member 950 loosely around the neck portion so that it allows a movement of the housing in the detachment direction to a certain extent and acts as a stop member to prevent excessive movement. According to a further modification, a pivotable, substantially L-shaped bracket can be mounted on the housing 910 such that the bracket can be moved to engage behind the neck 2 of the trailer coupling 1 instead of a flexible elongate member 950.

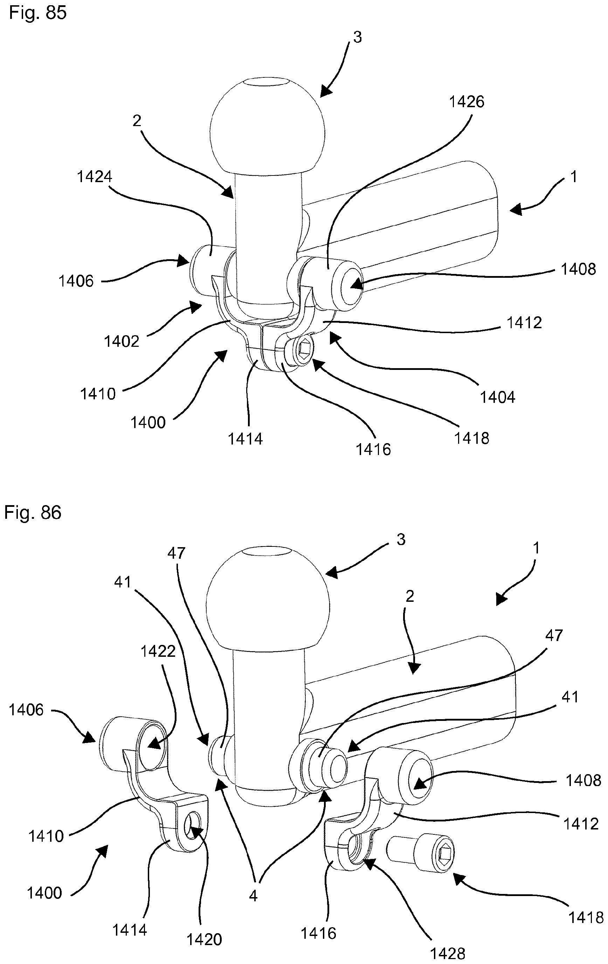

According to a further comparative example of the present disclosure, an adapter mountable on the support protrusions 4 of a trailer coupling 1 is provided in order to change the dimensions of the support protrusions 4 on the trailer coupling 1 in order to provide enhanced supporting capabilities. A first possible adapter is described with respect to Figures 85 and 86. Figure 85 shows the adapter 1400 in a mounted condition and Figure 86 shows the components of the adapter and the trailer coupling 1 in an exploded view.

The adapter 1400 comprises a first member 1402 to be engaged with one of the support protrusions 4 and a second member 1404 configured to be engaged with an opposite support protrusion 4. The first member 1402 and the second member 1404 may both comprise receiving portions 1406, 1408 which are preferably configured as cups for receiving the support protrusions 4 therein. Each cup of the receiving portions 1406, 1408 defines a receiving space 1422 for accommodating a support protrusion 4 which in the configurations as shown are cylindrical pins 41. Therefore, the receiving portions 1406, 1408 are preferably configured to define a cylindrical receiving space 1422 or a receiving space according the shape of the support protrusion. Each one of the first member 1402 and the second member 1404 may comprise a flange portion 1414, 1416 coupled to the receiving portions 1406, 1408 by means of coupling portions 1410, 1412. The coupling portions 1410, 1412 can be configured as legs extending from an outer circumferential surface of the receiving portions 1406, 1408 in a manner so as to substantially extend about a section of the lower portion of the neck 2 and to allow to position the flanges 1414, 1416 in abutting relation with each other below the trailer coupling 1. One of the flanges 1414 can comprise a threaded opening 1420 and the other flange 1416 can comprise an opening 1428 for accommodating a fixation screw 1418 therein. With such a configuration, the flange portions 1414 and 1416 can be screwed together when the support protrusions 4 are accommodated in the receiving spaces 1422 of the receiving portions 1406, 1408 in order to fixedly amount the adapter 1400 on the trailer coupling 1. As is visible from Figure 86, the outer circumferential surface of each receiving portion 1406 and 1408 defines a supporting surface 1424, 1426 which, in an extension direction of the support protrusions 4, is longer compared to the circumferential surfaces 47 of the cylindrical pins 41. In this way, a supporting surface can be enlarged and can furthermore extend into a region protruding from the neck beyond the ball head 3 when viewed from above. In other words, the supporting surfaces 1424, 1426 are partially located outside of a projection of the ball head 3 on the supporting surfaces 1424, 1426 in a vertical direction from above.

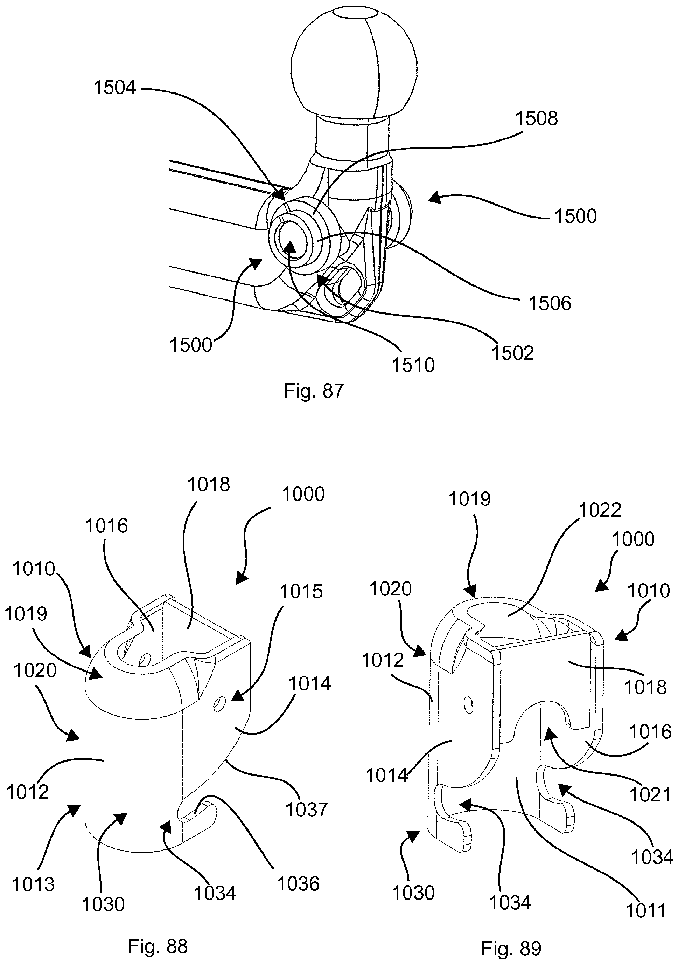

A further configuration for changing the dimensions of the support protrusions 4 is shown in Figure 87. Contrary to the adapter 1400 which is mounted on the support protrusions by screwing the flange portions together, it is possible to fix adapter members 1500 on the respective support protrusions 4. The adapter members 1500 are configured as rings 1502, more precisely as spring rings comprising a cut 1504 for allowing an enlargement of an inner dimension of the ring 1502. The ring 1502 comprises an accommodating space 1510 which, in an unmounted condition of the adapter member 1500, comprises a dimension which is smaller than the outer diameter of the support protrusion 4. In order to mount the ring 1502 on the support protrusion 4, the ring can be hammered on the support protrusion 4. According to the configuration, the ring 1502 comprises a stepped outer surface defining a supporting surface 1506 extending substantially parallel to an outer surface of the support protrusion 4. Furthermore, a step surface bridging a portion with a smaller diameter and a portion with a larger diameter of the adapter member 1500 can form a lateral supporting surface 1508. The lateral supporting surface 1508 extends substantially perpendicular to the extension direction of the supporting surface 1506. With the adapter member 1500 as described here, it is possible to change the dimensions of the support protrusions 4 in an easy and reliable way. It is advantageous to provide an adapter with a configuration such that inner contact surfaces at support protrusions, for example cylindrical pins, close to the neck are separated by a distance equal to the diameter of the tow ball. In this way a load carrier coupling can be inserted or translated vertically straight from above the coupling body downwards onto the support protrusions, and walls of the load carrier coupling can engage these inner contact surfaces to provide stability about one axis of rotation while the support protrusions themselves create stability about another axis of rotation.

A general construction of a load carrier coupling 1000 according to a comparative example not covered by the claimed invention will first be described with reference to Figures 88 to 91. The load carrier coupling 1000 comprises a housing 1010 which comprises two substantially parallel wall portions 1014, 1016 which are coupled to each other on one side by means of a bridging portion 1012 and on the other side by means of a supporting wall 1018. In the embodiment, the bridging portion 1012 comprises a hollow half cylindrical section 1013 bridging the walls 1014, 1016 and defining an inner wall 1011 which follows a substantially circular path. The shape of the inner wall 1011 is formed according to an outer contour of a ball head to be inserted in the load carrier coupling 1000. On an upper end of the cylindrical portion 1013, a rounded portion 1019 is provided. The rounded portion 1019 is also formed according to an outer contour of a coupling body, which in the present embodiment is a ball head 3. On the inside of the rounded portion 1019, a guiding surface 1022 is provided for contacting the coupling body 3 and allow a sliding movement of the load carrier coupling 1000 on the coupling body 3.

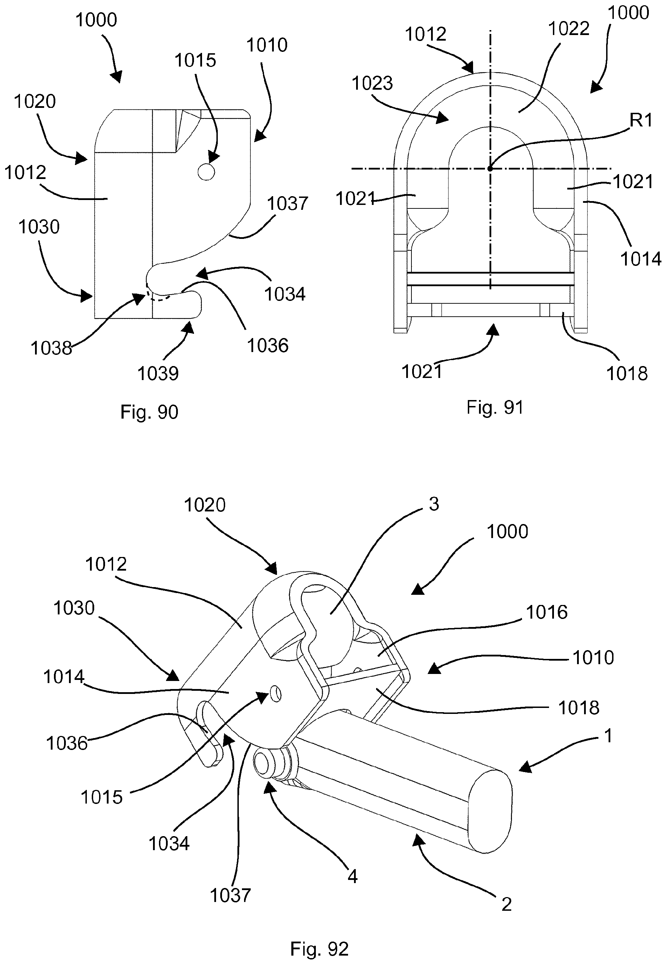

As is shown in Figure 91, the guiding surface 1022 comprises a curved portion 1023 which is formed by rotating an arc shaped curve about a rotation axis R1 in a range of about 180 degrees. In the embodiment, the rounded portion 1019 forms a receiving portion 1020 of the load carrier coupling 1000 for receiving the coupling body 3 which in the present embodiment is a ball head. In the present embodiment, the wall portions 1014, 1016 and the bridging portion 1012 as well as the rounded portion 1019 are formed by metal forming a metal plate. As is shown in Figure 91, the wall portions 1014, 1016 and the bridging portion 1012 are formed substantially U-shaped. The free ends of the wall portions 1014, 1016 are coupled to each other by means of the supporting wall 1018. Accordingly, the supporting wall 1018 is provided between and on one side of the wall portions 1014, 1016 and the bridging portion is provided on the wall portions 1014, 1016 on an opposite side. On a lower end of the supporting wall 1018, an accommodating recess 1021 is provided for accommodating an upper portion of the neck 2 when the load carrier coupling is inserted on the trailer coupling 1.

In the wall portions 1014, 1016, openings 1015 are provided for accommodating a bolt therein. The bolt, which will be described later, acts as a securing element for maintaining the coupling body 3 in contact with the guiding surface 1022 or for at least preventing that the coupling body 3 moves too far away and slides from the guiding surface 1022.

In the lower portion of the housing 1010, a supporting portion 1030 is provided. The supporting portion comprises two receiving sections 1034 which in the embodiment are configured as recesses. The recesses are defined by a lower inner wall 1036 and an upper inner wall 1037. Each recess 1034 is configured to accommodate the support protrusion 4 upon pivoting the load carrier coupling 1000 about the coupling body 3. The recess 1034 is provided in each of the wall portions 1014, 1016 and extends up to the bridging portion 1012.

The guiding surface 1022 is configured to define a specific movement path P1 about the coupling body 3 when the receiving portion 1020 is inserted on an in contact with the coupling body 3. For that, the guiding surface 1022 can slide on an outer surface of the coupling body 3. As already mentioned, the coupling body 3 in the present embodiment is embodied as a ball head and the guiding surface 1022 is thus configured as a surface following the contour of the spherical surface of the ball head. In this way, the guiding surface 1022 and the ball head 3 together form a pivot such that the load carrier coupling 1000 is pivotable about the coupling body 3. Since the supporting portion 1030 and the receiving portion 1020 are integrally formed, a pivoting movement of the load carrier coupling 1000 about the coupling body 3 leads to a movement of the supporting portion 1030 along the movement path P1.

As is shown in Figure 90, the recess 1034 is formed so as to follow or correspond to an extension direction of the movement path P1. In other words, the recess 1034 can be curved about a pivot which is defined by the cooperation of the guiding surface 1022 and the outer surface of the coupling body 3. The recess 1034 can be configured such that a clamping force is generated between the lower inner wall 1036 and the support protrusion 4 which in turn leads to the generation of a clamping force between the guiding surface 1022 and the coupling body 3. For that, a lower end portion 1039 carrying the lower inner wall 1036 can be configured so as to be elastically deformable upon a contact with the support protrusion 4. In order to provide a positive locking between the support protrusion 4 and the lower inner wall 1036, the lower inner wall 1036 can optionally comprise an engaging recess 1038 extending in a direction opposite to the direction in which a force is applied on the support protrusion 4 by the end portion 1039 and the lower inner wall 1036, respectively. Accordingly, the support protrusion 4 can snap into the recess 1034 by snapping into the engaging recess 1038 to provide a positive locking for blocking a movement of the supporting portion in a direction in which the recess 1034 is moved away from the support protrusion 4. For that, the supporting portion 1030 may be resiliently configured allowing the lower inner wall to be pushed away by the lower portion of the support protrusion to a certain extent.

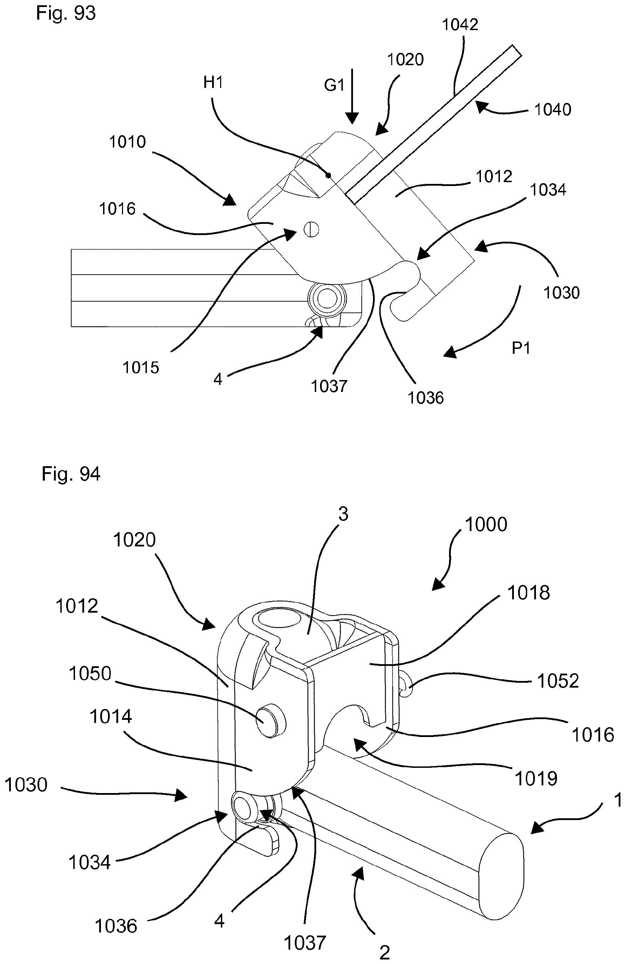

A mounting process of the load carrier coupling 1000 on the trailer coupling 1 will now be described with reference to figures 92 to 95. As is shown in Figures 92 and 93, the load carrier coupling is first inserted on the trailer coupling 1 in an inclined manner. More precisely, the housing 1010 is inclined in such a manner that the coupling body 3, that is the ball head, can be passed through an opening defined between the supporting wall 1018 and the inner wall 1011. In such an inclined state, the load carrier coupling 1000 is lowered on the trailer coupling 1 in an insertion direction G1 until the ball head 3 is in contact with the guiding surface 1022, that is until the housing 1010 rests on the ball head 3. In this state, the ball head 3 and the guiding surface 1022 of the receiving portion 1020 define a pivot about which the supporting portion 1030 can be pivoted. In the embodiment, the load carrier coupling 1000 is pivotable about a pivot axis H1.

As soon as the load carrier coupling 1000 is inserted on the trailer coupling 1 as described before, the load carrier coupling 1000 is pivoted about the pivot H1 in a direction of the before-mentioned movement path P1 by operating an operating portion 1040. In the embodiment, the operating portion 1040 is integrally movably coupled to the supporting portion 1030 and is configured to directly or indirectly support loads to be transported by a load carrier making use of the load carrier coupling 1000. For that purpose, the operating portion 1040 comprises a load supporting portion 1042 on which specific means for fixing or supporting loads to be transported can be mounted. For example, in case the load carrier is a bike carrier, wheel trays for supporting wheels of bikes to be transported can be mounted on the load supporting portion 1042. The operating portion 1040 can thus form a platform for supporting goods to be transported. Accordingly, a configuration is provided in which the operating portion 1040 comprises a double-function, namely the function of operating the load carrier coupling 1000 by pivoting the same about the coupling body 3 and the function of supporting load to be transported. However, the operating member can also be a separate operating handle and the load carrier coupling can be coupled to a load carrier such that the receiving portion and the supporting portion are integrally moved with respect to the load carrier upon operation of the operating handle.

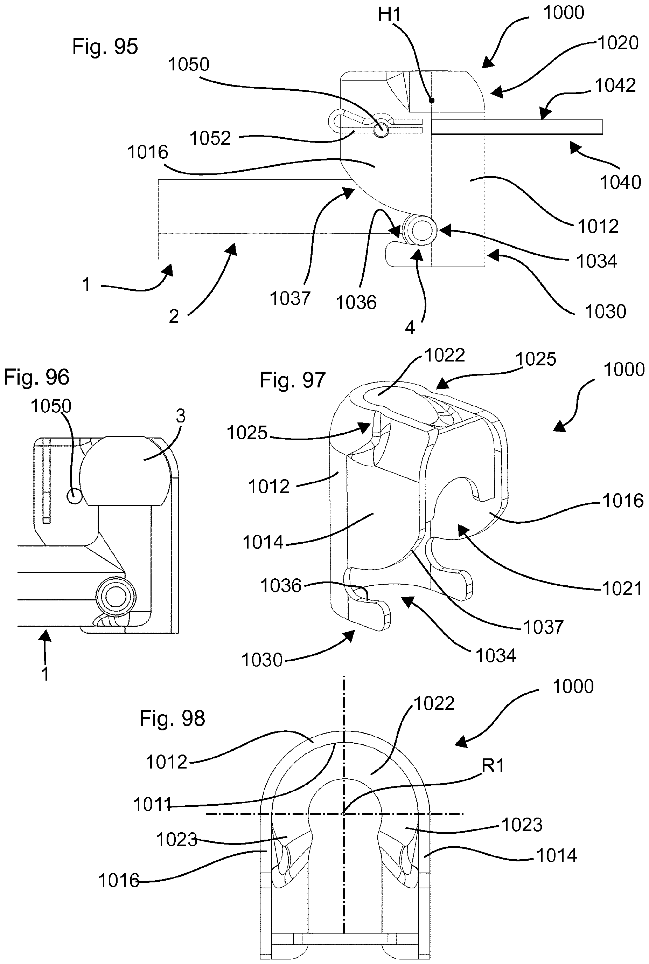

As is indicated in Figure 93, the load carrier coupling 1000 is pivoted about the pivot axis H1 in the direction of the movement path P1 in order to engage the supporting portion 1030 with the support protrusion 4. Figure 94 and Figure 95 show a state in which the supporting portion 1030, more precisely the recess 1034 is engaged with the support protrusion 4. In this state, the inner wall 1011 of the housing 1010 extends in a substantially vertical direction and the contact surface 1022 is in contact with a rear upper surface of the ball head 3.

In order to secure the load carrier coupling 1000 in the engaging state, a bolt 1050 can be received in the openings 1015 and secured therein by means of a securing element 1052 which in the present embodiment is a spring cotter. As shown in Figure 96, the bolt 1050 forms an internal abutment portion preventing the ball head 3 from moving too far away from the guiding surface 1022 and thereby preventing an overturning of the housing 1010 about an axis defined by a cooperation of the support protrusion 4 and the recess 1034.

A modification of the embodiment described before is shown in Figures 97 and 98. Instead of the securing element 1052, the guiding surface 1022 is specifically shaped in order to surround and make contact with an outer surface of the ball head 3 of more than 180 degrees. Thus, when viewed from below, the guiding surface 1022 looks like a ring section or an open ring extending about more than 180 degrees about a middle point. In this way, a surface contact between the receiving portion 1020 and the ball head is established by which the receiving portion 1020 is hooked on the ball head 3. Thus, contrary to the above described embodiment, the guiding surface 1022 does not comprise end portions 1021 extending straight along a symmetry plane as shown in figure 91 but comprises end portions 1023 extending further towards the symmetry plane in a curved manner. For that, the housing 1010 can be indented at two indention portions 1025 so as to create the latter extension and shape of the end portions 1023. Although the guiding surface 1022 is formed as continuous surface, it is to be noted that the guiding surface can be provided as discontinuous surface having two or more guiding surface sections.

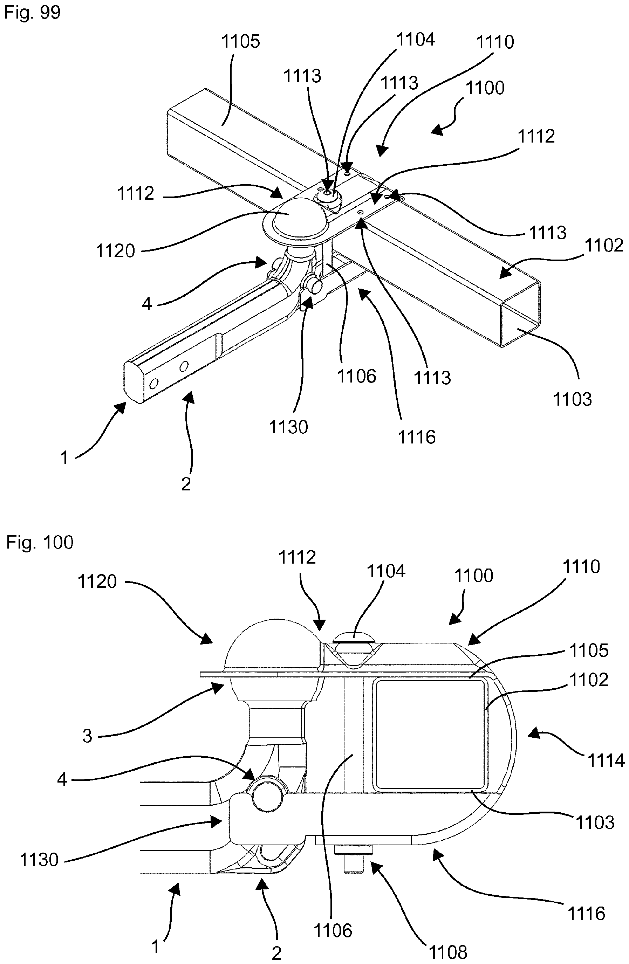

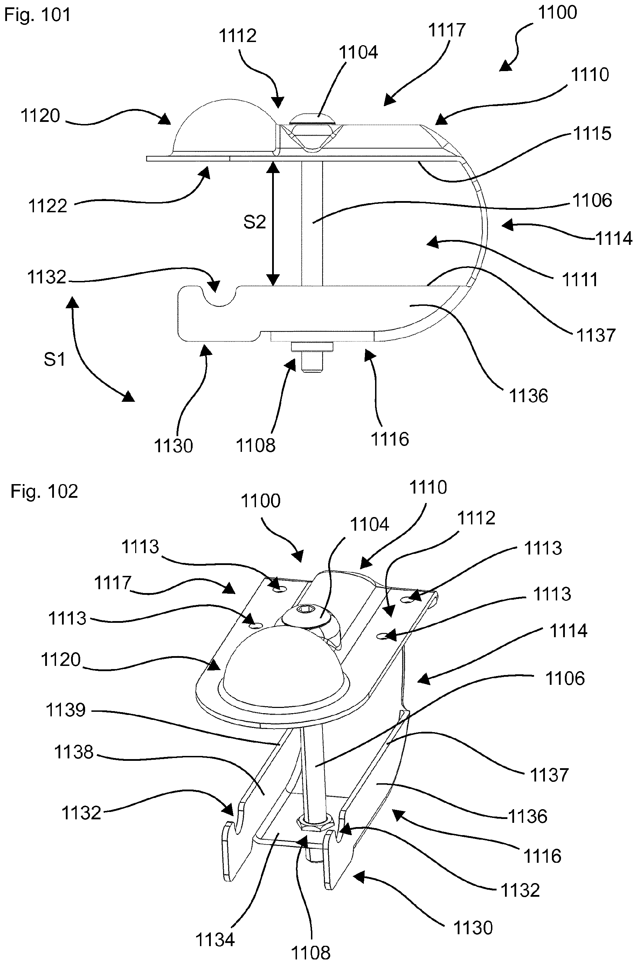

A load carrier coupling 1100 according to a seventh comparative example will be described with reference to Figures 99 to 102. Figures 99 and 100 show the load carrier coupling 1100 together with a frame member 1102 of a load carrier and Figures 101 and 102 show the load carrier coupling without further elements. Although not shown, the load carrier coupling 1100 may comprise a housing at least partially accommodating the below described specific components.

The load carrier coupling 1100 according to the comparative example comprises a bracket 1110 having an upper portion 1112 and a lower portion 1116. The upper portion 1112 and the lower portion 1116 are coupled by means of a bridging portion 1114. The upper portion 1112, the bridging portion 1114 and the lower portion 1116 together define a C-shape. The free ends of the C-shaped bracket 1110 define a receiving portion 1120 and a supporting portion 1130, respectively. More precisely, a free end of the upper portion 1112 located on a side of the upper portion 1112 opposite to a side where the upper portion 1112 is coupled to the bridging portion 1114, defines the receiving portion 1120. The free end of the lower portion 1116 opposite to this side where the lower portion 1116 is coupled to the bridging portion 1114 defines the supporting portion 1130.

The receiving portion 1120 is configured as a dome and has an inner surface 1122 following the shape of a substantially spherical body. Accordingly, the receiving portion 1120 is configured to receive a ball head 3 of a trailer coupling 1. In other words, the inner surface 1122 is specifically shaped in order to establish a surface contact with an upper portion of the ball head 3.

In the comparative example as shown in the drawings, the lower portion 1116 comprises two walls 1136 and 1138 extending in a substantially vertical plane when the load carrier coupling is mounted on the trailer coupling 1. The walls 1136, 1138 comprise upper surfaces 1137, 1139. In the region of the receiving portion 1130 a recess 1132 is provided in each of the walls 1136, 1138 in a manner such that the recess 1132 faces or is oriented towards the receiving portion 1120. The recesses 1132 are configured to accommodate a lower portion of the support protrusion 4 of the trailer coupling. In the present comparative example, the shape of the recesses 1132 is configured according to an outer contour of the lower portion of the support protrusions 4 so that a surface contact between the receiving portion 1130 and the lower portion of the support protrusion 4 is achieved.

The receiving portion 1120 is rigidly coupled to a base portion 1117 and the receiving portion 1120 and the base portion 1117 together define the upper portion 1112 of the load carrier coupling 1100. The base portion 1117 comprises several openings 1113 for mounting the load carrier coupling 1100 to a frame member 1102 of a load carrier (not shown). In particular, the base portion 1117 is configured to be fixedly mounted on an upper wall 1105 of the frame member 1102. The base portion 1117 comprises a lower surface 1115 for supporting the load carrier coupling 1100 on an upper wall 1105 of the frame member 1102. In this way, the receiving portion 1120 can be rigidly supported on an upper wall 1105 of the frame member 1102.

In the present comparative example, the bridging portion 1114 couples the supporting portion 1130 to the base portion 1117 in a resilient manner. In other words, the bridging portion 1114 defines or is configured as a spring member. In a preferred configuration as shown in Figure 100 the bridging portion 1114 is configured such that it is in a stress-free state when the supporting portion 1130 is in contact with the lower portion of the support protrusion 4. In order to clamp the load carrier coupling 1100 on the trailer coupling, the supporting portion 1130 is arranged movable towards the receiving portion 1120. In other words, a distance S2 between the receiving portion 1120 and the supporting portion 1130 can be changed by a movement of the lower portion 1116 of the load carrier member about the base portion 1117 along a movement path S1 defined by the configuration of the bridging portion 1114.

In the present comparative example, the receiving portion 1130 is movable between an opened state allowing the insertion of the load carrier coupling 1100 on the trailer coupling 1 and a closed state in which the receiving portion 1130 is firmly in contact with the support protrusion 4 to clamp the load carrier coupling 1100 on the trailer coupling 1. In order to operate the load carrier coupling 1100 between the described states, the load carrier coupling 1100 comprises an operating mechanism. The operating mechanism comprises a tightening member 1106 in the form of a bolt. The bolt is rotatably supported on the upper portion 1112 with its head 1104 and is threadedly engaged with an engagement section 1108 in the lower portion, more precisely in a bridging section 1134 coupling lower ends of the walls 1136, 1138. Thus, an operation of the bolt leads to a movement of the supporting portion 1130 towards and away from the receiving portion 1120. The bolt is arranged at a distance from the bridging portion 1114 and preferably adjacent to the receiving portion 1120 and the supporting portion 1130. An accommodating space 1111 for the frame member 1102 is defined by the lower surface 1115, the upper surfaces 1137, 1139, an inner surface of the bridging portion 1114 and the bolt 1106. According to a preferable configuration, the upper surfaces 1137, 1139 are in contact with a lower wall 1103 so that the frame member 1102 is clamped between the lower portion 1116 and the upper portion 1112 when the supporting portion 1130 is in the closed or clamping state.

The bracket 1110 can be integrally formed from a spring plate, more precisely from a metal plate.

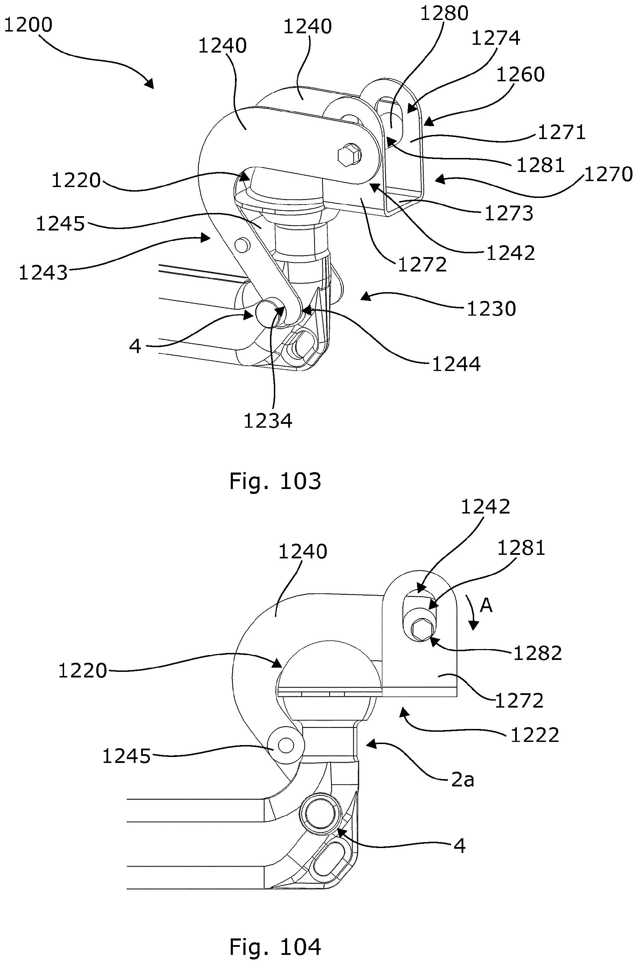

A load carrier coupling 1200 according to a eighth comparative example will be described with reference to Figures 103 and 104. The load carrier coupling 1200 comprises a receiving portion 1220 which is configured to contact an upper portion of a coupling body 3 of the trailer coupling 1. Preferably, as is shown in the configurations of Figures 103 and 104, the receiving portion 1220 is at least partially formed as a spherical half dome to cover substantially the top half of the coupling body 3 of the trailer coupling 1. In the receiving portion 1220, a contact surface (not shown) is provided for contacting the outer surface of the upper portion of the coupling body 3. Accordingly, the receiving portion 1220 is configured to rest on the coupling body 3.

In the present configuration, the receiving portion 1220 forms a part of a support member 1222. The support member 1222 further comprises a holder or bracket 1270. The receiving portion 1220 and the support member 1222 are integrally formed. The bracket 1270 is U-shaped and opened in the vertical upward direction. In other words, the bracket 1270 comprises a first wall 1271 and a second wall 1272 which in the present configuration are exemplary arranged so that they extend in substantially vertical direction and parallel to each other. The lower ends of the first wall 1271 and the second wall 1272 are coupled to each other by means of a bridging section 1273. The bracket 1270 can be formed from cutting and bending a sheet metal plate. In the described configuration, the half dome of the receiving portion 1220 and the first wall and the second wall of the bracket 1270 protrude from the support member 1222 on the same side. The first wall 1271 and the second wall 1272 are configured such that they protrude beyond an upper end of the receiving portion 1220. In an upper end portion of the first support wall 1271 and the second wall 1272, an elongate recess 1274 which extends in main extension direction of the first wall and the second wall are provided. In other words, each wall comprises an elongate recess 1274. The elongate recess 1274 may be arranged such that it is provided vertically above the receiving portion 1220 in the present configuration. The elongate recess 1274 may serve as a supporting portion for supporting a coupling member 1280. The coupling member may comprise a large diameter portion 1281 which substantially corresponds to the width of the elongate recess 1274. In this way, the coupling member 1280 may be slidably and pivotably received in the elongate recesses 1274. Accordingly, a translatory movement of the coupling member 1280 with respect to the support member 1222 can be provided. As is shown in Figure 104, smaller diameter portions 1282 may be provided on each longitudinal end of the large diameter portion 1281 of the coupling member 1280. Each smaller diameter portion 1282 can be configured to support a leg of the load carrier coupling 1200 as will be described later. As is shown in Figure 104, each smaller diameter portion may be eccentrically arranged and thus with an offset from a middle axis of the larger diameter portion 1281.

The load carrier coupling 1200 may further comprise two legs 1240. As is shown in the present configuration, the legs may be arranged at a distance from each other in an extension direction of the coupling member 1280 such that an upper portion of the receiving portion 1220 may be positioned between them. The legs 1240 are coupled to the coupling member 1280 at the smaller diameter portions 1282. Thus, a pivot 1260 is formed by the first end portion 1242 of each leg 1240 and the coupling member 1280 slidably movable received in the elongate recesses 1274.

At a second end portion 1244 of each leg 1240, a supporting portion 1230 is provided for contacting at least an upper portion of the support protrusions 4. As is further shown in the drawings, the legs 1240 can be at least partially arc-shaped for providing a middle section 1243 between the first end portion 1242 and the second end portion 1244. In the middle section 1243, a contact portion 1245 for contacting at least the neck of an inserted trailer coupling 1 on an opposite side to the side on which the first end portion 1242 of the legs 1240 is located. Accordingly, in a condition in which the load carrier coupling 1200 is mounted on the trailer coupling, the contact portion 1245 and the first end portion of each leg 1240 are located on opposite sides of a vertically extending portion of the trailer coupling 1. As already indicated and shown in Figure 104, the contact portion 1245 is configured to contact the neck of the trailer coupling and preferably a substantially cylindrical portion 2a of the neck 2. Accordingly, a configuration is provided in which the legs are configured such that the supporting portion 1230 is positioned horizontally between the first end portion 1242 and the contact portion 1245 and in which the contact portion 1245 is located vertically between the first end portion 1242 and the supporting portion 1230 when viewing the load carrier coupling in the mounted condition as shown in Figure 104. With such a configuration, the support member 1222 can be hooked on the trailer coupling 1 by establishing a contact between the receiving portion 1220 and the coupling body 3, a contact between the supporting portion 1230 and the support protrusions 4 and a contact between the contact portion 1245 and the cylindrical portion 2a of the neck 2.

In a mounting process, the supporting portion 1230 is first engaged with an upper portion of the support protrusions 4 and the receiving portion 1220 is brought into contact with the coupling body 3 with an inclined orientation of the support member 1222. After that, the receiving portion is pivoted in the direction of arrow A in Figure 104 leading to a pivoting movement of the legs about the support protrusion 4 until the contact portion 1245 abuts against the cylindrical portion 2a of the neck 2. In this state, a further rotation of the receiving member 1222 about the coupling body 3 is blocked and the load carrier coupling 1200 is securely hooked or hung on the trailer coupling 1.

Accordingly, according to the eighth comparative example, a load carrier coupling 1200 is provided which comprises a supporting portion 1230 pivotably movable with respect to the receiving portion 1220 and further comprising a contact portion 1245 for contacting at least a section of the neck 2 extending in vertical direction, preferably a cylindrical portion 2a of the neck 2, said contact portion 1245 being configured so as to be integrally movable with said supporting portion 1230, wherein preferably, the supporting portion 1230 and the contact portion 1245 are fixedly provided on a pivot arm 1240, preferably on the above described leg 1240, and wherein preferably the pivot arm 1240 is mounted on the receiving portion 1220 pivotably and translatory movable with respect to said receiving portion 1220.

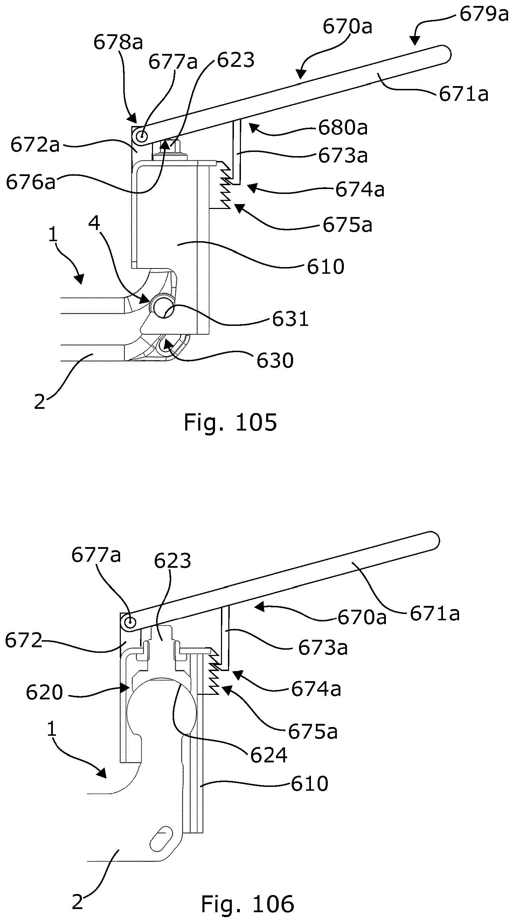

A modification of the fifth comparative example is shown in Figures 105 and 106. The load carrier coupling according to this configuration differs from the load carrier coupling 600 of Figure 61 in the mechanism used to move the receiving portion 620. In this modification, the receiving portion 620 again comprises a guided portion 623 which in the modification extends in a substantially vertical direction and extends through an upper portion of the housing 610. The free end of the guided portion 623 is coupled to and actuated by an operating mechanism which in the modification is provided as a lever mechanism 670a. The lever mechanism 670a comprises a lever 671a rotatably coupled to the housing 610 at a first end portion 678a such that the lever 671a is pivotable about a pivot 677a. In other words, the lever 671a is pivotably coupled to the housing 610 by means of a support 672a.

The lever 671a is operable by a user at a second end portion 679a of the lever 671a. A latching member 673a with an engagement section 674a is arranged on the lever 671a at a fixation portion 680a between the first end portion 678a and the second end portion 679a. A force transfer section 676a is coupled or in contact with the free end of the guided portion 623 so that a force may be applied on the free end by a rotation of the lever 671a. By applying a force on the free end, the receiving section 620 is urged in a downward direction applying a force on the upper portion of the coupling portion 3. Due to this, the housing 610 is pulled upwards until a contact between the support protrusion 4 and the supporting surface 631 is achieved thereby clamping the load carrier coupling on the trailer coupling 1.

Figures 105 and 106 show a state, in which the load carrier coupling is clamped on the trailer coupling 1. In order to maintain the clamping state, an engaging portion in the form of a toothed portion 675a is provided on the housing 610 such that an engagement with the engagement section 674a of the latching member 673a may be achieved with the same. Accordingly, the lever 671a comprises a latching mechanism for releasably arresting the lever 671a when the clamping state is reached. The latching mechanism can be configured in a different manner. In general, the latching mechanism is configured to allow a releasable positive locking for preventing a movement of the lever in an opening direction. The engaging portion can also be structured differently as long as it is possible to arrest the lever in the desired position.

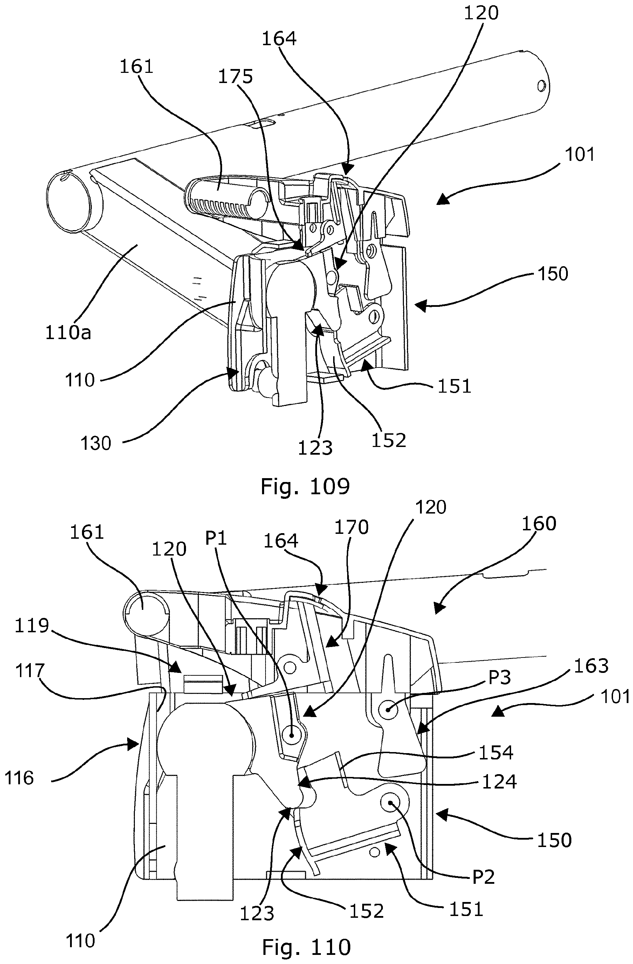

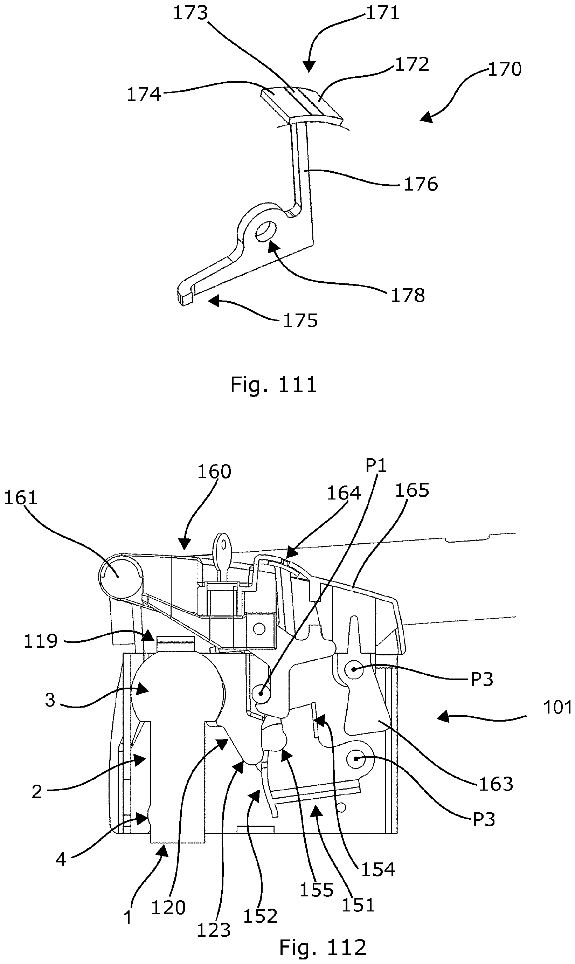

A modification of the load carrier coupling according to the first comparative example is shown in Figures 109 to 114. As in the overall application, similar and identical elements are designated with the same reference signs. The load carrier coupling 101 according to the modification comprises a housing 110 for defining an accommodating space for the coupling body 3 therein. Frame components 110a of a load carrier may be fixed to the housing 110. In particular, the modification as described in the following can be seen as a modification of the configuration as described with respect to Figure 11A. The housing 110 again comprises the curved inner surface 117 which is formed according to an outer contour of the ball head 3. The supporting portion 130 is also configured according to the configurations and modifications described in connection with the first comparative example of the present disclosure. The construction of the modified load carrier coupling according to this modification differs in the construction of the operating mechanism for operating the movement of the receiving portion 120. Instead of the lever 140 which is shown in Figure 11A, the construction according to this modification comprises a specific locking mechanism 150. The locking mechanism 150 comprises a pivot member 151 which is pivotable about a pivot axis P2 and comprises a contact surface 152 configured to get in contact with a first abutment portion 123 of the receiving portion 120. The pivot member 151 further comprises a receiving surface 154 for receiving an actuation force from a force application portion 163. As is the case in the configuration as described with respect to the first comparative example, the pivot member 151 is prebiased such that it tends to rotate about the pivot axis P2 in a clockwise direction in the figures. In this way, as soon as the first abutment portion 123 is disengaged from the pivot member 151, the pivot member 151 is rotated upwards such that the contact surface 152 gets in contact with the first abutment portion 123 thereby blocking a movement of the receiving portion 120 in an opening direction. A state in which the contact surface 152 is in contact with the first abutment portion 123 is shown in Figure 112. This state corresponds to a locked condition of the load carrier coupling on the trailer coupling. In order to release the locked state, the pivot member 151 has to be moved in counterclockwise direction so as to move the contact surface 152 downwards such that the first abutment portion 123 is able to pass the contact surface 152 and engage with an engagement recess 155 provided in the pivot member 151. For that, the pivot member 151 comprises the before mentioned receiving surface 154 on which a force may be applied to move the pivot member 151 in counterclockwise direction. For applying a force on the receiving surface 154, a lever 160 is provided which is arranged pivotably about a pivot P3. The lever comprises a lock 190 for blocking a movement of the lever 160. The lever 160 comprises the above-mentioned force application portion 163 which is arranged such that it may contact the receiving surface 154 upon rotating the lever 160. The lever 160 further comprises a handle 161 for operating the lever 160 and configured to be grasped by a user. As shown in the drawings, the lever has to be moved in the clockwise direction in order to bring the force application portion 163 into contact with the receiving surface 154 and thus has to be moved in this direction in order to unlock the locking mechanism 150.

The latter configuration according to the modification has the benefit that the lever and handle are disconnected from pivoting receiving portion so there is a play between the handle and the receiving portion to take up tolerances on tow ball and coupling avoiding the handle and lever stopping at different positions. Accordingly, in the locked position, the handle always has the same position, independent of the coupling body and and load carrier coupling tolerances.

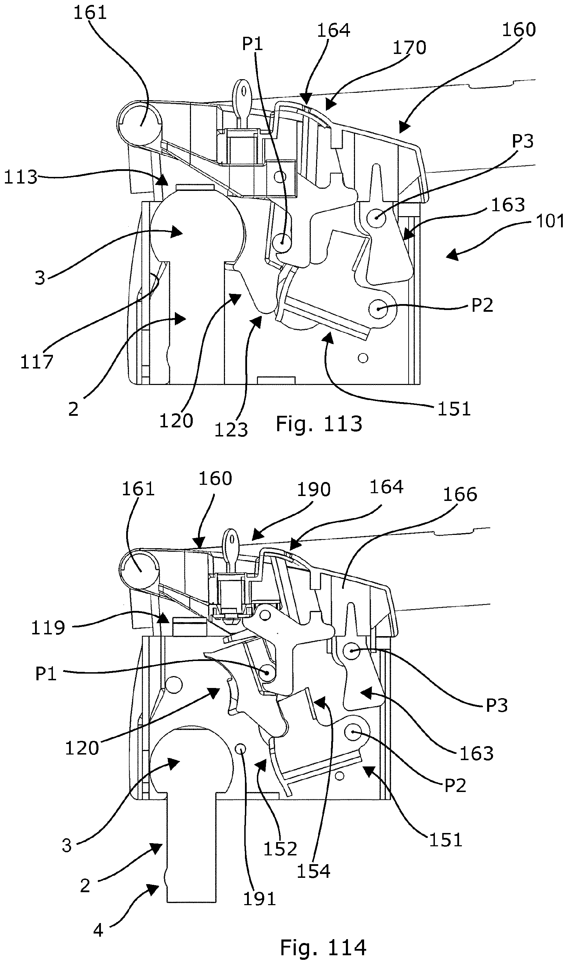

As is shown in the drawings, an optional abutment portion 119 is provided in the housing so as to limit an accommodating space for the coupling body in a vertical upper portion. The abutment portion 119 serves as a stop for the event that a user inserts the load carrier coupling on a conventional trailer coupling which does not comprise the support protrusions. In case no support protrusions are available for making contact with the supporting portion 130, the coupling body 3 is prevented from exiting an upper end of the housing and excessively rotating the receiving portion 120 in clockwise direction. In this way, a damage of the mechanism can be prevented. Figure 113 shows a state in which the load carrier coupling according to this modification was inserted on a trailer coupling without support protrusions. However, the abutment portion 119 provides a defined stop by contacting an upper end portion of the coupling body 3.

A further optional feature which may also be suitably applied to other load carrier couplings in general or to some of the above comparative examples, aspects, embodiments and modifications is shown in Figure 114. In general, a blocking member or guiding member is provided to prevent unintentional clamp closing when inserting the load carrier coupling on the trailer coupling. The blocking member can be a plate member, bolt or other means to prevent a coupling body, preferably a ball head, from interfering with wrong components of a clamping mechanism, for example the wrong end of a pivoting ball clamp member, to avoid an activation of the mechanism before the ball is in the correct position.

In this configuration, a guiding member 191 is provided in the housing 110 in order to secure the insertion in the accommodating space provided between the receiving portion 120 and the inner wall 117. In other words, the guiding portion 191 is provided to prevent a contact of the coupling body 3 with portions of the locking mechanism 150 that could erroneously trigger an actuation of the locking mechanism 150. In the configuration as shown in Figure 114, the guiding portion 191 is provided by a bolt extending between sidewalls of the housing 110 in a region between a lower end of the housing and a lower portion of the receiving portion 120. Furthermore, the bolt is positioned such that a movement of the load carrier coupling in a direction in which the contact surface 152 approaches the outer surface of the coupling body is prevented. Instead of the bolt as described here, the guiding portion 191 can be configured in different ways as long as it is able to guide the coupling body 3 in the region between the receiving portion 120 and the inner wall 117 and thereby secures a correct receipt of the coupling body 3 in the load carrier coupling.

A further optional feature resides in the provision of an indicator 170 for indicating whether the load carrier coupling is correctly inserted on the trailer coupling and securely locked thereon or not. The indicator 170 is shown in Figure 111. The indicator 170 comprises an indicator surface 171 which may comprise three coloured sections 172, 173 and 174. The middle section 173 can be coloured so as to indicate that the load carrier coupling is correctly inserted on the trailer coupling. Sections 172 and 174 can be coloured differently in order to indicate that there is no or a false insertion. The indicator surface 171 is arranged at an end portion of a lever 176 which comprises an opening 178 for pivotably mounting the indicator 170 in the lever 160 of the load carrier coupling. At an end portion of the lever 176 which is arranged opposite to the end portion where the indicator surface 171 is provided, an abutment portion 175 is provided and configured to get in contact with an upper surface of the receiving portion 120. As is shown in the drawings according to the present modification of the first comparative example, the indicator 170 may be provided in the lever 160 in a manner such that the lever 176 is pivotable about a pivot axis which is substantially parallel to the pivot axis about which the receiving portion 120 is able to pivot. An opening or window 164 is provided in an upper portion 165 of the lever 160 and the indicator 170 is arranged below the opening 164 such that the indicator surface 171 faces the opening and is movable relative along a wall in which the opening 164 is provided. Upon inserting the load carrier coupling on the trailer coupling, the receiving portion 120 is pivoted and an upper surface thereof gets in contact with the contact portion 175 thereby rotating the indicator 170 depending on a rotation of the receiving portion 120. Figure 114 shows a state in which the receiving portion 120 is in a fully opened condition and the upper surface of the receiving portion 120 is not in contact with the indicator 170. Figures 109 and 110 show a state in which the load carrier coupling is further inserted on the trailer coupling 1 such that the receiving portion 120 is already moved to a certain extent by the application of a force on the same by the coupling body. In this state, a contact between the contact portion 175 and the upper surface of the receiving portion 120 is already established but the lever 176 was not moved in this state. Therefore, section 172 of the indicator surface 171 is aligned with the opening 164 so that a user is able to recognize that a correct insertion is not achieved by colour visible through the opening 164. Figure 112 shows a state in which the load carrier coupling is correctly inserted on the trailer coupling. In this state, the receiving portion 120 is rotated to a correct position and due to this, the indicator surface 171 is moved relative to the opening 164 such that the section 173 indicating a correct insertion is visible through the opening 164. As already mentioned above, Figure 113 shows a state in which the load carrier coupling is inserted on a trailer coupling 1 without support protrusions 4. Due to that, the receiving portion 120 is excessively rotated and a correct clamping of the coupling body 3 cannot be achieved. Due to that, the indicator surface 171 is moved in a corresponding manner in order to bring section 174 in alignment with the opening 164 for indicating that the load carrier coupling is not correctly inserted.

A further modification according to the fifth comparative example is shown in Figure 116. The load carrier coupling 601 according to this configuration differs from the load carrier coupling 670 in that the receiving portion 620 is fixed and the supporting portion 630 is movable with respect to the receiving portion 620. Here, the receiving portion 620 is non-movably arranged in the housing 610 whereas the supporting portion 630 is translatory movable in the housing 610 towards and away from the receiving portion 620. For example, the supporting portion 630 may be movable in a substantially vertical direction. The supporting portion 630 can comprise a guided portion, more precisely a supporting member 630a, which may be slidably guided translatory towards and away from the receiving portion 620. In the present configuration, the support member 630a is slidably guided in a guiding recess 610a. The supporting member 630a comprises a supporting surface 631 which is oriented towards the receiving portion 620. Thus, the supporting surface 631 is provided facing an outer surface of a support protrusion 4 when the load carrier coupling is inserted on the trailer coupling 1 as is shown in Figure 116. Accordingly, by moving the supporting member 630a towards the receiving portion 620, the supporting member 630a is moved towards the support protrusion 4 and a clamping force can be applied on a lower portion of the support protrusion 4 by a surface contact of the supporting surface 631. In this way, the load carrier coupling is clamped on the trailer coupling.

In order to move the supporting member 630a towards and away from the receiving portion 620, a lever mechanism 690 is provided. The lever mechanism is configured as an over dead center mechanism having a self-locking capability. The lever mechanism 690 comprises an operating lever 691 which is pivotably mounted on the housing 610 by means of a suitable coupling member 693 which is a pivot pin in the present configuration. The lever 691 is coupled to the housing 610 at a first end portion thereof and is operable by a user at a second end portion thereof. Between the first end portion and the second end portion of the lever 691, a force transfer link 692 is pivotably coupled by means of a suitable coupling member 694 which in the present configuration is a pin. The force transfer link 692 is coupled to the lever 691 at a first end portion and is coupled to the supporting member 630a at a second end portion by means of a suitable coupling member 695 which in the present configuration is a pivot pin. In the present configuration, the lever 691 is pivotably mounted on the housing at a position which is located vertically above the coupling means 695 and thus above the supporting member 630a. However, different arrangements are possible as long as the supporting member 630a is movable in the above-described manner. Furthermore, as described above, the self-locking capability of the lever mechanism 690 can be achieved by means of an over dead center construction. This means that in a position, in which the supporting member 630a is in contact with the support protrusion 4 and applies a suitable clamping force thereon, the pivot 694 has passed a dead center position located on an imaginary line extending through the pivot pin 695 and the pivot pin 693 in Figure 116. Therefore, a movement of the lever 691 in an opposite direction is only possible against a self-locking force generated by means of the above-described over dead center configuration.

A further modification of the configurations and modifications according to the first comparative example can comprise a translatory movable receiving portion movable towards and away from the coupling body and/or cylindrical portion of the trailer coupling instead of a pivoting receiving portion. Such a translatory movable receiving portion may be configured to at least contact a lower portion of the coupling body and additionally or alternatively a portion of the neck. Alternatively to the configurations and modifications described in connection with the first comparative example, the supporting portion may comprise only one supporting wall arranged on one side of the support protrusion in a mounted condition instead of a recess receiving the support protrusion between two wall portions. Instead of the above configurations in which the receiving portion only contacts a lower portion of the coupling body, preferably of the ball head, the receiving portion may be configured to additionally contact a portion of the ball neck below the coupling member, preferably adjacent to the coupling member.

## Claims

1. Load carrier coupling (900) for mounting a load carrier on a trailer coupling (1) of a vehicle, said trailer coupling (1) comprising a neck (2), a coupling body (3) supported by said neck (2), and at least one support protrusion (4) provided on said neck (2), said load carrier coupling (900) comprising
a receiving portion (920) configured to at least partially receive said coupling body (3) upon inserting said load carrier coupling (900) on said trailer coupling (1) in an insertion direction (G1),
a supporting portion (930) configured to contact said at least one support protrusion (4) upon inserting said load carrier coupling (900) on said trailer coupling (1) in said insertion direction (G1), and
a fixation mechanism (942) for locking said load carrier coupling (900) on said trailer coupling (1) by preventing or limiting a movement of said load carrier coupling (900) in a detachment direction (G2) opposite to said insertion direction (G1),
**characterized in that**
said receiving portion (920) and said supporting portion (930) are integrally formed as a unitary hollow cylindrical housing (910),
wherein said fixation mechanism (942) is configured to engage behind said coupling body (3) when said load carrier coupling (900) is inserted on the said trailer coupling (1) and to clamp said neck (2), wherein said fixation mechanism (942) comprises an urging member (944) for applying a force on said neck (2) of said trailer coupling (1).

2. Load carrier coupling (900) according to claim 1, wherein said supporting portion (930) comprises a supporting wall (938) adapted to contact said support protrusion (4) when said load carrier coupling (900) is mounted on said trailer coupling (1), wherein said supporting wall (938) at least partially extends along said insertion direction (G1), preferably parallel to said insertion direction (G1).

3. Load carrier coupling (900) according to claim 2, wherein said supporting portion (930) further comprises a guiding wall (940), said supporting wall (938) and said guiding wall (940) defining an insertion section (934) for receiving said support protrusion (4) upon inserting said load carrier coupling (900) on said trailer coupling (1), in which said supporting wall (938) and said guiding wall (940) at least partially extend axis symmetrically with respect to a middle axis of said insertion section (934) and/or are arranged facing inwardly towards each other.

4. Load carrier coupling according to claim 3, wherein said supporting wall (938) comprises a recess (939) for accommodating said support protrusion (4) in a positive locking manner, said recess preferably defining a step surface (937) oriented towards said receiving portion (920).

5. Load carrier coupling (900) according to claim 4, wherein said insertion section (934) is configured for guiding said support protrusion (4) to a locking section (936), said locking section (936) comprising a width (W1) greater than the width (W2) of an adjacent portion of said insertion section (934) and allowing to accommodate said support protrusion (4) therein in an offset manner.

6. Load carrier coupling (900) according to claim 5, wherein said insertion section (934) extends from a lower end of said supporting portion (930) along an insertion path (G3) parallel to said middle axis (G2) and said locking section (936) continues from said insertion section (934) and extends along a locking path (G4) extending cross to said insertion path (G3).

7. Load carrier coupling (900) according to one of the preceding claims, wherein said fixation mechanism (942) is configured for maintaining and/or bringing said support protrusion (4) in a positive locking state and/or for clamping said load carrier coupling on said trailer coupling (1).

8. Load carrier coupling (900) according to one of the preceding claims, wherein said urging member is configured to apply a force on a vertically extending cylindrical portion of said neck and/or said urging member being preferably a pushing member for exerting a pushing force on said neck of said trailer coupling, preferably a threaded bolt or pin.

9. Load carrier coupling (900) according to one of the preceding claims, wherein said housing (910) is formed as a right circular hollow cylinder.

10. Load carrier coupling (900) according to one of the preceding claims, wherein said receiving portion (920) extends along a middle axis being parallel to the insertion direction (G1) and comprises a supporting surface (922) for contacting a side portion (34) of said coupling body (3), wherein said supporting surface (922) preferably partially extends about said middle axis, said receiving portion (920) being preferably formed such that said middle axis is coaxial with a middle axis of a vertical portion of said trailer coupling (1).

11. Load carrier, preferably bike carrier, comprising a load carrying platform coupled to a load carrier coupling according to one of the preceding claims.

## Patentansprüche

1. Lastenträgerkupplung (900) zum Anbringen eines Lastenträgers an einer Anhängerkupplung (1) eines Fahrzeugs, wobei die Anhängerkupplung (1) einen Hals (2), einen Kupplungskörper (3) gestützt von dem Hals (2), und mindestens einen Stützvorsprung (4), der auf dem Hals (2) bereitgestellt ist, umfasst, wobei die Lastenträgerkupplung (900)
einen Aufnahmeabschnitt (920) umfasst, der dafür konfiguriert ist, um den Kupplungskörper (3) beim Einsetzen der Lastenträgerkupplung (900) auf die Anhängerkupplung (1) in einer Einsetzrichtung (G1) zumindest teilweise aufzunehmen,
einen Stützabschnitt (930), der dafür konfiguriert ist, um den mindestens einen Stützvorsprung (4) beim Einsetzen der Lastenträgerkupplung (900) auf die Anhängerkupplung (1) in der Einsetzrichtung (G1) zu kontaktieren, und
einen Fixierungsmechanismus (942) zum Verriegeln der Lastenträgerkupplung (900) an der Anhängerkupplung (1) durch Verhindern oder Begrenzen einer Bewegung der Lastenträgerkupplung (900) in einer der Einsetzrichtung (G1) entgegengesetzten Ablöserichtung (G2), umfasst,
**dadurch gekennzeichnet, dass**
der Aufnahmeabschnitt (920) und der Stützabschnitt (930) einstückig als ein einheitliches hohlzylindrisches Gehäuse (910) ausgebildet sind,
wobei der Fixierungsmechanismus (942) dafür konfiguriert ist, um hinter dem Kupplungskörper (3) in Eingriff zu gelangen, wenn die Lastenträgerkupplung (900) auf die Anhängerkupplung (1) eingesetzt wird, und um den Hals (2) zu klemmen, wobei der Fixierungsmechanismus (942) ein Drängelement (944) zum Aufbringen einer Kraft auf den Hals (2) der Anhängerkupplung (1) umfasst.

2. Lastenträgerkupplung (900) nach Anspruch 1, wobei der Stützabschnitt (930) eine Stützwand (938) umfasst, die dafür angepasst ist, um den Stützvorsprung (4) zu kontaktieren, wenn die Lastenträgerkupplung (900) an der Anhängerkupplung (1) montiert wird, wobei sich die Stützwand (938) zumindest teilweise entlang der Einsetzrichtung (G1), vorzugsweise parallel zu der Einsetzrichtung (G1), erstreckt.

3. Lastenträgerkupplung (900) nach Anspruch 2, wobei der Stützabschnitt (930) ferner eine Führungswand (940) umfasst, wobei die Stützwand (938) und die Führungswand (940) einen Einsetzbereich (934) zum Aufnehmen des Stützvorsprungs (4) beim Einsetzen der Lastenträgerkupplung (900) auf der Anhängerkupplung (1) definieren, in welchem die Stützwand (938) und die Führungswand (940) sich zumindest teilweise achsensymmetrisch in Bezug auf eine Mittelachse des Einsetzbereichs (934) erstrecken und/oder einwärts einander zugewandt angeordnet sind.

4. Lastenträgerkupplung nach Anspruch 3, wobei die Stützwand (938) eine Aussparung (939) zum Aufnehmen des Stützvorsprungs (4) in einer formschlüssigen Art und Weise umfasst, wobei die Aussparung vorzugsweise eine Stufenoberfläche (937) definiert, die in Richtung des Aufnahmeabschnitts (920) ausgerichtet ist.

5. Lastenträgerkupplung (900) nach Anspruch 4, wobei der Einsetzbereich (934) dafür konfiguriert ist, um den Stützvorsprung (4) zu einem Verriegelungsbereich (936) zu führen, wobei der Verriegelungsbereich (936) eine Breite (W1) umfasst, die größer ist als eine Breite (W2) eines benachbarten Abschnitts des Einsetzbereichs (934) und es gestattet, den Stützvorsprung (4) in einer versetzten Art und Weise aufzunehmen.

6. Lastenträgerkupplung (900) nach Anspruch 5, wobei sich der Einsetzbereich (934) von einem unteren Ende des Stützabschnitts (930) entlang einer Einsetzbahn (G3) parallel zu der Mittelachse (G2) erstreckt und der Verriegelungsbereich (936) sich von dem Einsetzbereich (934) fortsetzt und sich entlang einer Verriegelungsbahn (G4) erstreckt, die sich quer zu der Einsetzbahn (G3) erstreckt.

7. Lastenträgerkupplung (900) nach einem der vorstehenden Ansprüche, wobei der Fixierungsmechanismus (942) dafür konfiguriert ist, um den Stützvorsprung (4) in einem Formschlusszustand zu halten und/oder in diesen zu bringen und/oder, um die Lastenträgerkupplung an die Anhängerkupplung (1) zu klemmen.

8. Lastenträgerkupplung (900) nach einem der vorstehenden Ansprüche, wobei das Drängelement dafür konfiguriert ist, um eine Kraft auf einen sich vertikal erstreckenden zylindrischen Abschnitt des Halses auszuüben, und/oder wobei das Drängelement vorzugsweise ein Drückelement zum Ausüben einer Drückkraft auf den Hals der Anhängerkupplung ist, vorzugsweise ein Gewindebolzen oder Zapfen.

9. Lastenträgerkupplung (900) nach einem der vorstehenden Ansprüche, wobei das Gehäuse (910) als ein gerader kreisförmiger Hohlzylinder ausgebildet ist.

10. Lastenträgerkupplung (900) nach einem der vorstehenden Ansprüche, wobei sich der Aufnahmeabschnitt (920) entlang einer Mittelachse erstreckt, die parallel zu der Einsetzrichtung (G1) ist und eine Stützoberfläche (922) umfasst, um einen Seitenabschnitt (34) des Kupplungskörpers (3) zu kontaktieren, wobei die Stützoberfläche (922) sich vorzugsweise teilweise um die Mittelachse herum erstreckt, wobei der Aufnahmeabschnitt (920) vorzugsweise derart ausgebildet ist, dass die Mittelachse koaxial zu einer Mittelachse eines vertikalen Abschnitts der Anhängerkupplung (1) ist.

11. Lastenträger, vorzugsweise Fahrradträger, umfassend eine Lastenträgerplattform, die an eine Lastenträgerkupplung nach einem der vorstehenden Ansprüche gekoppelt ist.

## Revendications

1. Couplage de porte-charge (900) pour monter un porte-charge sur un couplage de remorque (1) d'un véhicule, ledit couplage de remorque (1) comprenant un col (2), un corps de couplage (3) supporté par ledit col (2), et au moins une saillie de support (4) fournie sur ledit col (2), ledit couplage de porte-charge (900) comprenant
une partie de réception (920) configurée pour recevoir au moins partiellement ledit corps de couplage (3) lors de l'insertion dudit couplage de porte-charge (900) sur ledit couplage de remorque (1) dans une direction d'insertion (G1),
une partie de support (930) configurée pour venir en contact avec ladite au moins une saillie de support (4) lors de l'insertion dudit couplage de porte-charge (900) sur ledit couplage de remorque (1) dans ladite direction d'insertion (G1), et
un mécanisme de fixation (942) pour verrouiller ledit couplage de porte-charge (900) sur ledit couplage de remorque (1) en empêchant ou en limitant un mouvement dudit couplage de porte-charge (900) dans une direction de détachement (G2) à l'opposé de ladite direction d'insertion (G1),
**caractérisé en ce que**
ladite partie de réception (920) et ladite partie de support (930) sont formées d'un seul tenant en guise de boîtier cylindrique creux unitaire (910),
dans lequel ledit mécanisme de fixation (942) est configuré pour venir en prise derrière ledit corps de couplage (3) lorsque ledit couplage de porte-charge (900) est inséré sur ledit couplage de remorque (1) et pour serrer ledit col (2), dans lequel ledit mécanisme de fixation (942) comprend un élément de sollicitation (944) pour appliquer une force sur ledit col (2) dudit couplage de remorque (1).

2. Couplage de porte-charge (900) selon la revendication 1, dans lequel ladite partie de support (930) comprend une paroi de support (938) adaptée pour venir en contact avec ladite saillie de support (4) lorsque ledit couplage de porte-charge (900) est monté sur ledit couplage de remorque (1), dans lequel ladite paroi de support (938) s'étend au moins partiellement le long de ladite direction d'insertion (G1), de préférence parallèle à ladite direction d'insertion (G1).

3. Couplage de porte-charge (900) selon la revendication 2, dans lequel ladite partie de support (930) comprend en outre une paroi de guidage (940), ladite paroi de support (938) et ladite paroi de guidage (940) définissant une section d'insertion (934) pour recevoir ladite saillie de support (4) lors de l'insertion dudit couplage de porte-charge (900) sur ledit couplage de remorque (1), dans lequel ladite paroi de support (938) et ladite paroi de guidage (940) s'étendent au moins partiellement symétriquement à un axe par rapport à un axe médian de ladite section d'insertion (934) et/ou sont agencées faisant face vers l'intérieur en direction l'une de l'autre.

4. Couplage de porte-charge selon la revendication 3, dans lequel ladite paroi de support (938) comprend un évidement (939) pour loger ladite saillie de support (4) dans une manière de verrouillage positive, ledit évidement définissant de préférence une surface de marche (937) orientée vers ladite partie de réception (920).

5. Couplage de porte-charge (900) selon la revendication 4, dans lequel ladite section d'insertion (934) est configurée pour guider ladite saillie de support (4) vers une section de verrouillage (936), ladite section de verrouillage (936) comprenant une largeur (W1) supérieure à la largeur (W2) d'une partie adjacente de ladite section d'insertion (934) et permettant de loger ladite saillie de support (4) à l'intérieur de celle-ci de manière décalée.

6. Couplage de porte-charge (900) selon la revendication 5, dans lequel ladite section d'insertion (934) s'étend depuis une extrémité inférieure de ladite partie de support (930) le long d'un chemin d'insertion (G3) parallèle audit axe médian (G2) et ladite section de verrouillage (936) continue depuis ladite section d'insertion (934) et s'étend le long d'un chemin de verrouillage (G4) s'étendant en travers dudit chemin d'insertion (G3).

7. Couplage de porte-charge (900) selon l'une des revendications précédentes, dans lequel ledit mécanisme de fixation (942) est configuré pour maintenir et/ou amener ladite saillie de support (4) dans un état de verrouillage positif et/ou pour serrer ledit couplage de porte-charge sur ledit couplage de remorque (1).

8. Couplage de porte-charge (900) selon l'une des revendications précédentes, dans lequel ledit élément de sollicitation est configuré pour appliquer une force sur une partie cylindrique s'étendant verticalement dudit col et/ou ledit élément de sollicitation étant de préférence un élément de poussée pour exercer une force de poussée sur ledit col dudit couplage de remorque, de préférence un boulon ou une tige filetée.

9. Couplage de porte-charge (900) selon l'une des revendications précédentes, dans lequel ledit boîtier (910) est formé en guise de cylindre creux circulaire droit.

10. Couplage de porte-charge (900) selon l'une des revendications précédentes, dans lequel ladite partie de réception (920) s'étend le long d'un axe médian parallèle à la direction d'insertion (G1) et comprend une surface de support (922) pour venir en contact avec une partie latérale (34) dudit corps de couplage (3), dans lequel ladite surface de support (922) s'étend de préférence partiellement autour dudit axe médian, ladite partie de réception (920) étant de préférence formée de telle sorte que ledit axe médian est coaxial avec un axe médian d'une partie verticale dudit couplage de remorque (1).

11. Porte-charge, de préférence porte-vélo, comprenant une plate-forme de transport de charge couplée à un couplage de porte-charge selon l'une des revendications précédentes.
